# EUROPEAN PATENT SPECIFICATION

(11) **EP 3 870 671 B1**
(45) Date of publication and mention of the grant of the patent: **09.08.2023**
(21) Application number: 19790524.3
(22) Date of filing: 21.10.2019
(51) Int. Cl.: C09K 19/30, C09K 19/34, C09K 19/06, C09K 19/04, C09K 19/12, C09K 19/20

(54) **LIQUID-CRYSTALLINE MEDIUM**
FLÜSSIGKRISTALLINES MEDIUM
MILIEU LIQUIDE CRISTALLIN

(30) Priority: 25.10.2018 EP 18202533
(43) Date of publication of application: 01.09.2021
(73) Proprietor: Merck Patent GmbH, 64293 Darmstadt (DE)
(72) Inventor: LAUT, Sven, 64331 WEITERSTADT (DE); WINDHORST, Martina, 64839 MUENSTER (DE); MAAG, Sabrina, 64319 PFUNGSTADT (DE)
(86) International application number: PCT/EP2019/078490
(87) International publication number: WO 2020/083807

(56) References cited:
- WO-A1-2010/017868
- DE-A1- 4 428 766
- US-A- 5 403 512
- US-A1- 2013 256 596
- US-A1- 2014 034 876

## Description

The present invention relates to liquid-crystalline (LC) media having positive dielectric anisotropy and to liquid-crystal displays (LCDs) containing these media, especially to displays addressed by an active matrix and in particular to LC displays of the TN, PS-TN, STN, TN-TFT, OCB, IPS, PS-IPS, FFS, HB-FFS PS-HB-FFS, SA-HB-FFS, polymer stabilised SA-HB-FFS, positive VA or positive PS-VA type.

Liquid-crystal displays (LCDs) are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which generated substantially perpendicular to the substrates and the liquid-crystal layer.

Liquid-crystalline media for TN- and STN displays are described, for example, in DE 44 28 766.

Besides these modes, there are also electro-optical modes that utilise an electric field which is substantially parallel to the substrates or the liquid-crystal layer. For example, WO 91/10936 discloses a liquid-crystal display in which the electric signals are generated in such a way that the electric fields have a significant component parallel to the liquid-crystal layer, and which has since then become known as in-plane switching IPS) display. The principles of operating such a display are described, for example, by R.A. Soref in Journal of Applied Physics, Vol. 45, No. 12, pp. 5466-5468 (1974). IPS displays contain an LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane.

EP 0 588 568, for example, discloses various possibilities for the design of the electrodes and for addressing an IPS display. DE 198 24 137 likewise describes various embodiments of such IPS displays.

Liquid-crystalline materials for IPS displays of this type are described, for example, in DE 195 28 104.

Furthermore, so-called "fringe-field switching" (FFS) displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, *i.e.* a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

Liquid-crystal displays of the IPS and FFS electro-optical mode are in particular suitable for use in modern desktop monitors, TV sets and multimedia applications. The liquid-crystalline media according to the present invention are preferably used in displays of this type. In general, dielectrically positive liquid-crystalline media having rather lower values of the dielectric anisotropy are used in FFS displays, but in some cases liquid-crystalline media having a dielectric anisotropy of only about 3 or even less are also used in IPS displays.

A further improvement has been achieved by the so-called HB-FFS mode. One of the unique features of the HB-FFS mode in contrast to the traditional FFS technology is that it enables higher transmittance which allows operation of the panel with less energy consumption.

Liquid-crystal compositions which are suitable for LCDs and especially for FFS and IPS displays are known in prior art, for example, from JP 07-181 439 (A), EP 0 667 555, EP 0 673 986, DE 195 09 410, DE 195 28 106, DE 195 28 107, WO 96/23 851 and WO 96/28 521. However, these compositions have certain disadvantages. Amongst other deficiencies, most of them result in disadvantageously long addressing times, have inadequate values of the resistivity and/or require excessively high operating voltages. Both an improvement in the operating properties and also in the shelf life are necessary here.

FFS and IPS displays can be operated as active-matrix displays (AMD) or passive-matrix displays (PMD). In the case of active-matrix displays individual pixels are usually addressed by integrated, non-linear active elements such as, for example, thin-film transistors (TFTs), while in the case of passive-matrix displays individual pixels are usually addressed by the multiplex method as known from the prior art.

The displays according to the present invention are preferably by an active matrix, preferably by a matrix of TFT. However, the liquid crystals according to the invention can also advantageously be used in displays having other known addressing means.

Typical applications of in-plane switching (IPS) and fringe field switching (FFS) technologies are monitors, notebooks, televisions, mobile telephones, tablet PCs, etc.

Both the IPS and the FFS technology have certain advantages over other LCD technologies, such as, for example, the vertical alignment (VA) technology, e.g. a broad viewing angle dependency of the contrast.

The provision of further liquid-crystalline media and the use thereof in a display having high transmission, a good black state and a high contrast ratio is a central challenge for modern FFS and IPS applications. In addition, modern applications also require good low-temperature stability and fast addressing times.

The invention has the object of providing liquid-crystalline media, in particular for FFS and IPS displays, but also for TN, positive VA or STN displays, and in particular for active-matrix displays like those addressed by TFTs, which do not exhibit the disadvantages indicated above or only do so to a lesser extent and preferably have high specific resistance, low threshold voltage, high dielectric anisotropy, a good low temperature stability (LTS), fast response times and low rotational viscosities, and enable high brightness.

This was achieved by providing liquid-crystalline media as described and claimed hereinafter.

It was observed that a high brightness in displays like those of the HB-FFS mode can be achieved by using liquid-crystalline media having positive dielectric anisotropy and also having an increased dielectric constant ε⊥ perpendicular to the longitudinal axes of the liquid-crystalline molecules. This can be achieved by adding a limited amount of liquid-crystalline compounds with negative dielectric anisotropy, which have high ε⊥ properties, to the liquid-crystalline medium whilst maintaining a positive dielectric anisotropy of the entire medium. However, the addition of compounds with high ε⊥ have some drawbacks. For example this can lead to higher values of the rotational viscosity γ₁, and consequently to higher values of the ratio γ₁ /K₂₂ of the rotational viscosity γ₁ and the elastic constant K₂₂ for twist deformation, which leads to higher response times. Since K₂₂ is approximately proportional to the elastic constant K₁₁ for splay deformation (the value of K₂₂ is typically about half the value of K₁₁), this can easily be determined by measuring γ₁ and K₁₁.

It has now been surprisingly found that it is possible to achieve liquid-crystalline media which show an increased value of ε⊥ and at the same time enable a decrease of the rotational viscosity and the ratios of γ₁ /K₂₂ and γ₁ /K₁₁, and thus enable fast response times, by using liquid-crystalline media as described and claimed hereinafter.

The liquid-crystal media according to the present invention are especially suitable for use in liquid-crystal displays of the FFS, HB-FFS and IPS mode based on dielectrically positive liquid crystals, and polymer stabilised variants thereof.

The invention relates to a liquid-crystalline medium, characterised in that it has positive dielectric anisotropy and comprises one or more compounds of formula I, and one or more compounds selected from formulae Y and B 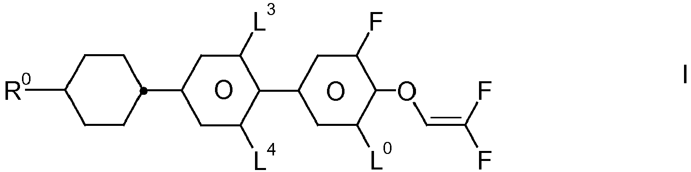 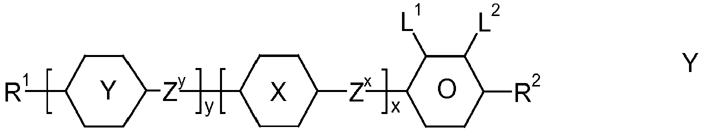 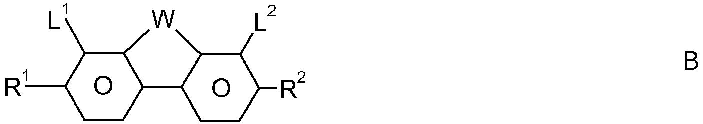 in which the individual radicals, on each occurrence identically or differently, and each, independently of one another, have the following meaning: 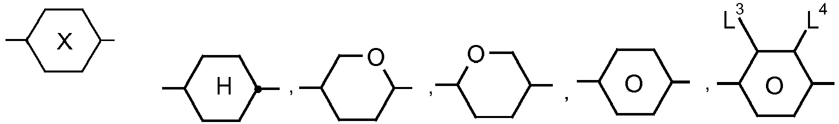 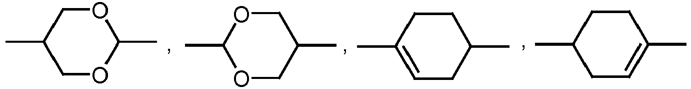 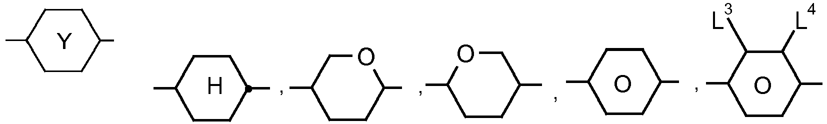 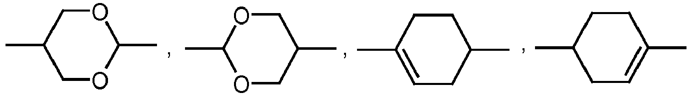
- R°, R¹, R²: a straight-chain, branched or cyclic alkyl or alkoxy radical that is unsubstituted or halogenated and has 1 to 15 C atoms, where, in addition, one or more CH₂ groups in these radicals may each be replaced, independently of one another, by -C≡C-, -CF₂O-, -CH=CH-, 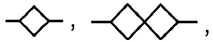 -O-, -CO-O- or -O-CO- in such a way that O atoms are not linked directly to one another,
- Z^{x}, Z^{y}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond, preferably a single bond,
- W: OorS,
- L⁰: H or F,
- L¹, L²: H, For Cl, preferably H or F, very preferably F,
- L³, L⁴: H, For Cl, preferably H or F,
- x, y: 0, 1 or 2, with x+y ≤3,

wherein the compounds of formula Y contain at least one substituent L¹⁻⁴ that is F or Cl, preferably F,
wherein the liquid-crystalline medium comprises one or more compounds of formula B selected from the subformulae B1 and B2, as defined in claim 1 and below.

The invention further relates to the use of a liquid-crystalline medium as described above and below for electro-optical purposes, in particular for the use in liquid-crystal displays, shutter glasses, LC windows, 3D applications, preferably in TN, PS-TN, STN, TN-TFT, OCB, IPS, PS-IPS, FFS, HB-FFS, PS-HB-FFS, SA-HB-FFS, polymer stabilised SA-HB-FFS, positive VA and positive PS-VA displays, very preferably in FFS, HB-FFS, IPS, PS-HB-FFS and PS-IPS displays.

The invention further relates to an electro-optical liquid-crystal display containing a liquid-crystalline medium as described above and below, in particular a TN, PS-TN, STN, TN-TFT, OCB, IPS, PS-IPS, FFS, HB-FFS, PS-HB-FFS, SA-HB-FFS, polymer stabilised SA-HB-FFS, positive VA or positive PS-VA display, preferably a FFS, HB-FFS, IPS, PS-HB-FFS or PS-IPS display.

In the present application, all atoms also include their isotopes. In particular, one or more hydrogen atoms (H) may be replaced by deuterium (D), which is particularly preferred in some embodiments; a high degree of deuteration enables or simplifies analytical determination of compounds, in particular in the case of low concentrations.

If R°, R' or R² denotes an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy. R° preferably denotes straight-chain alkyl having 2-6 C atoms.

Oxaalkyl preferably denotes straight-chain 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxa-decyl.

If R°, R¹ or R² denotes an alkyl radical in which one CH₂ group has been replaced by -CH=CH-, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

If R°, R¹ or R² denotes an alkyl or alkenyl radical which is at least monosubstituted by halogen, this radical is preferably straight-chain, and halogen is preferably F or Cl. In the case of polysubstitution, halogen is preferably F.

The resultant radicals also include perfluorinated radicals. In the case of monosubstitution, the fluorine or chlorine substituent may be in any desired position, but is preferably in the ω-position.

In the formulae above and below, X° is preferably F, Cl or a mono- or polyfluorinated alkyl or alkoxy radical having 1, 2 or 3 C atoms or a mono- or polyfluorinated alkenyl radical having 2 or 3 C atoms. X° is particularly preferably F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃, OCH=CF₂ or CH=CF₂, very particularly preferably For OCF₃, furthermore CF₃, OCF=CF₂, OCHF₂ or OCH=CF₂.

Preferred compounds of the formula I are those wherein L° is F. Further preferred compounds of the formula I are those wherein R° denotes straight-chain alkyl having 1 to 6 C atoms, very preferably methyl, ethyl or propyl, most preferably propyl.

In the compounds of formula I and its subformulae R° preferably denotes straight-chain alkyl or alkoxy having 1 to 6 C atoms, very preferably methyl, ethyl or propyl.

Preferred compounds of formula I are those wherein L° denotes F, furthermore those wherein L³ and L⁴ denote H.

Further preferred compounds of formula I are those wherein one or L³ and L⁴ denotes H and the other denotes F, furthermore those wherein L³ and L⁴ denote F.

Preferred compounds of the formula I are those of formula I1

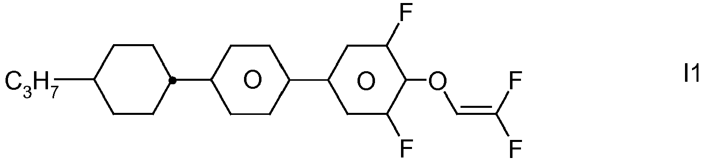

Preferably the proportion of compounds of formula I or its subformulae in the medium is from 1 to 30%, very preferably from 2 to 25%, most preferably from 2 to 15% by weight.

Preferably the medium contains 1, 2 or 3, very preferably 1 or 2, most preferably 1, compounds of formula I or its subformulae.

In the compounds of formula Y and its subformulae, R¹ and R² preferably denote straight-chain alkyl or alkoxy having 1 to 6 C atoms, furthermore alkenyl having 2 to 6 C atoms, in particular vinyl, 1E-propenyl, 1E-butenyl, 3-butenyl, 1E-pentenyl, 3E-pentenyl or 4-pentenyl.

In the compounds of formula Y and its subformulae, preferably both radicals L¹ and L² denote F. In another preferred embodiment of the present invention, in the compounds of formula Y and its subformulae one of the radicals L¹ and L² denotes F and the other denotes Cl.

In a preferred embodiment of the present invention the medium contains one or more compounds of formula Y that are selected from the following subformulae 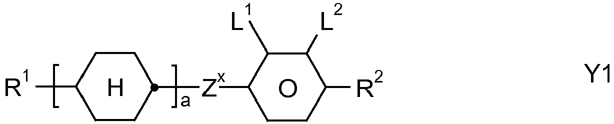 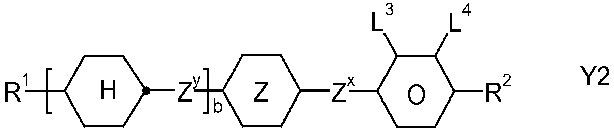 wherein R¹, R², Z^{x}, Z^{y}, L¹ and L² have one of the meanings given in formula Y or one of the preferred meanings as given above and below,
- a: denotes 1 or 2,
- b: denotes 0 or 1, 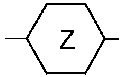 denotes 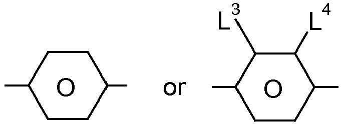
- L³, L⁴: denote F or Cl, preferably F.

Preferably, in the compounds of formula Y1 and Y2 both L¹ and L² denote F or one of L¹ and L² denotes F and the other denotes Cl, or both L³ and L⁴ denote F or one of L³ and L⁴ denotes F and the other denotes Cl.

Preferably the medium comprises one or more compounds of the formula Y1 selected from the group consisting of the following subformulae 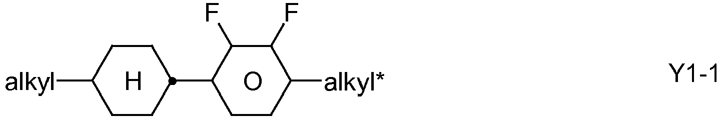 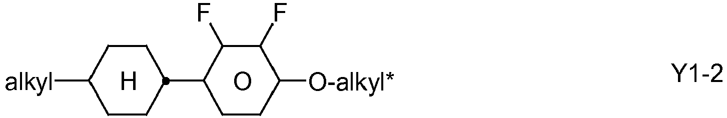 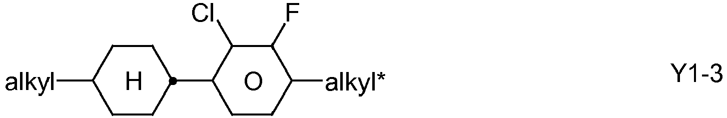 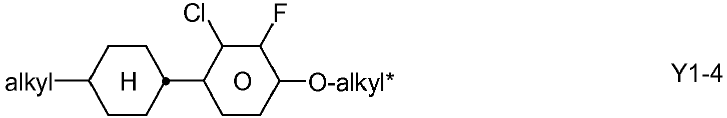 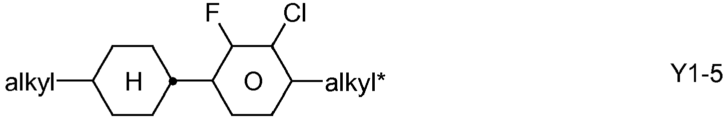 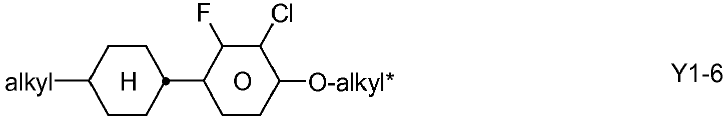 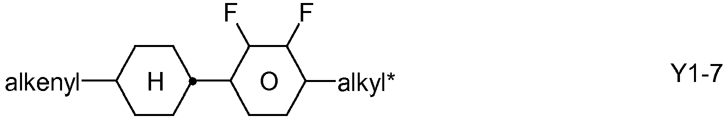 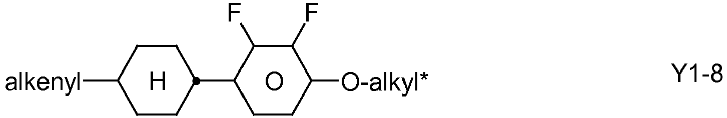 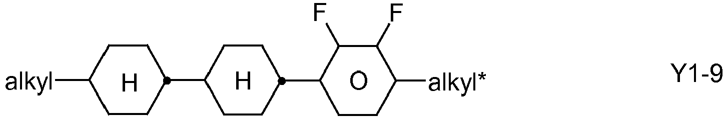 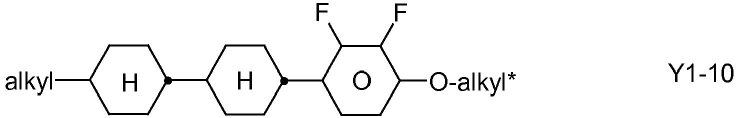 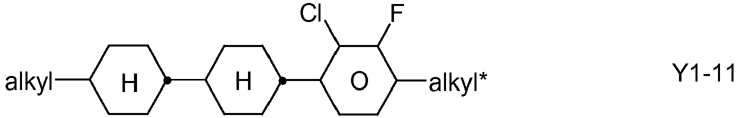 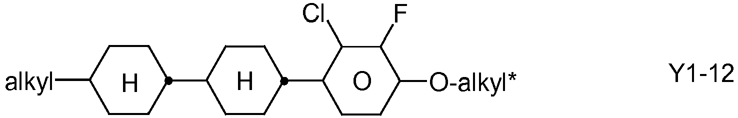 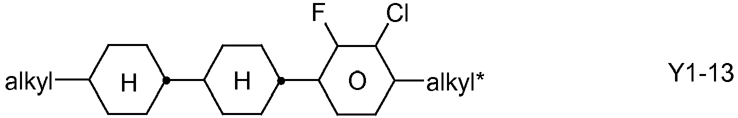 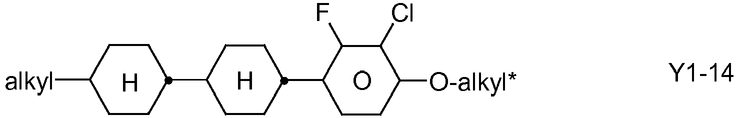 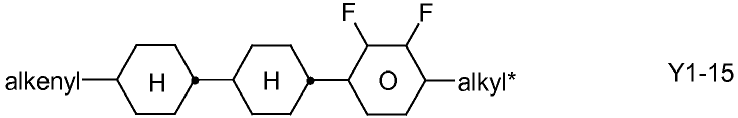 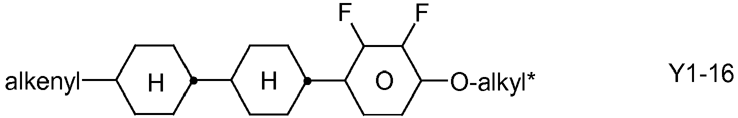 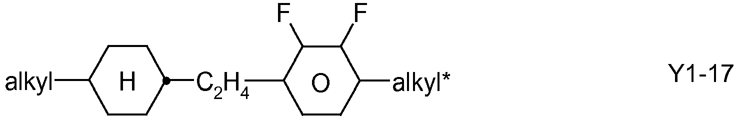 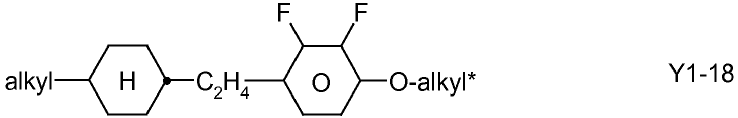 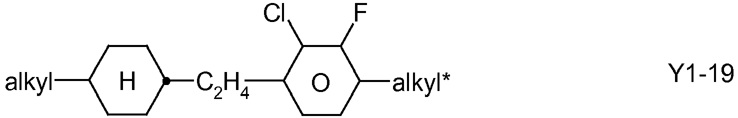 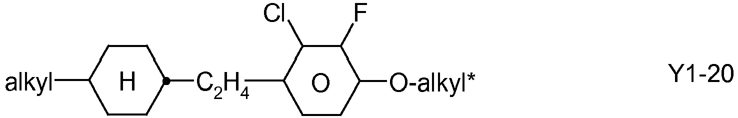 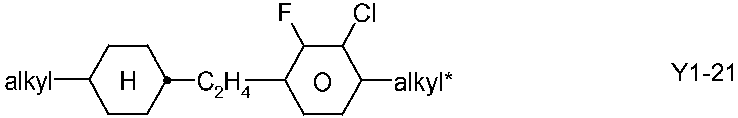 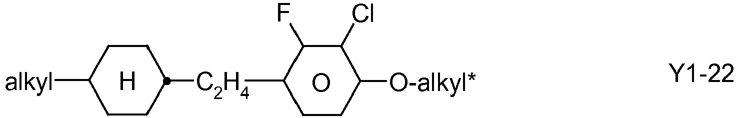 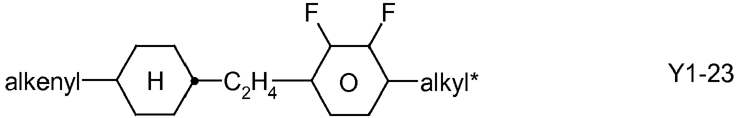 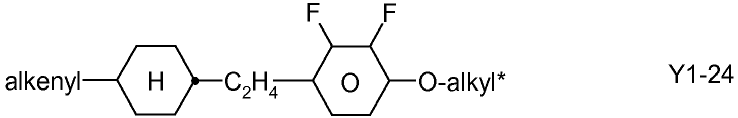 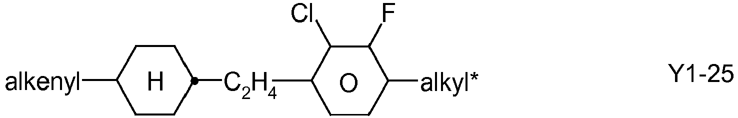 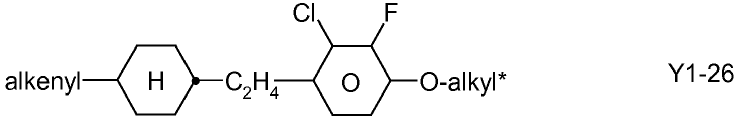 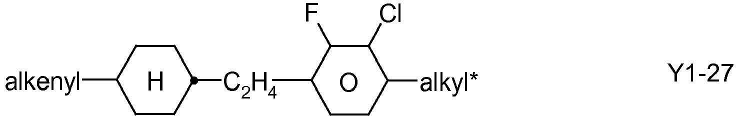 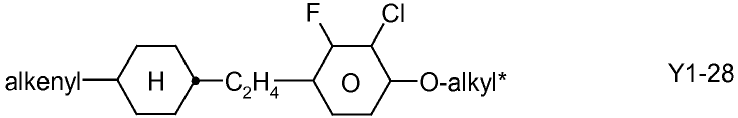 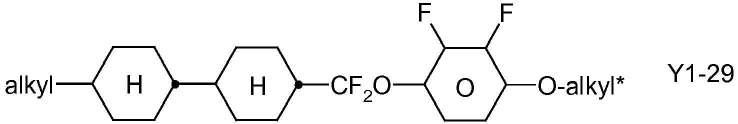 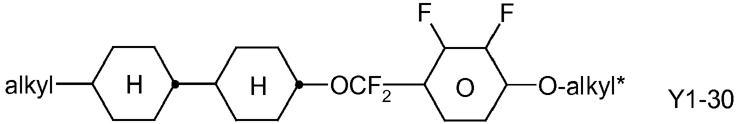 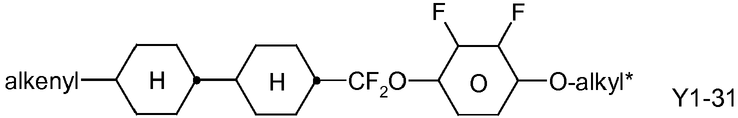 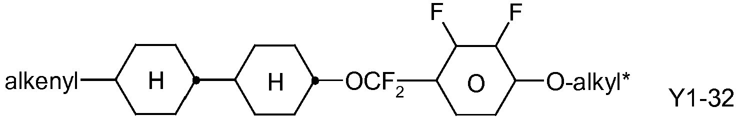 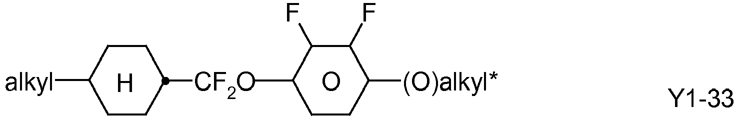 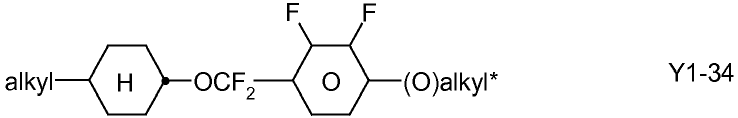 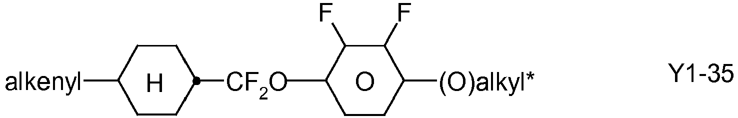 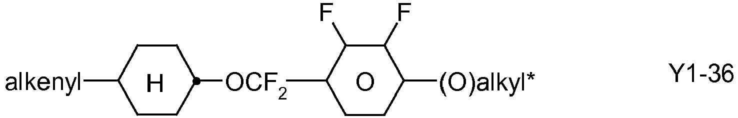 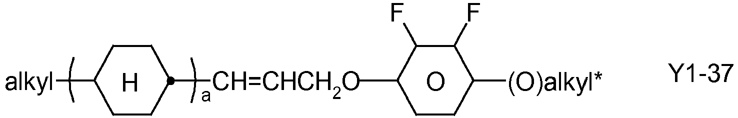 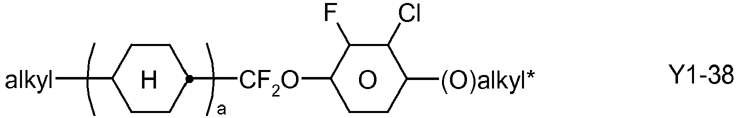 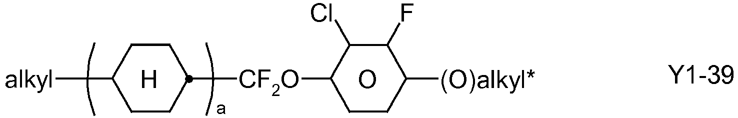 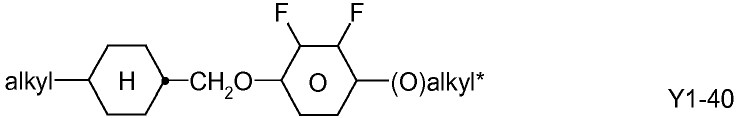 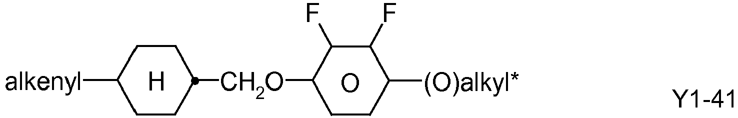 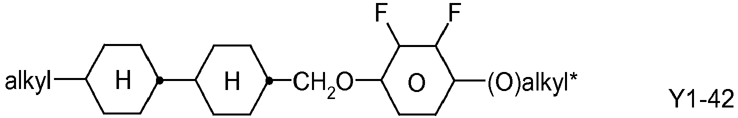 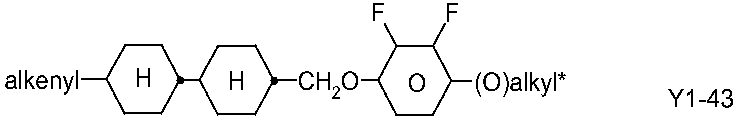 in which a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferably the medium contains one or more compounds of formula Y1 selected from formulae Y1-2 and Y1-10.

Further preferably the medium comprises one or more compounds of the formula Y2 selected from the group consisting of the following subformulae: 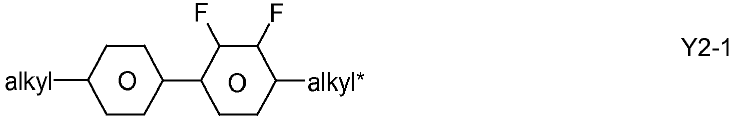 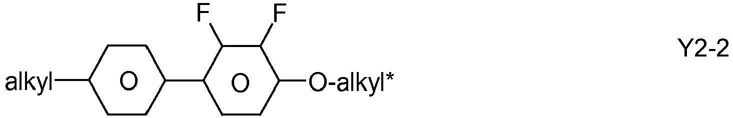 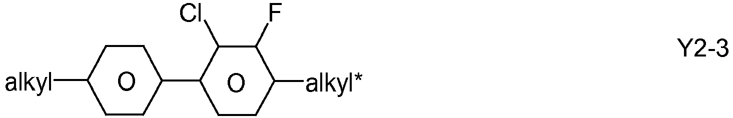 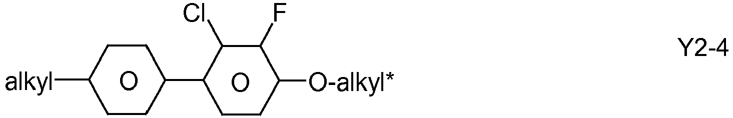 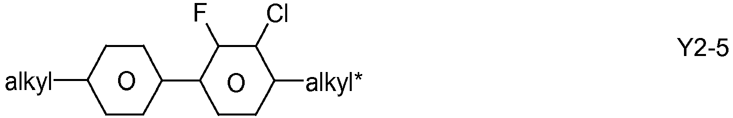 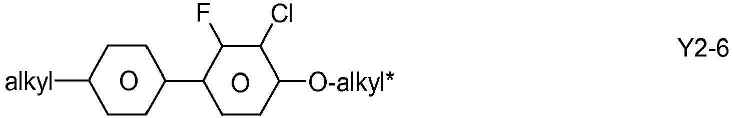 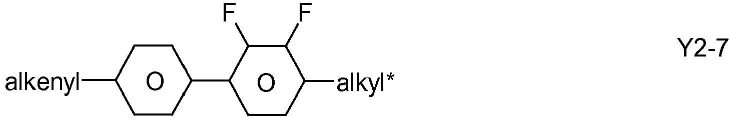 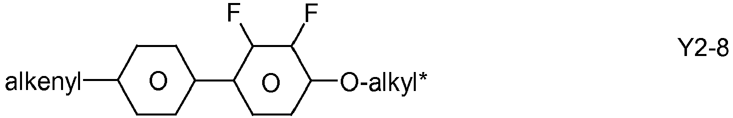 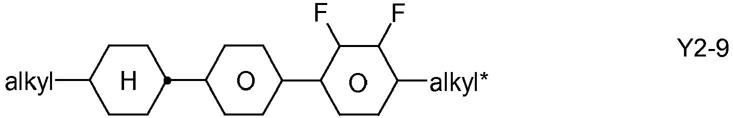 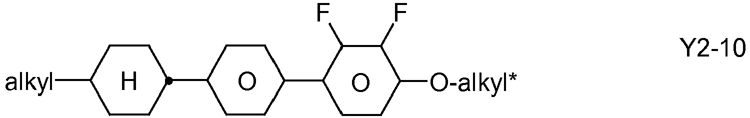 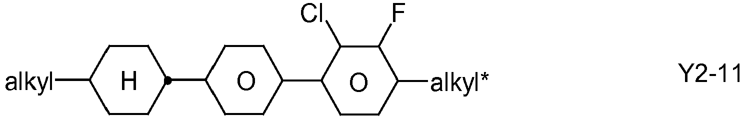 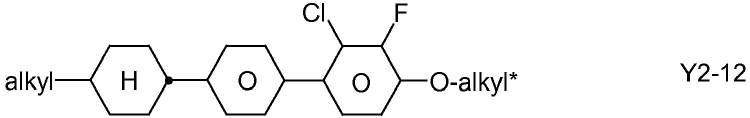 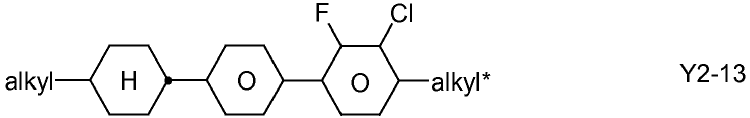 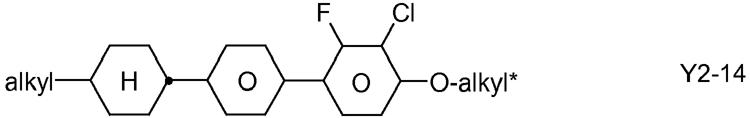 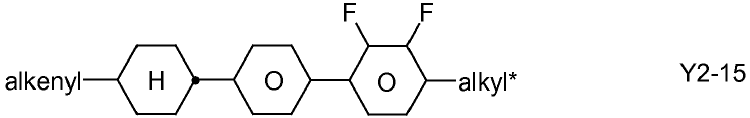 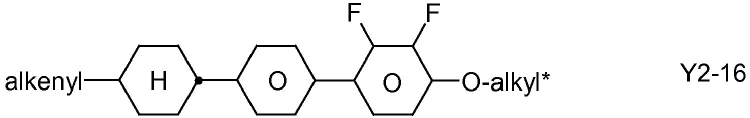 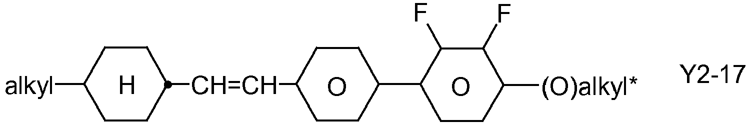 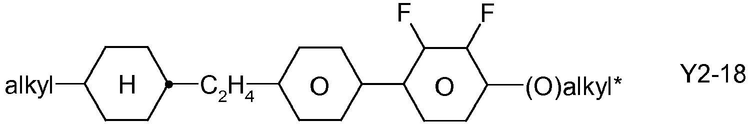 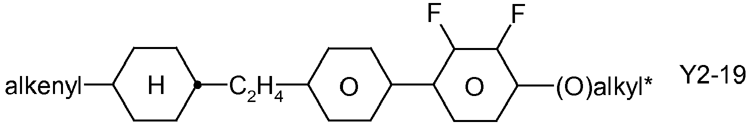 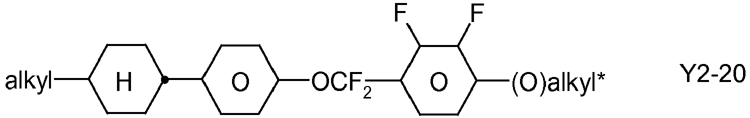 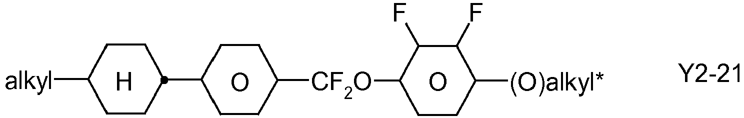 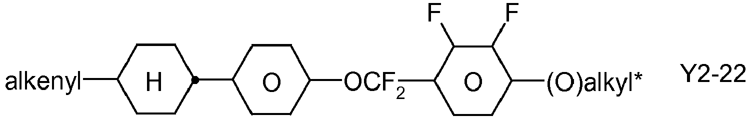 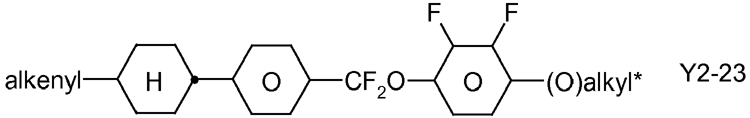 in which alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferably the medium contains one or more compounds of formula Y2 selected from formulae Y2-2 and Y2-10.

The proportion of the compounds of formula Y1 or its subformulae in the medium is preferably from 1 to 10% by weight.

The proportion of the compounds of formula Y2 or its subformulae in the medium is preferably from 1 to 10% by weight.

The total proportion of the compounds of formula Y1 and Y2 or their subformulae in the medium is preferably from 1 to 20%, very preferably from 1 to 15%, most preferably from 1 to 10% by weight.

Preferably the medium contains 1, 2 or 3 compounds of formula Y1 and Y2 or their subformulae, very preferably selected from formulae Y1-2, Y1-10, Y2-2 and Y2-10.

In another preferred embodiment of the present invention the medium contains one or more compounds of formula Y selected from the following subformula 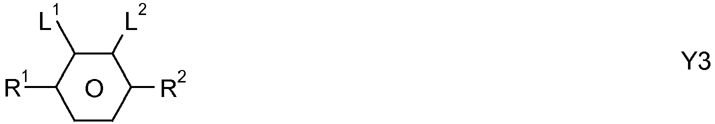 wherein L¹, L², R¹ and R² have one of the meanings given in formula Y or one of the preferred meanings as given above and below.

Preferred compounds of the formula Y3 are selected from the group consisting of the following subformulae 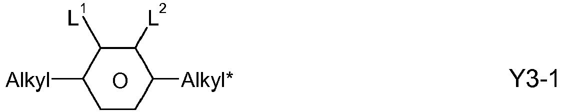 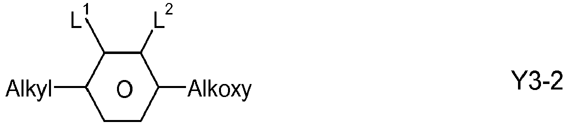 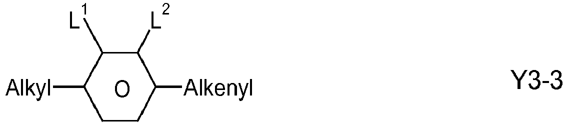 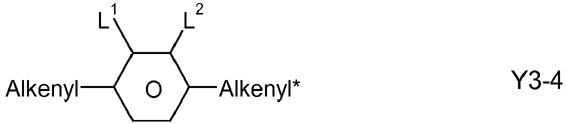 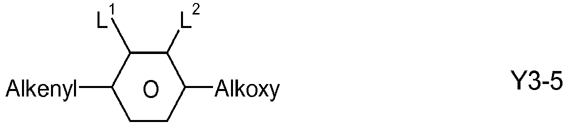 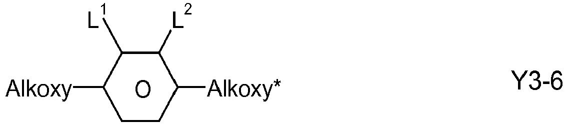 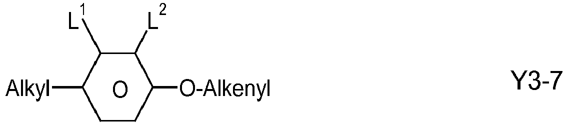 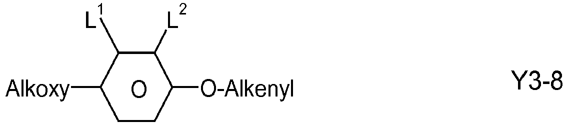 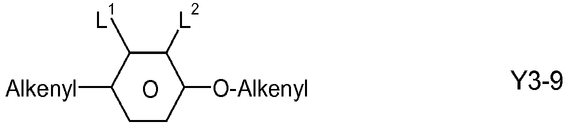 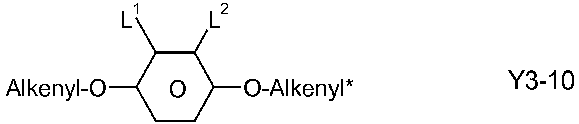 in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred compounds of the formula Y3 are selected from the group consisting of following subformulae: 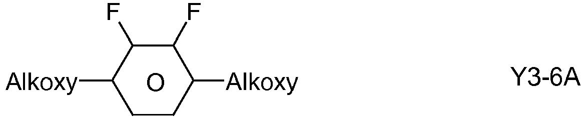 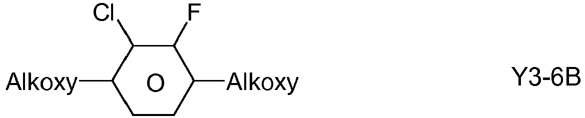 wherein Alkoxy preferably denotes straight-chain alkoxy with 3, 4, or 5 C atoms.

Preferably in the compounds of formula Y3 and its subformulae both L¹ and L² denote F. Further preferably in the compounds of formula Y3 one of the radicals L¹ and L² denotes F and the other denotes Cl.

The proportion of the compounds of formula Y3 or its subformulae in the medium is preferably from 1 to 10%, very preferably from 1 to 6% by weight.

Preferably the medium contains 1, 2 or 3 compounds of formula Y3 or its subformulae, preferably of formula Y3-6, very preferably of formula Y3-6A.

In another preferred embodiment the present invention the medium contains one or more compounds of formula Y selected from the subformula Y4 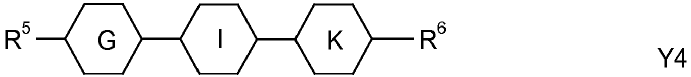 in which R¹ and R² each, independently of one another, have one of the meanings indicated above, and 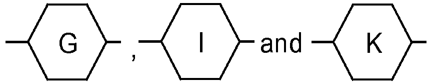 each, independently of one another, denote 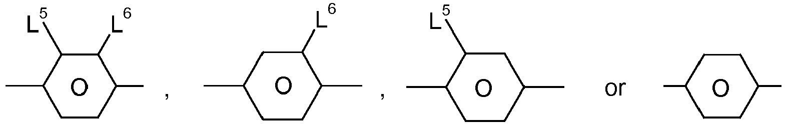 in which L⁵ denotes F or Cl, preferably F, and L⁶ denotes F, Cl, OCF₃, CF₃, CH₃, CH₂F or CHF₂, preferably F, and preferably at least one of the rings G, I and K is different from unsubstituted benzene.

Preferred compounds of the formula Y4 are selected from the group consisting of the following sub-formulae: 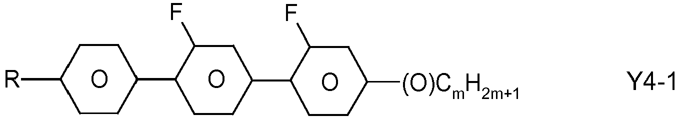 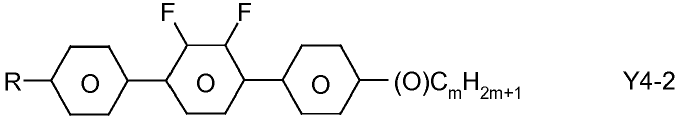 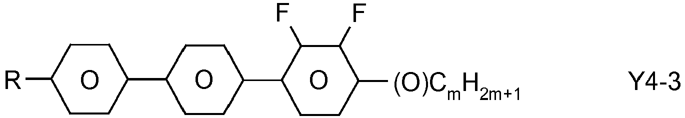 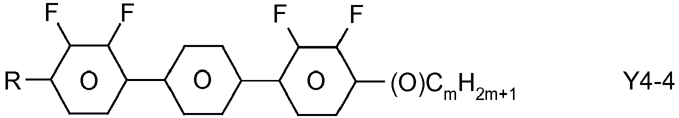 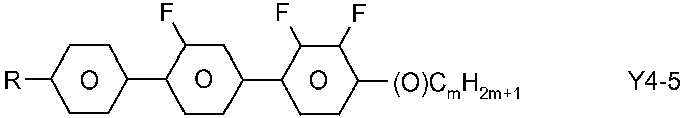 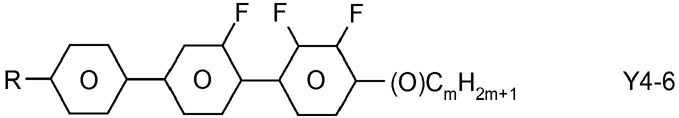 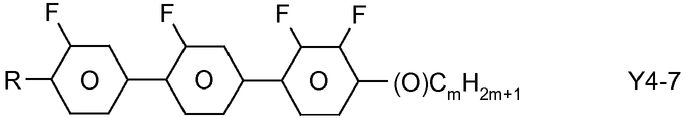 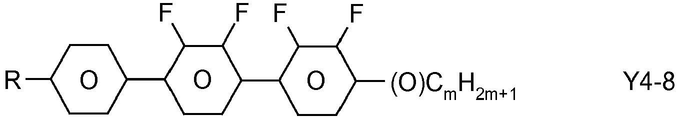 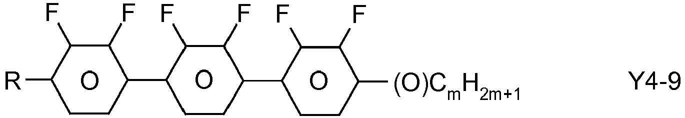 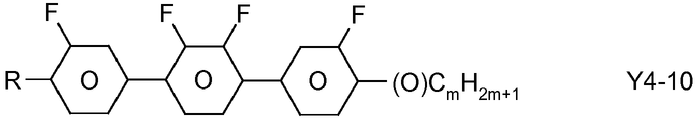 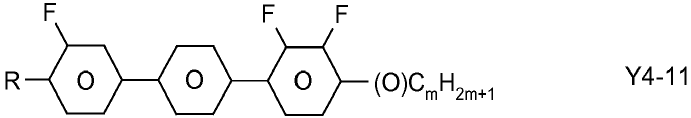 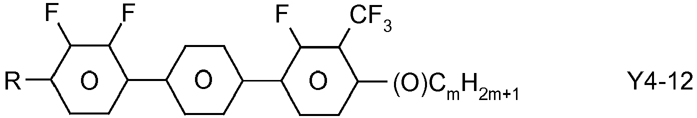 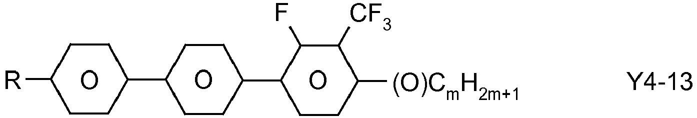 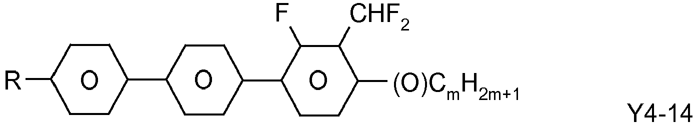 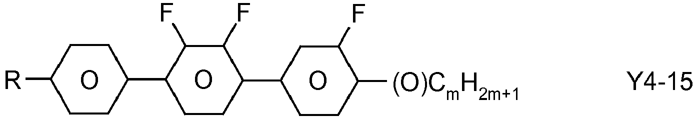 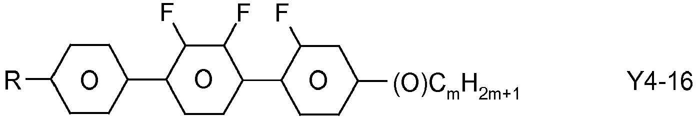 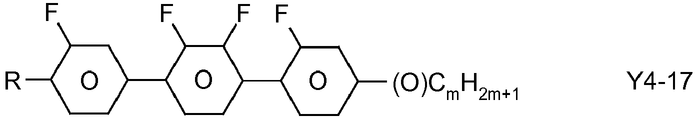 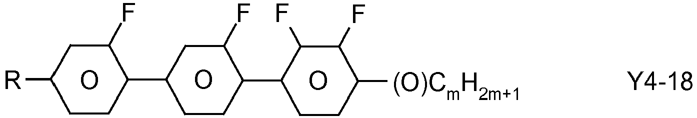 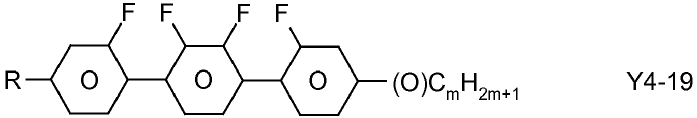 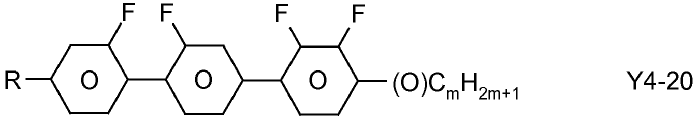 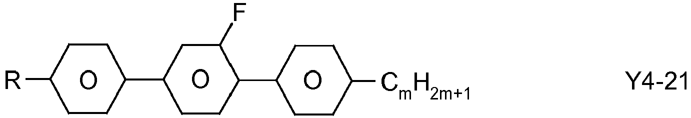 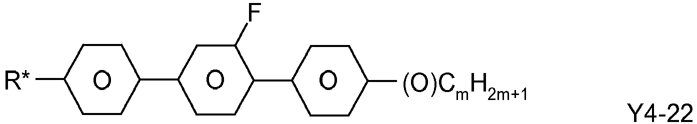 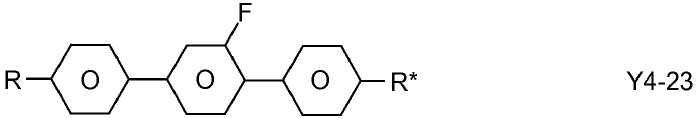 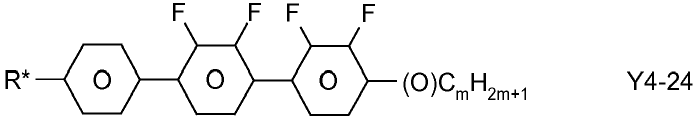 in which R denotes a straight-chain alkyl or alkoxy radical having 1-7 C atoms, R* denotes a straight-chain alkenyl radical having 2-7 C atoms, (O) denotes an oxygen atom or a single bond, and m denotes an integer from 1 to 6. R* preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

R preferably denotes methyl, ethyl, propyl, butyl, pentyl, hexyl, methoxy, ethoxy, propoxy, butoxy or pentoxy.

The proportion of the compounds of formula Y4 or its subformulae in the medium is preferably from 1 to 10%, very preferably from 1 to 6% by weight.

Preferably the medium contains 1, 2 or 3 compounds of formula Y4 or its subformulae, preferably of formula Y4-1, Y4-2, Y4-3 or Y4-21, wherein R preferably denotes alkyl, furthermore alkoxy, each having 1-5 C atoms.

In another preferred embodiment the present invention the medium contains one or more compounds of formula Y selected from the the group consisting of the following subformulae 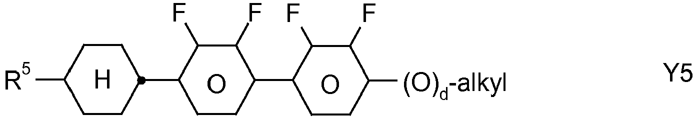 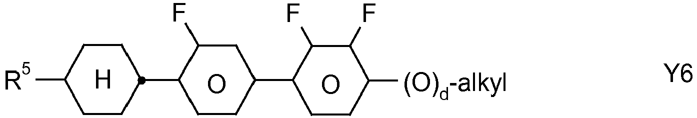 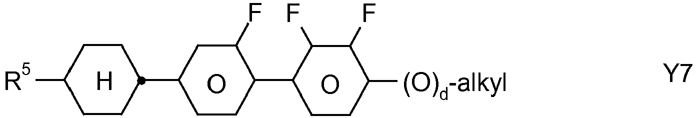 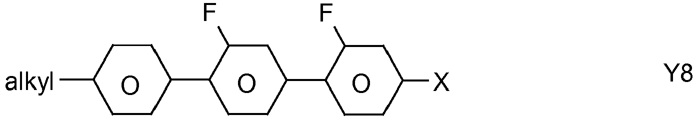 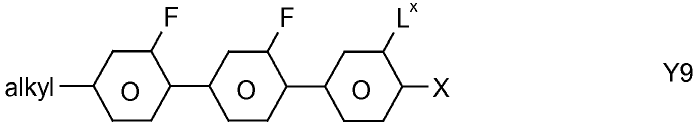 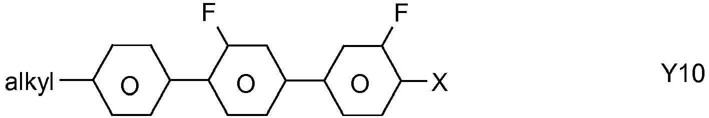 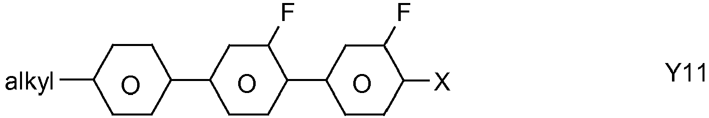 in which R⁵ has one of the meanings indicated above for R¹, alkyl denotes C₁₋₆-alkyl, L^{x} denotes H or F, X denotes F, Cl, OCF₃, OCHF₂ or OCH=CF₂, d denotes 0 or 1, and z and m each, independently of one another, denote an integer from 1 to 6.

R⁵ in these compounds is particularly preferably C₁₋₆-alkyl or -alkoxy or C₂₋₆-alkenyl, d is preferably 1. X in these compounds is particularly preferably F. The LC medium according to the invention preferably comprises one or more compounds of the above-mentioned formulae in amounts of ≥ 5% by weight.

In the compounds of formula B and its subformulae, R¹ and R² preferably denote straight-chain alkyl or alkoxy having 1 to 6 C atoms, in particular methoxy, ethoxy, propoxy or butoxy, furthermore alkenyl having 2 to 6 C atoms, in particular vinyl, 1E-propenyl, 1E-butenyl, 3-butenyl, 1E-pentenyl, 3E-pentenyl or 4-pentenyl.

The compounds of formula B are selected of formula B1 and B2 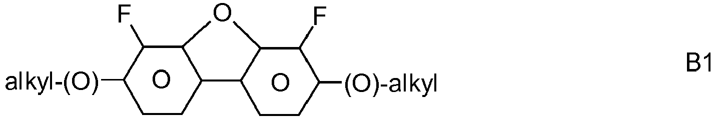 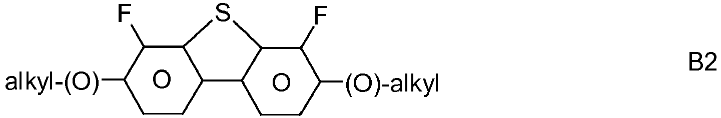 wherein alkyl denotes a straight-chain alkyl radical having 1-6 C atoms, and (O) denotes an oxygen atom or a single bond. Very preferred are compounds of formula B1 and B2 wherein both groups (O) denote an oxygen atom and alkyl is methyl, ethyl, propyl, butyl, pentyl or hexyl, which are preferably straight-chained. Very preferably one alkyl is ethyl and the other is n-pentyl.

Very preferred are compounds of formula B2.

The proportion of the compounds of formula B, B1 and B2 in the medium is preferably from 1 to 20%, very preferably from 1 to 15%, most preferably from 2 to 10% by weight.

Preferably the medium contains 1, 2 or 3 compounds of formula B, B1 or B2.

Preferably the total proportion of compounds of formula Y and B or their subformulae in the medium is from 2 to 25%, very preferably from 5 to 20%, most preferably from 8 to 20% by weight.

Further preferred embodiments are indicated below:
- The medium comprises one or more compounds of formula Y selected from the following subformula 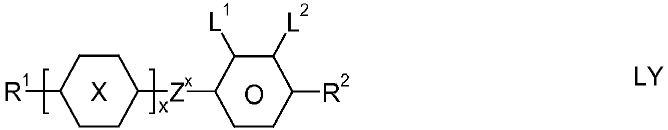 wherein R¹, R², L¹, L², X, x and Z^{x} have the meanings given in formula Y, and wherein at least one of the rings X is cyclohexenylene.
   Preferably, both radicals L¹ and L² denote F. Further preferably one of the radicals L¹ and L² denotes F and the other denotes Cl.
   The compounds of the formula LY are preferably selected from the group consisting of the following sub-formulae: 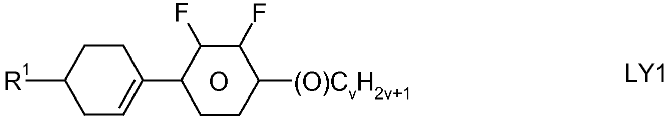 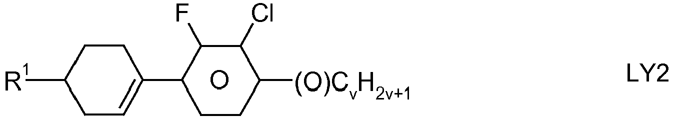 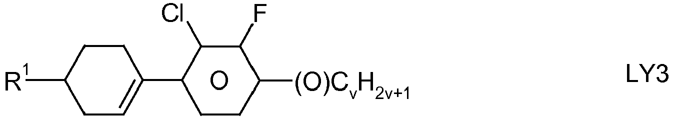 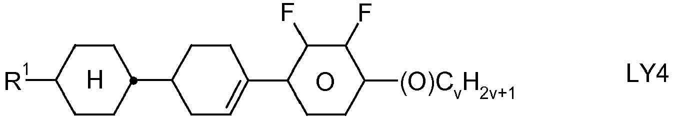 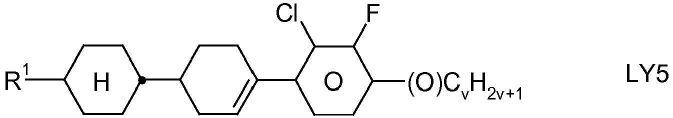 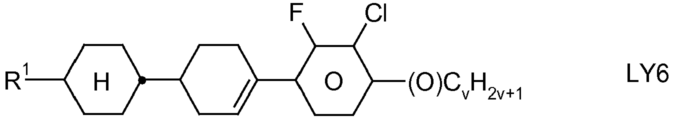 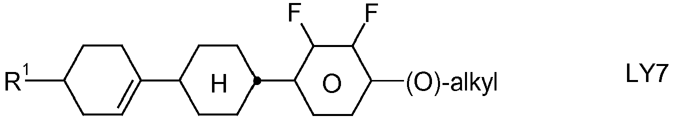 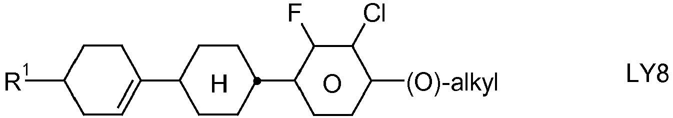 in which R¹ has the meaning indicated above, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Very preferred are compounds of formula LY4.
   Preferably the medium contains 1, 2 or 3 compounds of formula LY, very preferably of formula LY4.
   The proportion of the compounds of formula LY or its subformulae in the medium is preferably from 1 to 10% by weight.
- The medium comprises one or more compounds of formula Y selected from the following subformula 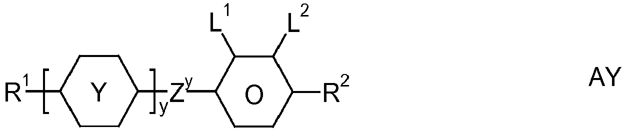 wherein R¹, R², L¹, L², Y, y and Z^{y} have the meanings given in formula Y, and wherein at least one of the rings Y is tetrahydropyrane.
   The compounds of the formula AY are preferably selected from the group consisting of the following sub-formulae: 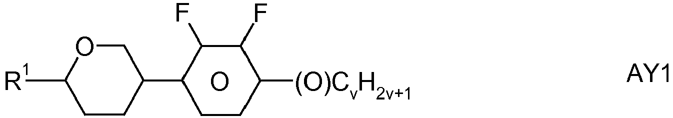 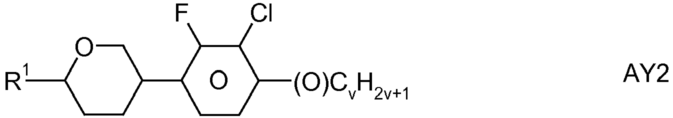 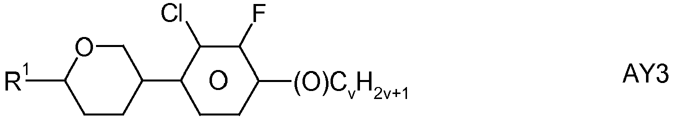 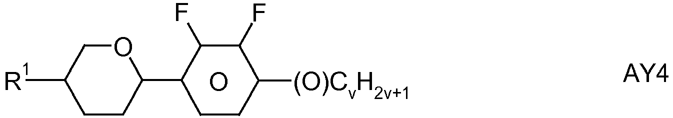 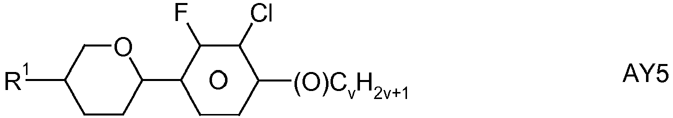 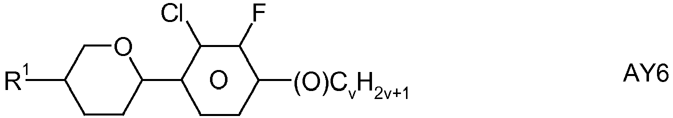 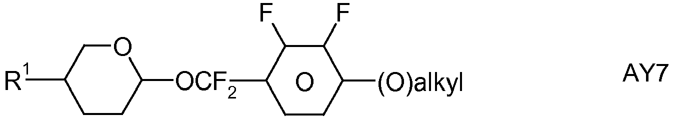 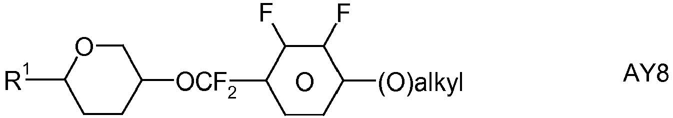 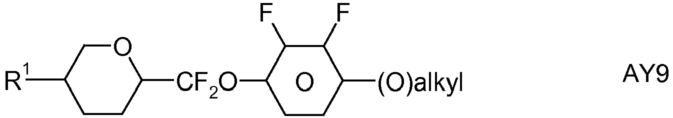 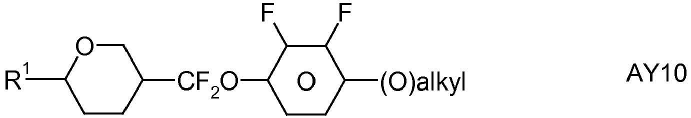 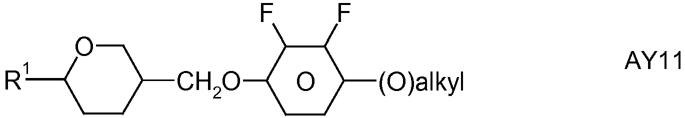 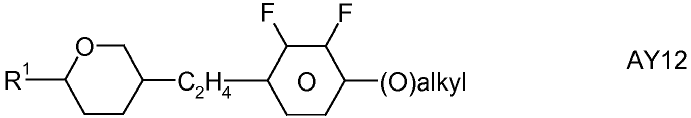 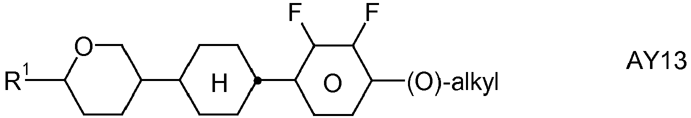 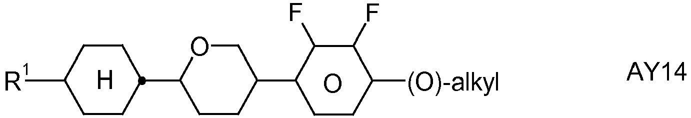 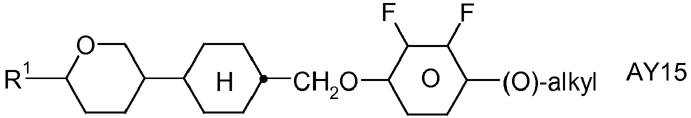 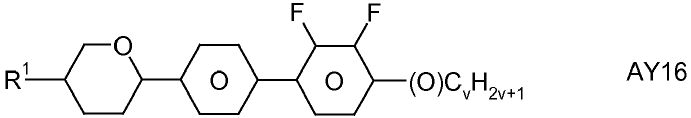 in which R¹ has the meaning indicated above, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
- The medium additionally comprises one or more compounds selected from the following formulae: 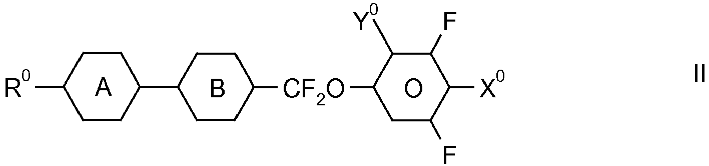 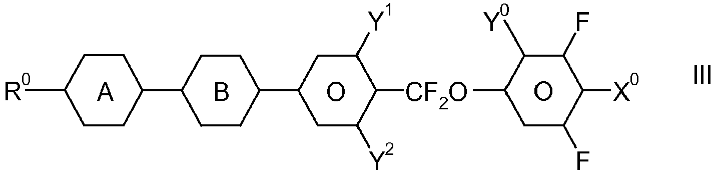 wherein the individual radicals, independently of each other and on each occurrence identically or differently, have the following meanings 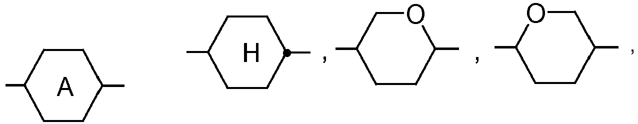 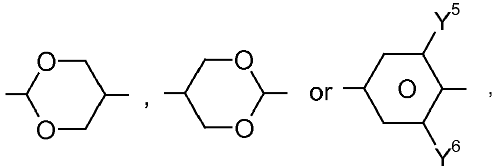 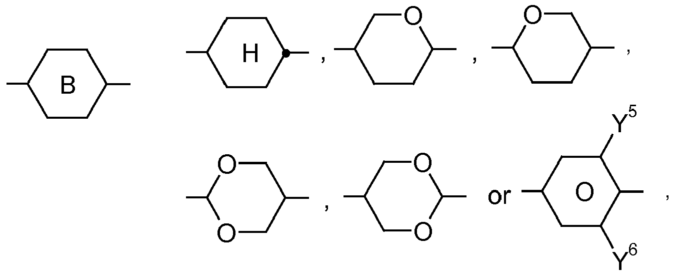
   - R°: one of the meanings given in formula I or one of the preferred meanings as given above and below,
   - X⁰: F, Cl, CN, SF₅, SCN, NCS, a halogenated alkyl radical, a halogenated alkenyl radical, a halogenated alkoxy radical or a halogenated alkenyloxy radical having up to 6 C atoms, and
   - Y¹⁻⁶: H or F,
   - Y⁰: H or CH₃.

   Preferred compounds of formula II and III are those wherein Y⁰ is H.
   Further preferred compounds of formula II and III are those wherein R° denotes alkyl having 1 to 6 C atoms, very preferably ethyl or propyl, and X° denotes F or OCF₃, very preferably F.
- The medium comprises one or more compounds of formula II selected from the following subformulae: 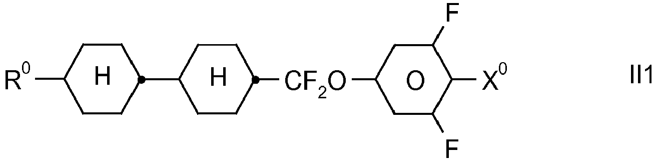 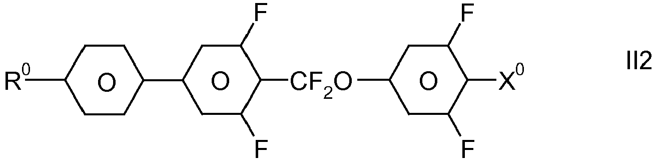 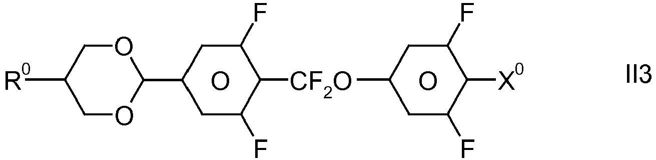 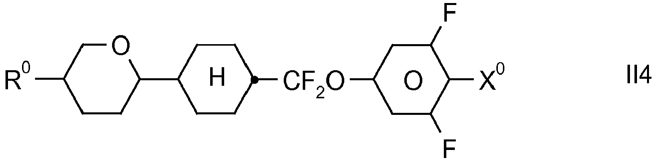 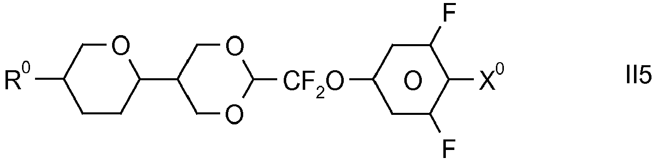 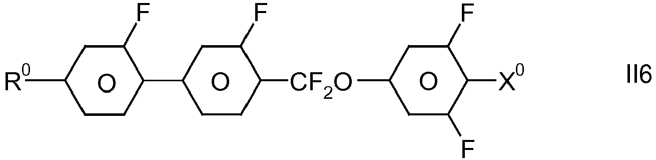 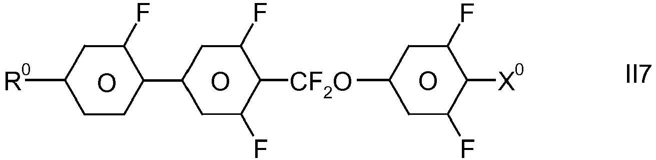
   in which R⁰ and X⁰ have the meanings given in formula II or one of the preferred meanings given above and below.
   Preferred compounds are those of formula II1, II2 and II3, very preferred those of formula II1 and II2.
   In the compounds of formulae II1 to II7 R° preferably denotes alkyl having 1 to 6 C atoms, very preferably ethyl or propyl, and X° preferably denotes F or OCF₃, very preferably F.
- The medium contains one or more compounds of formula II or their subformulae as described above and below wherein Y° is CH₃, Very preferably the medium according to this preferred embodiment comprises one or more compounds of formula II selected from the following subformulae: 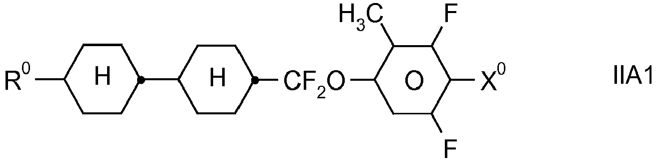 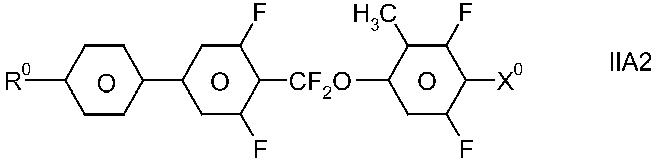 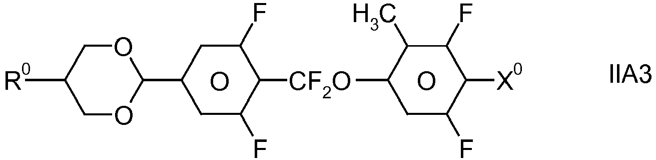 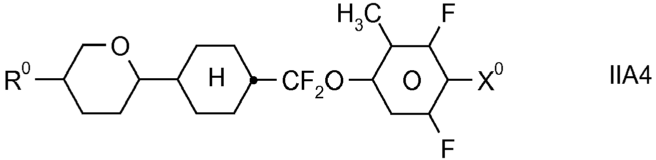 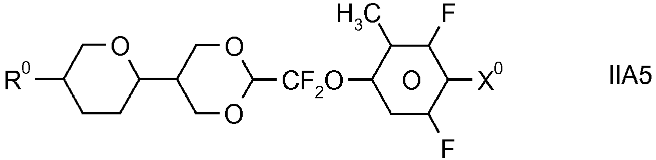 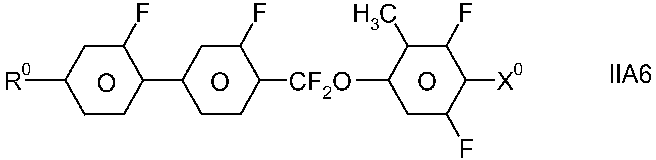 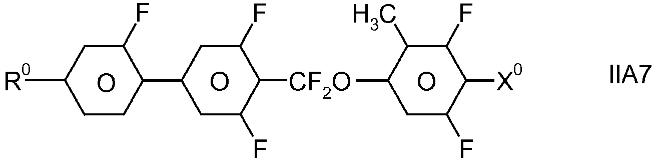
   in which R° and X° have the meanings given in formula II or one of the preferred meanings given above and below.
   Preferred compounds are those of formula IIA1, IIA2 and IIA3, very preferred those of formula IIA1 and IIA2.
   In the compounds of formulae IIA1 to IIA7 R° preferably denotes alkyl having 1 to 6 C atoms, very preferably ethyl or propyl, and X° preferably denotes F or OCF₃, very preferably F.
- The medium comprises one or more compounds of formula III selected from the following subformulae: 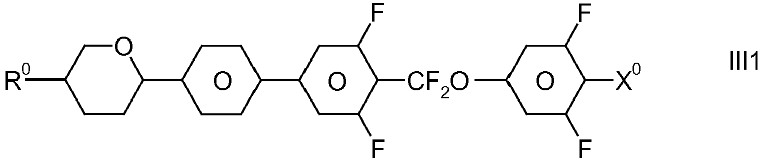 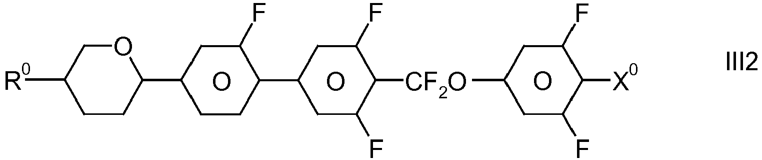 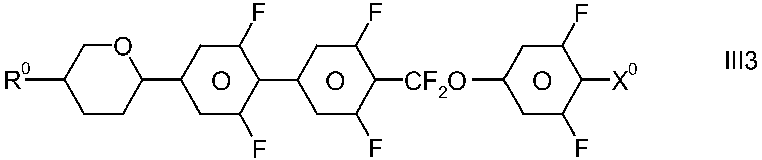 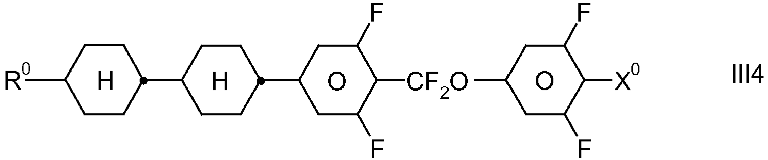 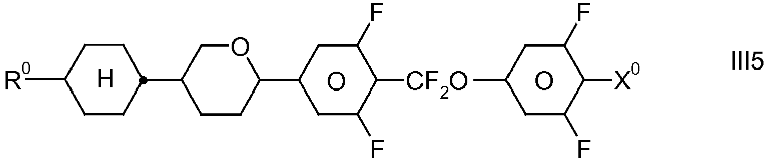 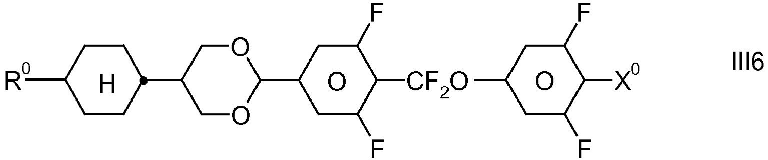 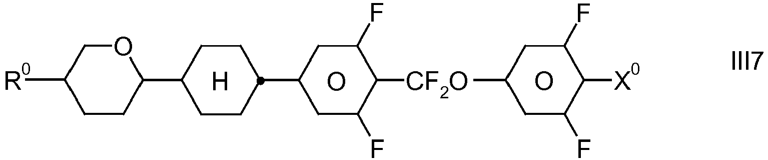 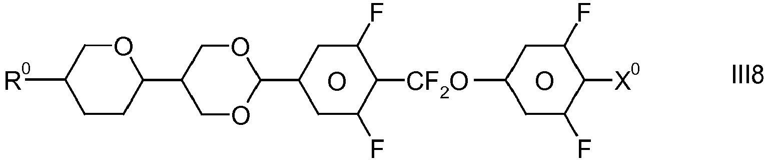 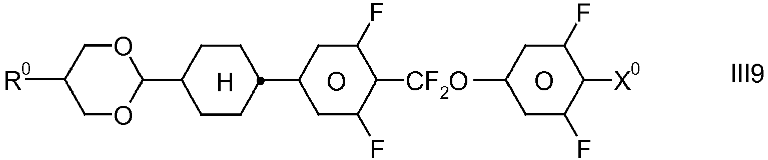 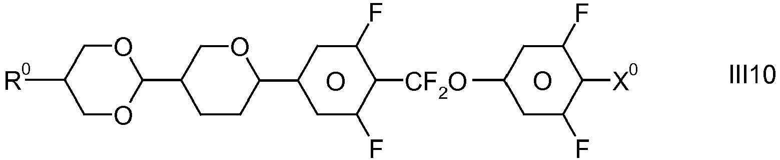 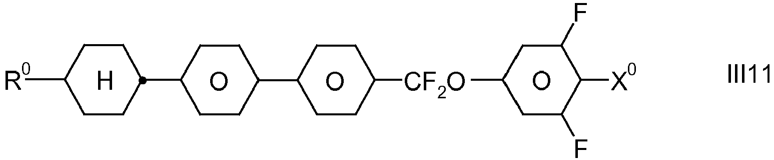 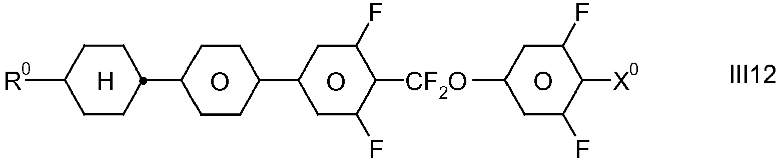 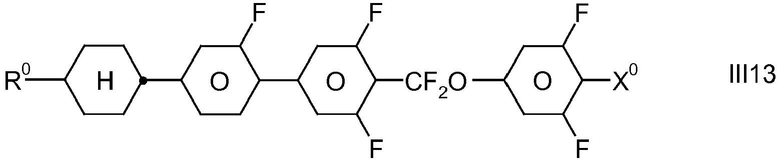 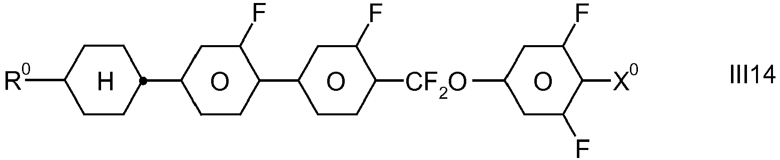 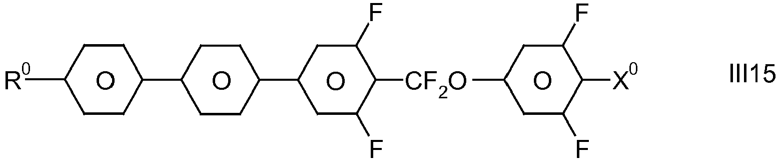 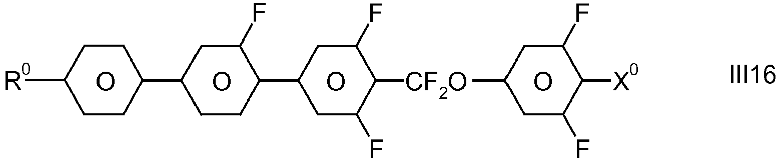 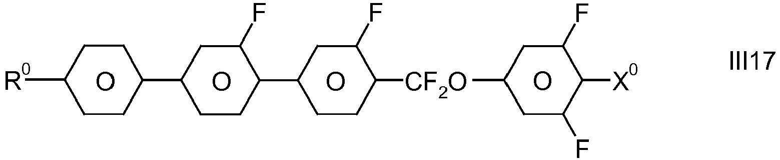 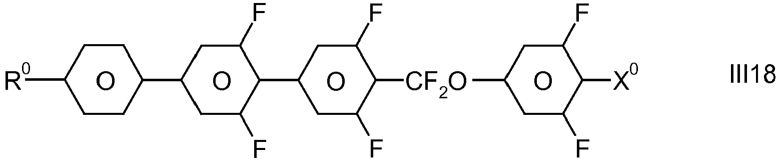 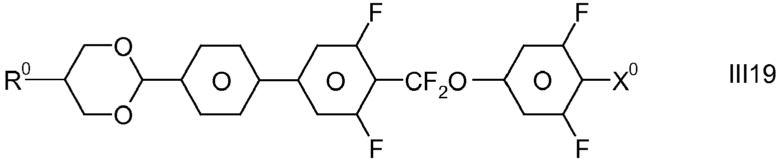 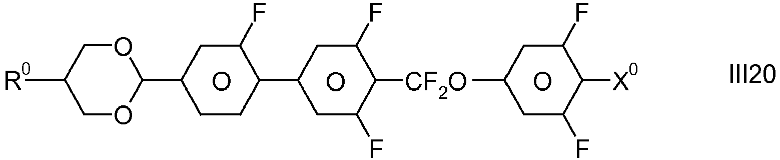 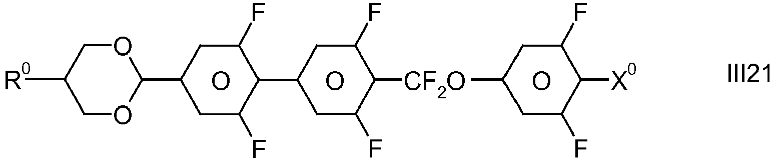
   in which R° and X° have the meanings given in formula II or one of the preferred meanings given above and below.
   Preferred compounds are those of formula III1, III4, III6, III16, III19 and III20.
   In the compounds of formulae III1 to III21 R° preferably denotes alkyl having 1 to 6 C atoms, very preferably ethyl or propyl, X° preferably denotes F or OCF₃, very preferably F, and Y² preferably denotes F.
- The medium contains one or more compounds of formula III or their subformulae as described above and below wherein Y⁰ is CH₃, Very preferably the medium according to this preferred embodiment comprises one or more compounds of formula III selected from the following subformulae: 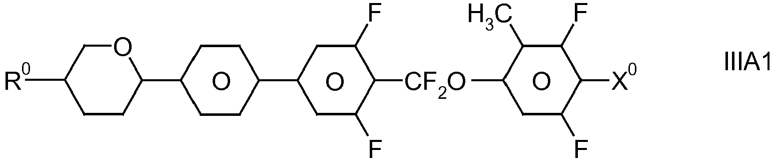 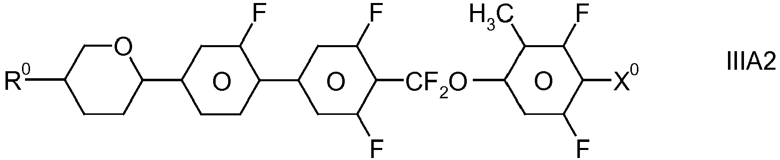 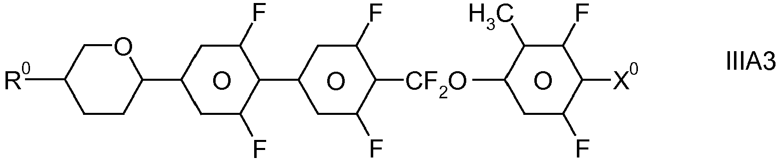 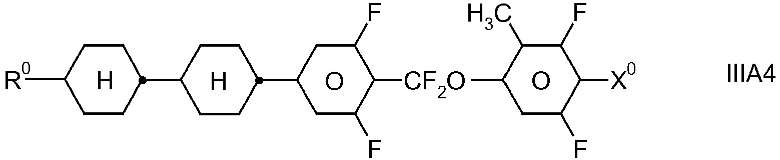 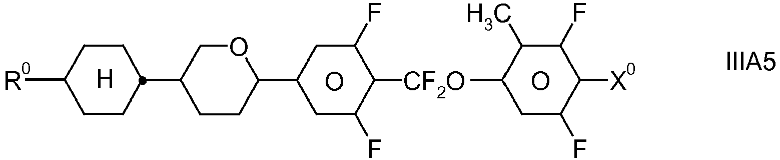 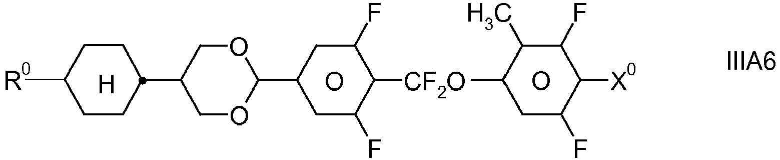 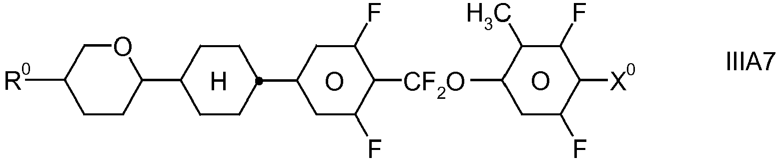 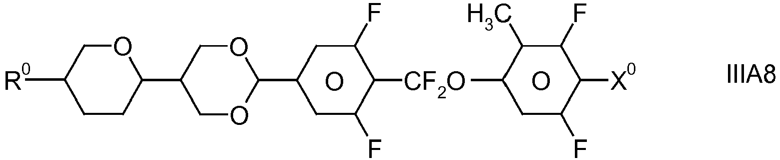 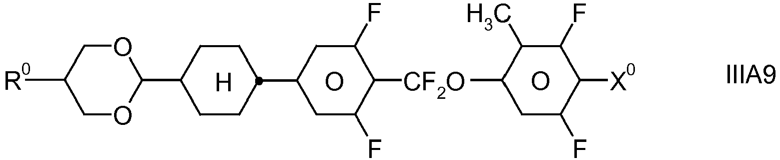 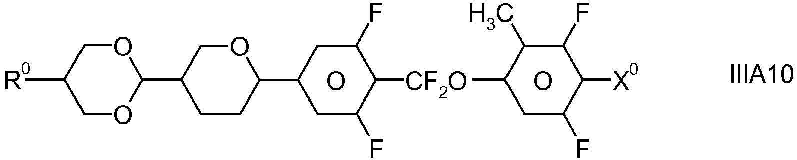 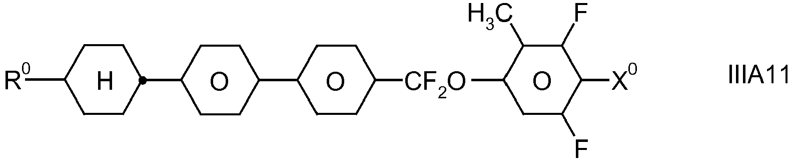 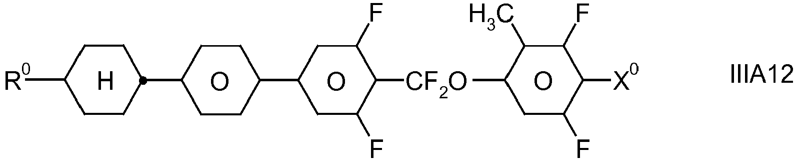 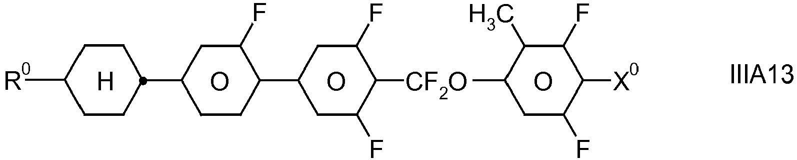 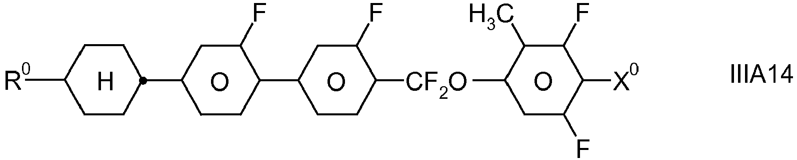 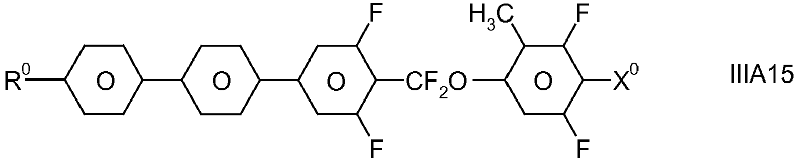 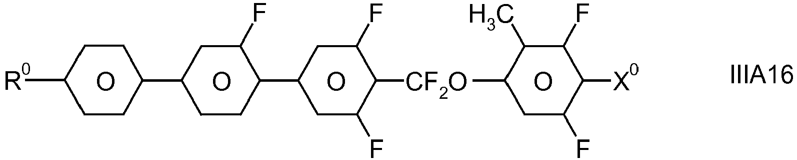 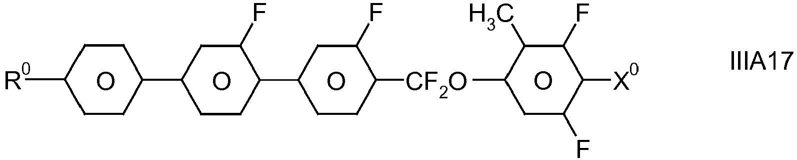 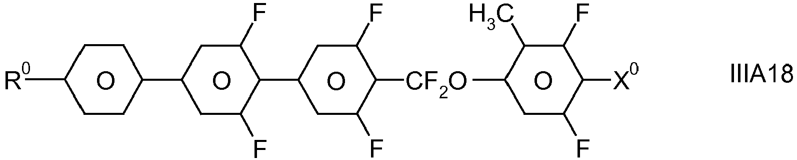 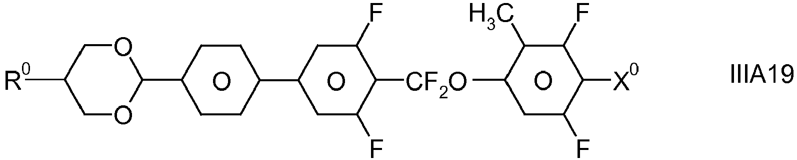 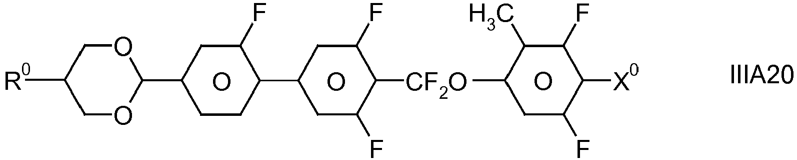 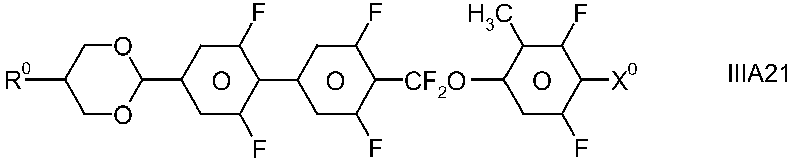 in which R° and X° have the meanings given in formula III or one of the preferred meanings given above and below.
   Preferred compounds are those of formula IIIA1, IIIA4, IIIA6, IIIA16, IIIA19 and IIIA20.
   In the compounds of formulae IIIA1 to IIIA21 R° preferably denotes alkyl having 1 to 6 C atoms, very preferably ethyl or propyl, X° preferably denotes F or OCF₃, very preferably F, and Y² preferably denotes F.
- The medium additionally comprises one or more compounds selected from the following formulae: 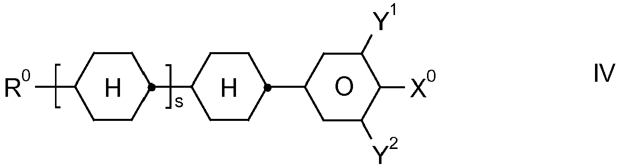 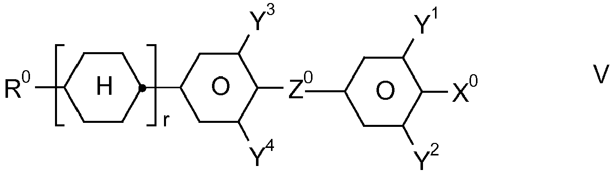 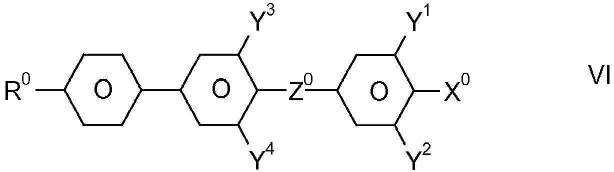 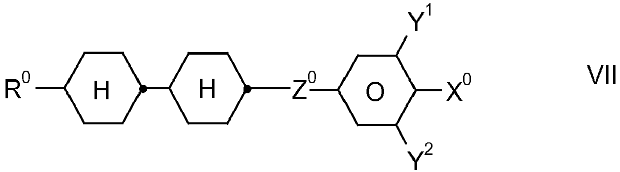 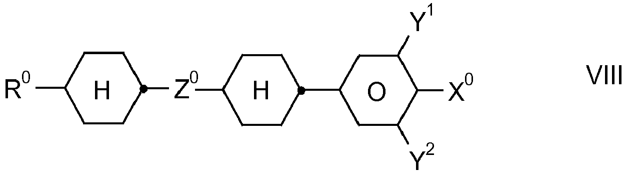 in which
   - R⁰, X⁰ and Y¹⁻⁴: have the meanings indicated above, and
   - Z⁰: denotes -C₂H₄-, -(CH₂)₄-, -CH=CH-, -CF=CF-, -C₂F₄-, -CH₂CF₂-,-CF₂CH₂-, -CH₂O-, -OCH₂-, -COO- or -OCF₂-, in formulae V and VI also a single bond, in formulae V and VIII also -CF₂O-,
   - r: denotes 0 or 1, and
   - s: denotes 0 or 1;
- The compounds of the formula IV are preferably selected from the following formulae: 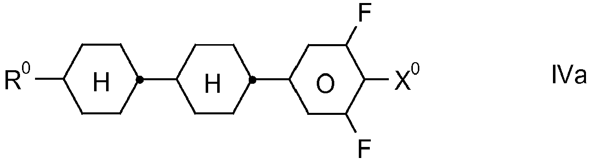 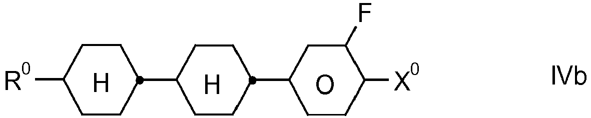 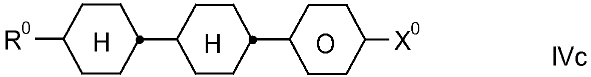 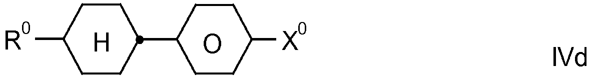 in which R° and X° have the meanings indicated above.
   R° preferably denotes alkyl having 1 to 6 C atoms. X° preferably denotes For OCF₃, furthermore OCF=CF₂ or Cl;
- The compounds of the formula IVa are preferably selected from the following subformula: 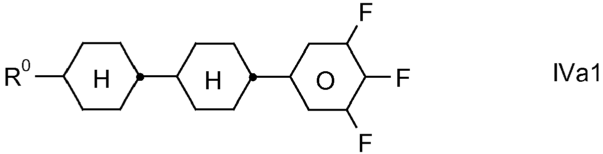 in which R° has the meanings indicated above and is preferably propyl or pentyl.
- The compounds of the formula IVc are preferably selected from the following subformula: 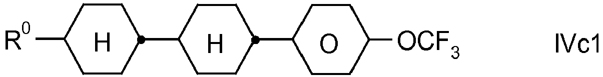 in which R° has the meanings indicated above and is preferably propyl or pentyl.
   The compound(s) of the formula IVc, in particular of the formula IVc1, is (are) preferably employed in the mixtures according to the invention in amounts of 1-20% by weight, particularly preferably 2-15% by weight.
- The compounds of the formula V are preferably selected from the following subformulae: 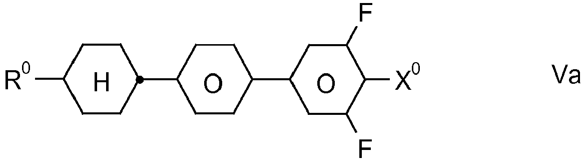 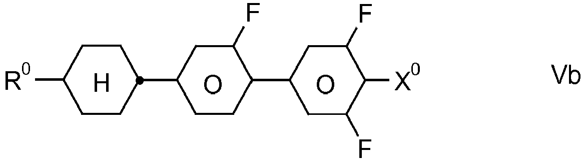 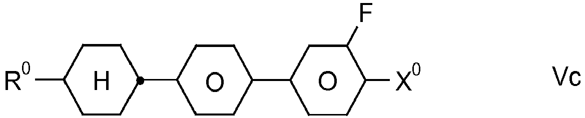 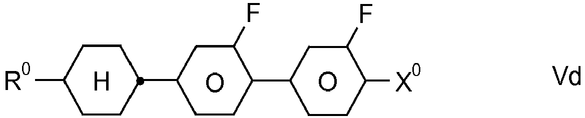 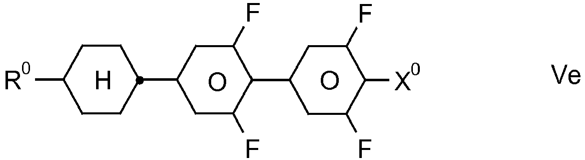 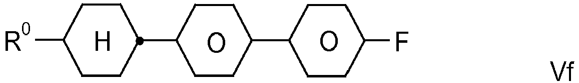 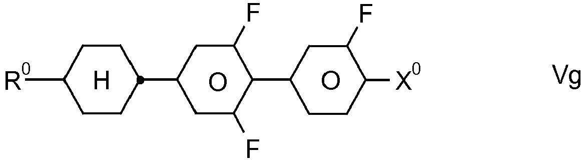 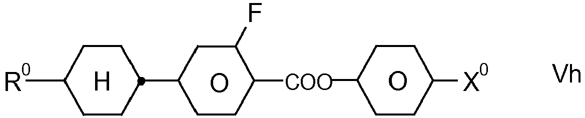 in which R⁰ and X⁰ have the meanings indicated above.
   R° preferably denotes alkyl having 1 to 6 C atoms. X° preferably denotes F and OCF₃, furthermore OCHF₂, CF₃, OCF=CF₂ and OCH=CF₂;
- The compounds of the formula VI are preferably selected from the following subformulae: 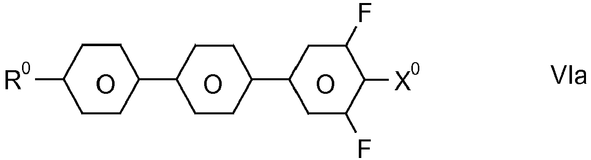 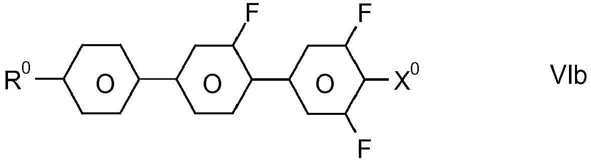 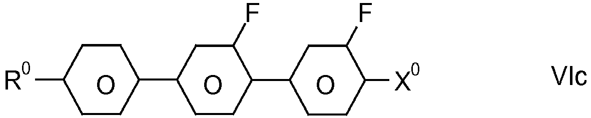 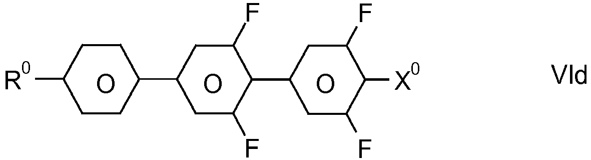 in which R⁰ and X⁰ have the meanings indicated above.
   R° preferably denotes alkyl having 1 to 6 C atoms. X° preferably denotes F, furthermore OCF₃, CF₃, CF=CF₂, OCHF₂ and OCH=CF₂;
- The compounds of the formula VII are preferably selected from the following subformulae: 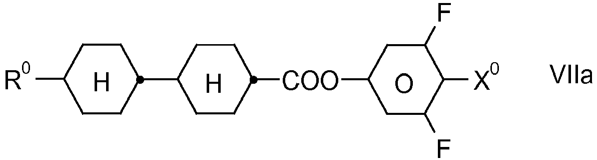 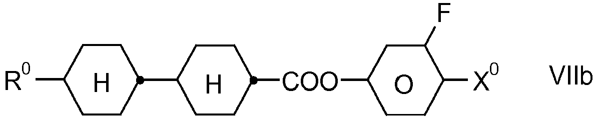 in which R° and X° have the meanings indicated above.
   R° preferably denotes alkyl having 1 to 6 C atoms. X° preferably denotes F, furthermore OCF₃, OCHF₂ and OCH=CF₂.
- The medium additionally comprises one or more compounds selected from the following subformulae: 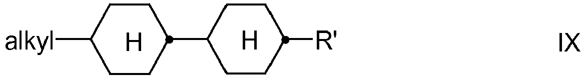 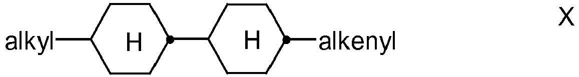 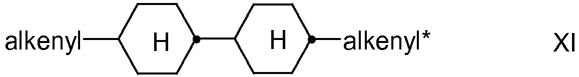 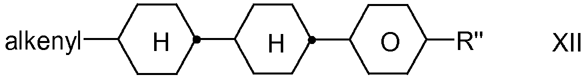 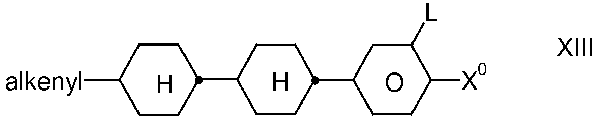 in which X⁰ has the meanings indicated above, and
   - L: denotes H or F,
   - "alkyl": denotes C₁₋₆-alkyl,
   - R': denotes C₁₋₆-alkyl or C₁₋₆-alkoxy
   - R": denotes C₁₋₆-alkyl, C₁₋₆-alkoxy or C₂₋₆-alkenyl, and
   - "alkenyl" and "alkenyl*": each, independently of one another, denote C₂₋₆-alkenyl.
- The compounds of the formulae IX-XIII are preferably selected from the following subformulae: 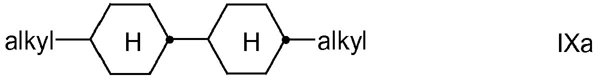 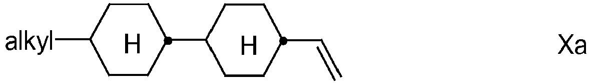 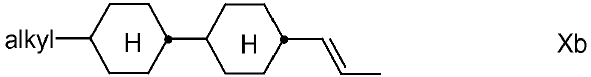 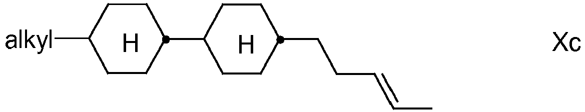 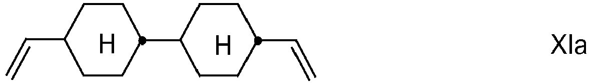 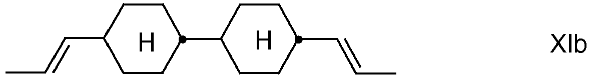 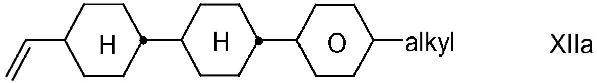 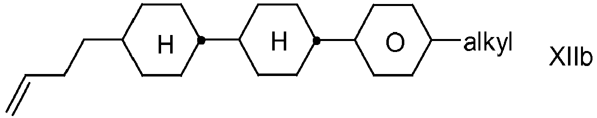 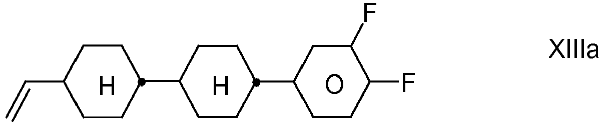 Particular preference is given to the compounds of the formulae IXa, IXb, IXc, Xa, Xb, Xc, XIa, XIb, XIIa and XIIIa. In the formulae IXb and IX, "alkyl" preferably, independently of one another, denotes n-C₃H₇, n-C₄H₉ or n-C₅H₁₁, in particular n-C₃H₇.
- Preferred compounds are selected from the following group 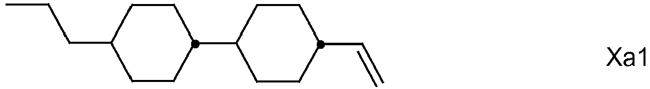 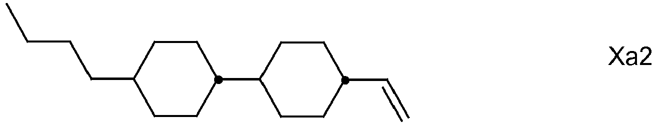 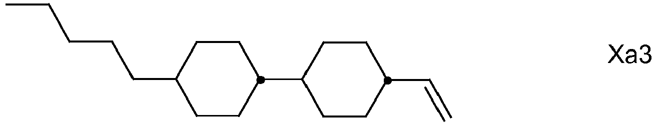 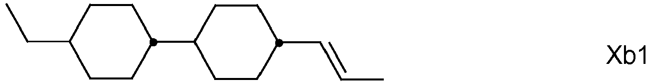 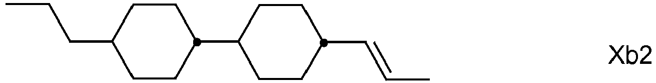 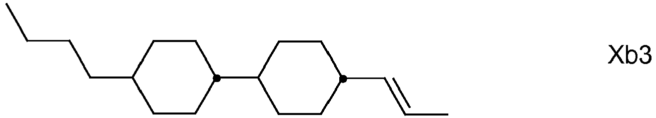 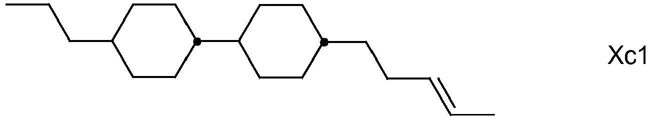 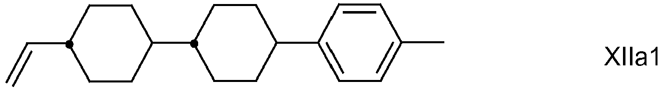 Very preferred are compounds of formula Xa1 and Xb2;
- The medium additionally comprises one or more compounds selected from the following formulae: 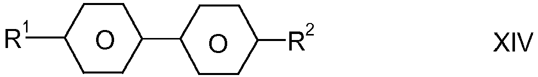 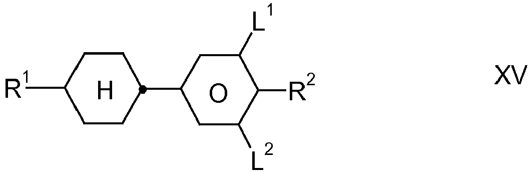 in which L¹ and L² have the meanings indicated above, and R¹ and R² each, independently of one another, denote n-alkyl, alkoxy, oxaalkyl, fluoroalkyl or alkenyl, each having up to 6 C atoms, and preferably each, independently of one another, denote alkyl having 1 to 6 C atoms, and the compounds of formula XIV are different from those of formula P; in the compound of the formula XIV, at least one of the radicals R¹ and R² preferably denotes alkenyl having 2 to 6 C atoms.
- The medium comprises one or more compounds of the formula XIV in which at least one of the radicals R¹ and R² denotes alkenyl having 2 to 6 C atoms, preferably those selected from the following subformulae: 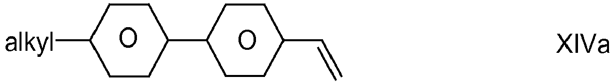 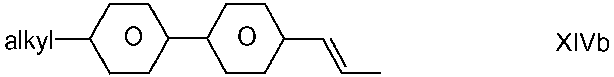 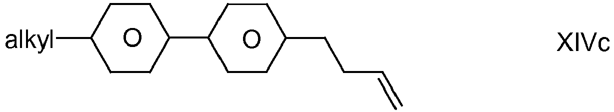 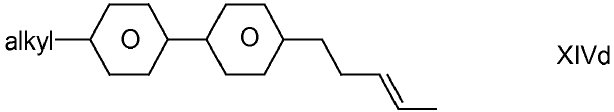 in which "alkyl" has the meaning indicated above, and preferably denotes methyl, ethyl or propyl;
- The compounds of the formulae XIV are preferably selected from the following subformulae: 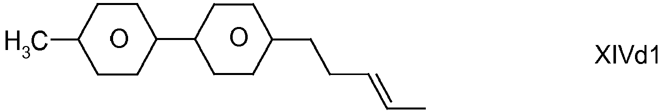 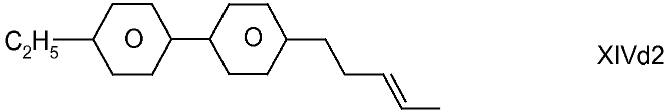 Very preferred are compounds of formula XIVd1;
- The medium comprises one or more compounds of the formula XVI, 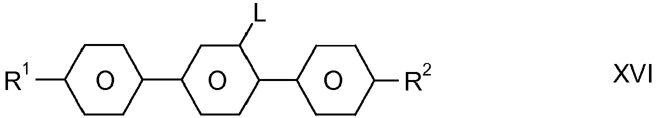 in which R¹ and R² have the meanings indicated above and preferably each, independently of one another, denote alkyl having 1 to 6 C atoms. L denotes H or F.
   Particularly preferred compounds of the formula XVI are those of the sub-formulae 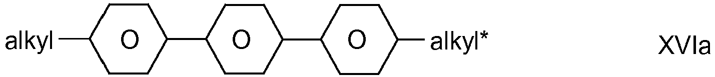 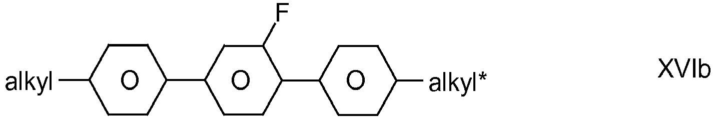 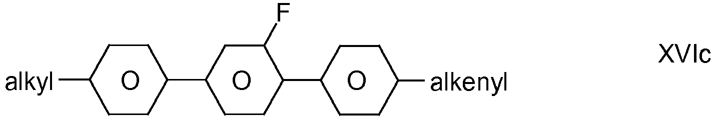 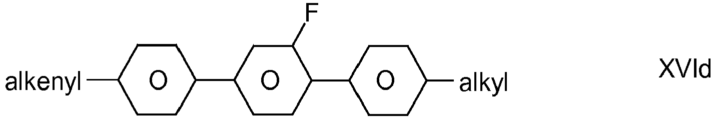 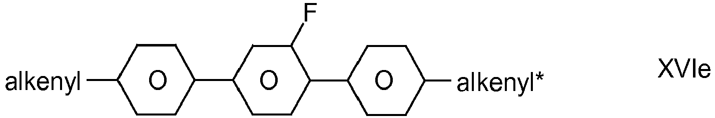 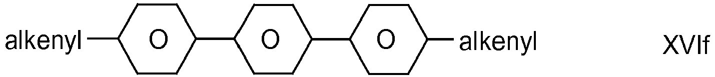 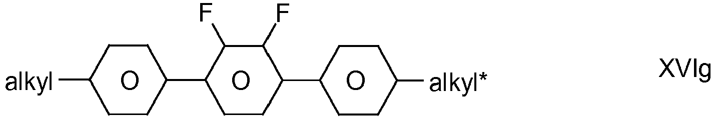 in which
   - alkyl and alkyl*: each, independently of one another, denote a straight-chain alkyl radical having 1-6 C atoms, in particular ethyl, propyl or pentyl,
   - alkenyl and alkenyl*: each, independently of one another, denote a straight-chain alkenyl radical having 2-6 C atoms, in particular CH₂=CHC₂H₄, CH₃CH=CHC₂H₄, CH₂=CH and CH₃CH=CH.
   Particular preference is given to the compounds of the formulae XVIb, XVIc and XVIg. Very particular preference is given to the compounds of the following subformulae 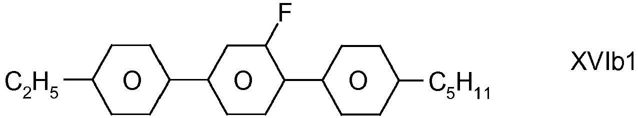 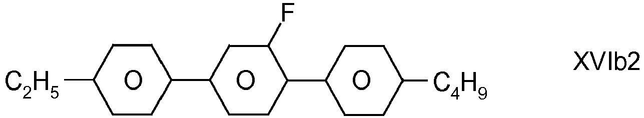 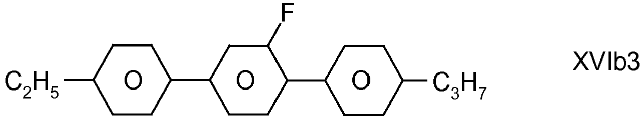 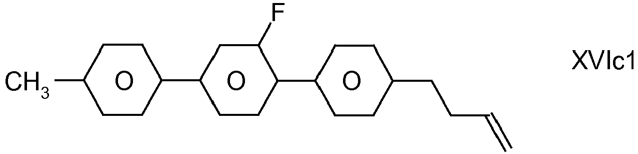 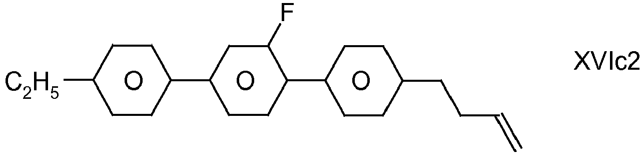 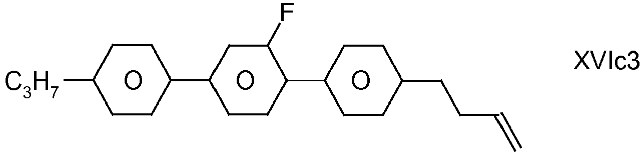 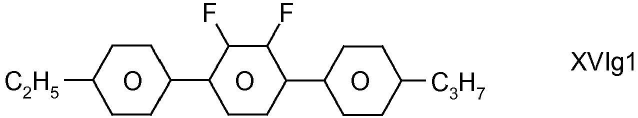 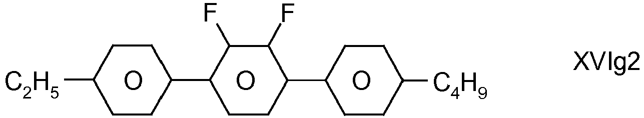 Very preferred are compounds of formula XVIc2, XVIg1 and XVIg2;
- The medium comprises one or more compounds of the following formulae: 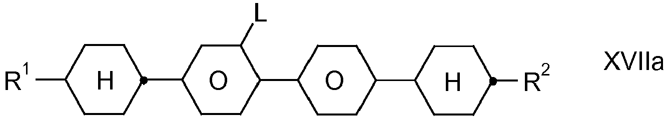 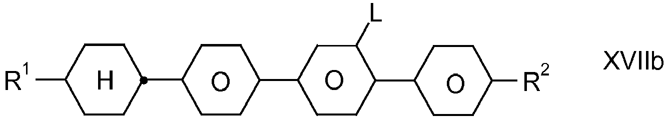 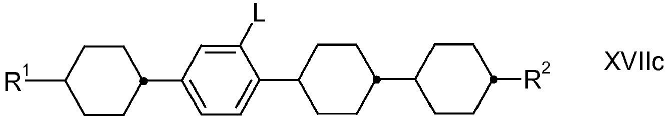 in which R¹ and R² have the meanings indicated above and preferably each, independently of one another, denote alkyl having 1 to 6 C atoms. L denotes H or F. Very preferred are compounds of formula XVIIa wherein L is H Very preferred are compounds of formula XVIIb wherein L is F.
- The medium additionally comprises one or more compounds selected from the following formulae: 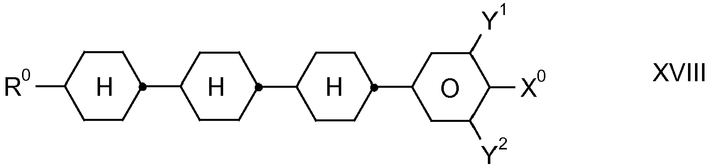 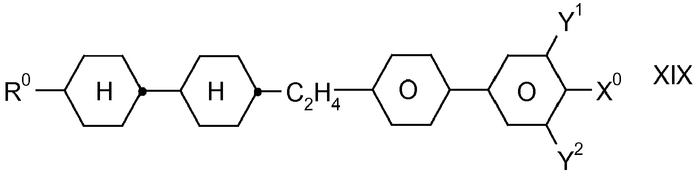 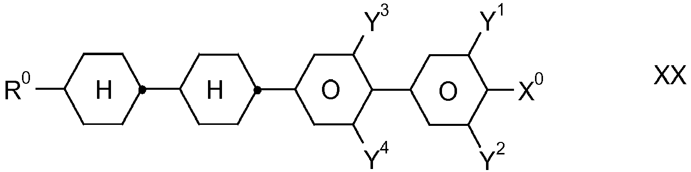 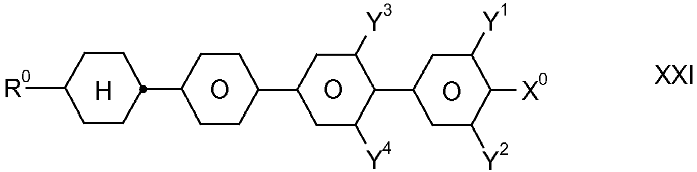 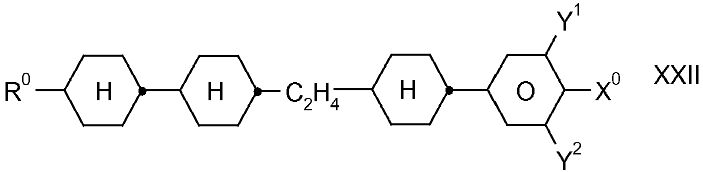 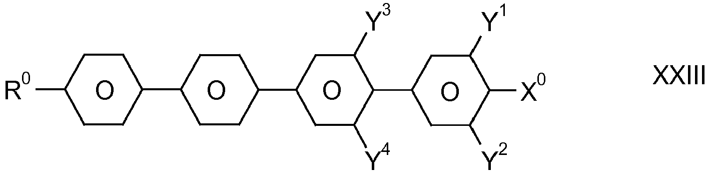 in which R° and X° each, independently of one another, have one of the meanings indicated above, and Y¹⁻⁴ each, independently of one another, denote H or F. X° is preferably F, Cl, CF₃, OCF₃ or OCHF₂. R° preferably denotes alkyl, alkoxy, oxaalkyl, fluoroalkyl or alkenyl, each having up to 6 C atoms.
   Very preferably the mixture according to the invention comprises one or more compounds of the formula XXa, 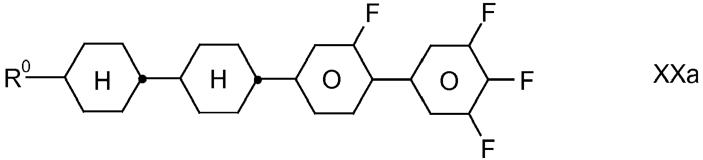 in which R⁰ has the meanings indicated above. R° preferably denotes straight-chain alkyl, in particular ethyl, n-propyl, n-butyl or n-pentyl and very particularly preferably n-propyl.
   The compound(s) of the formula XX, in particular of the formula XXa, is (are) preferably employed in the mixtures according to the invention in amounts of 1-15% by weight, particularly preferably 2-10% by weight.
   Very preferably the mixture according to the invention comprises one or more compounds of the formula XXIa, 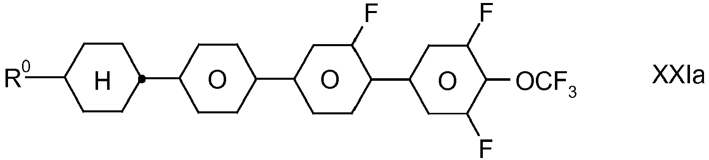 in which R⁰ has the meanings indicated above. R° preferably denotes straight-chain alkyl, in particular ethyl, n-propyl, n-butyl or n-pentyl and very particularly preferably n-propyl.
   The compound(s) of the formula XXI, in particular of the formula XXIa, is (are) preferably employed in the mixtures according to the invention in amounts of 1-15% by weight, particularly preferably 2-10% by weight.
   Further preferably the mixture according to the invention comprises one or more compounds of the formula XXIIIa, 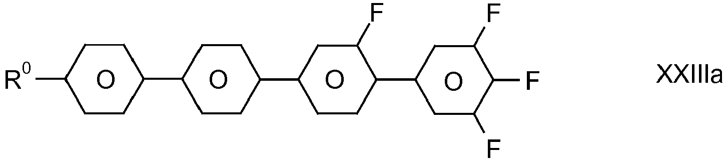 in which R⁰ has the meanings indicated above. R° preferably denotes straight-chain alkyl, in particular ethyl, n-propyl, n-butyl or n-pentyl and very particularly preferably n-propyl.
   The compound(s) of the formula XXIII, in particular of the formula XXIIIa, is (are) preferably employed in the mixtures according to the invention in amounts of 0.5-5% by weight, particularly preferably 0.5-2% by weight.
- The medium additionally comprises one or more compounds of the formula XXIV, 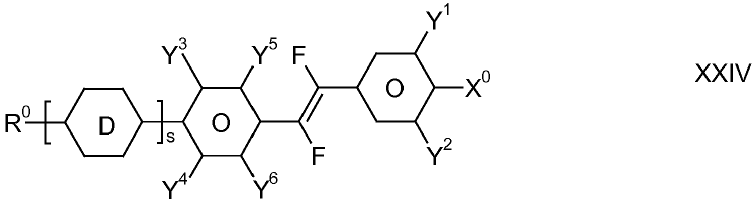 in which R°, X° and Y¹⁻⁶ have the meanings indicated in formula I, s denotes 0 or 1, and 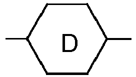 denotes 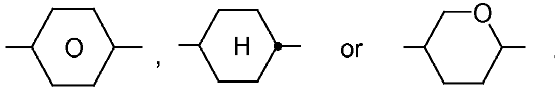
   In the formula XXIV, X° may also denote an alkyl radical having 1-6 C atoms or an alkoxy radical having 1-6 C atoms. The alkyl or alkoxy radical is preferably straight-chain.
   R° preferably denotes alkyl having 1 to 6 C atoms. X° preferably denotes F;
- The compounds of the formula XXIV are preferably selected from the following subformulae: 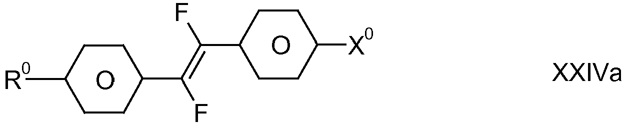 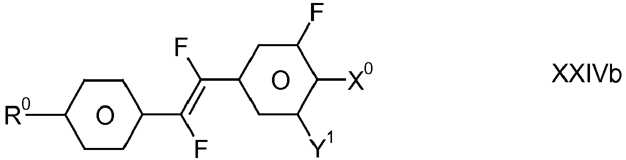 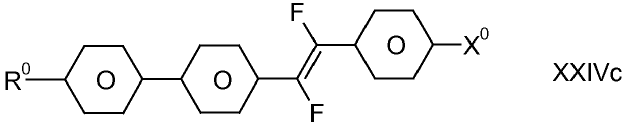 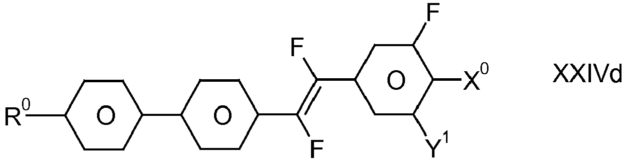 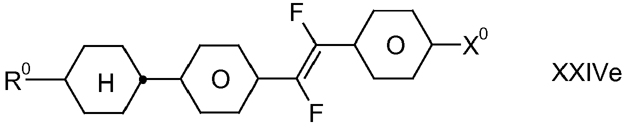 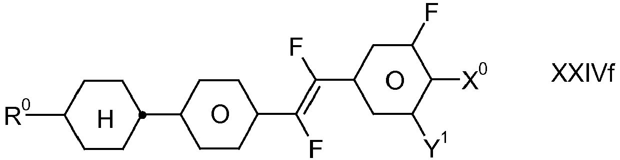 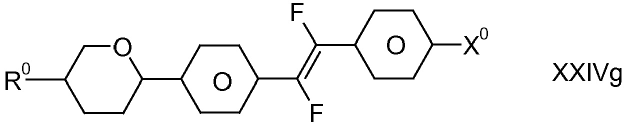 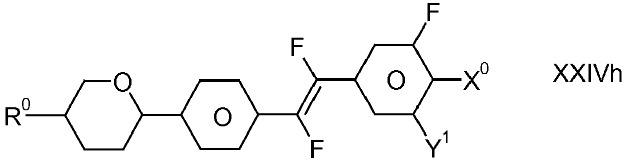 in which R°, X⁰ and Y¹ have the meanings indicated above. R° preferably denotes alkyl having 1 to 6 C atoms. X° preferably denotes F, and Y¹ is preferably F; 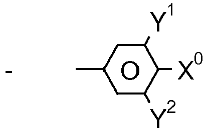 is preferably 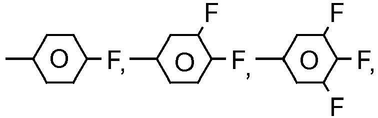 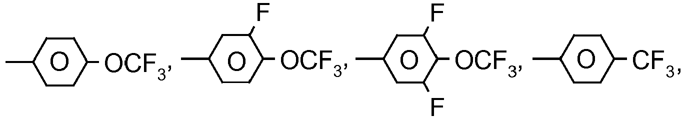 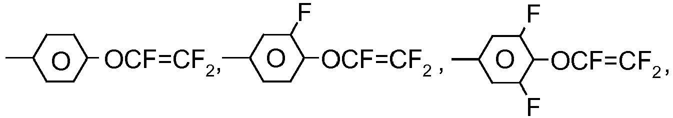 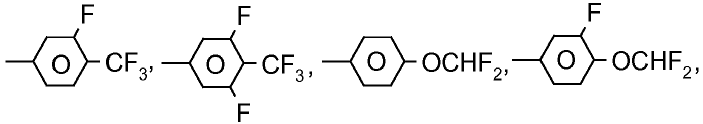 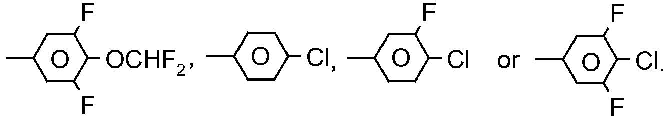
- R° is straight-chain alkyl or alkenyl having 2 to 6 C atoms;
- The medium comprises one or more compounds of the following formulae: 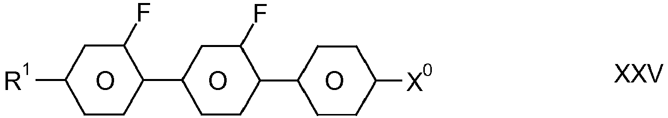 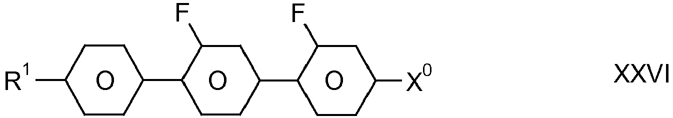 in which R¹ and X⁰ have the meanings indicated above. R¹ preferably denotes alkyl having 1 to 6 C atoms. X° preferably denotes F or Cl. In the formula XXIV, X° very particularly preferably denotes Cl.
- The medium comprises one or more compounds of the following formulae: 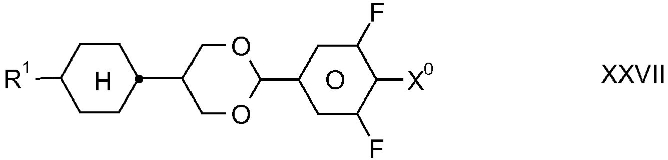 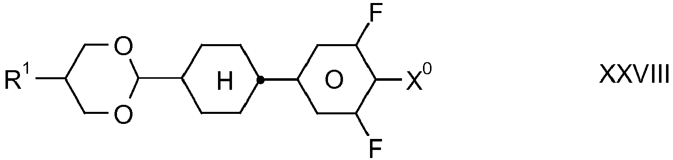 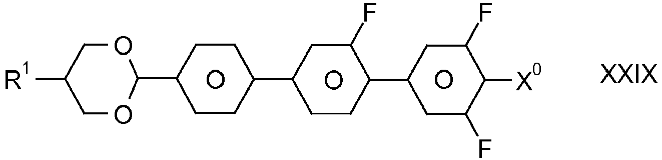 in which R¹ and X⁰ have the meanings indicated above. R¹ preferably denotes alkyl having 1 to 6 C atoms. X° preferably denotes F. The medium according to the invention particularly preferably comprises one or more compounds of the formula XXIX in which X° preferably denotes F.
   The compound(s) of the formulae XXVI - XXIX is (are) preferably employed in the mixtures according to the invention in amounts of 1-20% by weight, particularly preferably 1-15% by weight. Particularly preferred mixtures comprise at least one compound of the formula XXIX.
   Very preferably the mixture according to the invention comprises one or more compounds of the formula XXIXa, 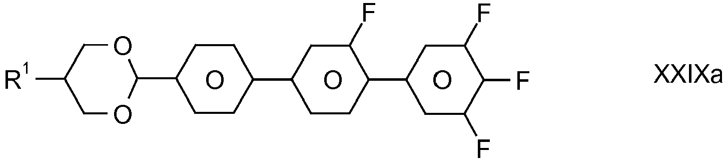 in which R¹ has the meanings indicated above, and preferably denotes straight-chain alkyl, in particular ethyl, n-propyl, n-butyl or n-pentyl and very particularly preferably n-propyl.
   The compound(s) of the formula XXIXa is (are) preferably employed in the mixtures according to the invention in amounts of 1-15% by weight, particularly preferably 2-10% by weight.
- The medium comprises one or more compounds of the following pyrimidine or pyridine compounds of the formulae 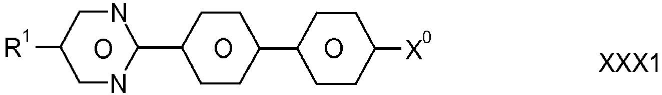 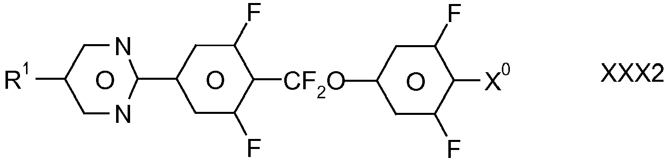 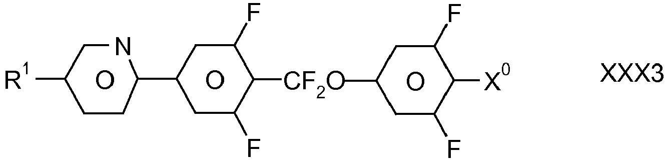 in which R¹ and X⁰ have the meanings indicated above. R¹ preferably denotes alkyl having 1 to 6 C atoms. X° preferably denotes F. The medium according to the invention particularly preferably comprises one or more compounds of the formula XXX1, in which X° preferably denotes F. The compound(s) of the formulae XXX1 to XXX3 is (are) preferably employed in the mixtures according to the invention in amounts of 1-20% by weight, particularly preferably 1-15% by weight.
- The medium additionally comprises one or more compounds of the following formula: 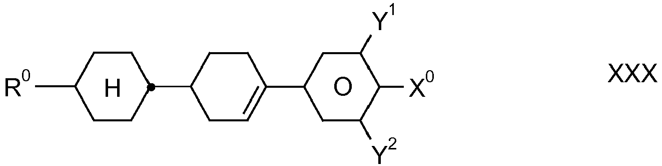 in which R° and X° and Y¹⁻⁴ have the meanings indicated above. X° is preferably F, Cl, CF₃, OCF₃ or OCHF₂. Y¹⁻⁴ each, independently of one another, preferably denote H or F. R° preferably denotes alkyl, alkoxy, oxaalkyl, fluoroalkyl or alkenyl, each having up to 6 C atoms.
   Very preferably the mixture according to the invention comprises one or more compounds of the formula XXXa, 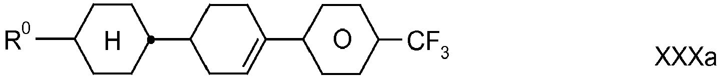 in which R⁰ has the meanings indicated above. R° preferably denotes straight-chain alkyl, in particular ethyl, n-propyl, n-butyl or n-pentyl and very particularly preferably n-propyl.
   The compound(s) of the formula XXX, in particular of the formula XXXa, is (are) preferably employed in the mixtures according to the invention in amounts of 1-15% by weight, particularly preferably 2-10% by weight.
- The medium additionally comprises one or more compounds of the following formula: 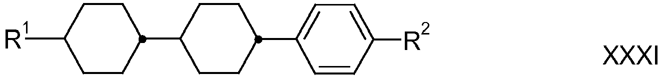 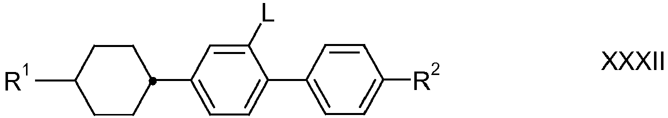 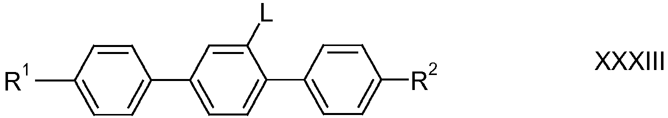 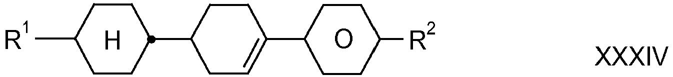 in which L, R¹ and R² have the meanings indicated above. R¹ and R² preferably denote alkyl, alkoxy, oxaalkyl, fluoroalkyl or alkenyl, each having up to 6 C atoms.
   Very preferably the mixture according to the invention comprises one or more compounds of the formula XXXIVa, 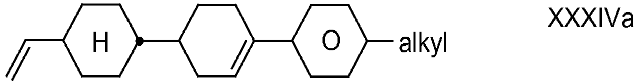 in which "alkyl" denotes a straight-chain alkyl radical having 1-6 C atoms in particular ethyl, propyl or pentyl.
   The compound(s) of the formula XXXIV, in particular of the formula XXXIVa, is (are) preferably employed in the mixtures according to the invention in amounts of 0.5-10% by weight, particularly preferably 1-5% by weight.

Further preferred LC media are selected from the following preferred embodiments, including any combination thereof:
- The medium comprises one or more compounds of the formula II, preferably selected from the group consisting of formula II1, II2 and II3, very preferably from formula II1 and II2. The individual concentration of each of these compounds is preferably from 2 to 15% by weight. The total concentration of these compounds is preferably from 5 to 25% by weight.
- The medium comprises one or more compounds of the formula III, preferably selected from the group consisting of formula III1, III4, III6, III16, III19 and III20, very preferably from the the group consisting of formula III1, III6, III16 and III20. The individual concentration of each of these compounds is preferably from 2 to 15% by weight. The total concentration of these compounds is preferably from 5 to 30% by weight.
- The medium comprises one or more compounds of the formula IV, preferably selected from formula IVa or IVc, very preferably from formula IVa1 or IVc1, most preferably of formula IVc1. The individual concentration of each of these compounds is preferably from 2 to 15% by weight. The total concentration of these compounds is preferably from 5 to 20% by weight.
- The medium comprises one or more compounds of the formula VI, preferably selected from formula VIb. The individual concentration of each of these compounds is preferably from 1 to 20% by weight. The total concentration of these compounds is preferably from 5 to 20% by weight.
- The medium comprises one or more compounds of the formula IX, preferably selected from formula IXa. The total concentration of these compounds is preferably from 1 to 20% by weight.
- The medium comprises one or more compounds of the formula X, preferably selected from formulae Xa, Xb and Xc, very preferably from formulae Xa1, Xb2 and Xc1. The total concentration of these compounds is preferably from 25 to 60% by weight.
- The medium comprises from 20 to 50% by weight of compounds of formula Xa, preferably of formula Xa1.
- The medium comprises from 5 to 20% by weight of compounds of formula Xb, preferably of formula Xb2.
- The medium comprises from 5 to 20% by weight of compounds of formula Xc, preferably of formula Xc1.
- The medium comprises one or more compounds of the formula XII, preferably of the formula XIIa or XIIb, very preferably of formula XIIa, most preferably of formula XIIa1. The concentration of these compounds is preferably from 2 to 15% by weight.
- The medium comprises one or more compounds of the formula XIV, preferably of the formula XIVd, very preferably of formula XIVd1. The concentration of these compounds is preferably from 2 to 10% by weight.
- The medium comprises one or more compounds of the formula XVIb, preferably of formula XVIb1, XVIb2 and/or XVI3. The concentration of these compounds is preferably from 2 to 15% by weight.
- The medium comprises one or more compounds of the formula XVIc, preferably of formula XVIc1, XVIc2 and/or XVIc3. The concentration of these compounds is preferably from 2 to 20% by weight.
- The medium comprises one or more compounds of the formula XVIg, preferably of the formula XVlg1 and/or XVIg2. The total concentration of these compounds is preferably from 5 to 25% by weight.
- The medium comprises one or more compounds selected from the group consisting of the formulae XVIIa, XVIIb and XVIIc, very preferably of formula XVIIa wherein L is H and of formula XVIIb wherein L is F. The total concentration of these compounds is preferably from 0.5 to 5% by weight.
- The medium comprises one or more compounds of the formula XX, preferably of the formula XXa. The concentration of these compounds is preferably from 2 to 10% by weight.
- The medium comprises one or more compounds of the formula XXI, preferably of the formula XXIa. The concentration of these compounds is preferably from 2 to 10% by weight.
- The medium comprises one or more compounds of the formula XXIII, preferably of the formula XXIIIa. The concentration of these compounds is preferably from 0.5 to 5% by weight.
- The medium comprises one or more compounds of the formula XXIX, preferably of the formula XXIXa. The concentration of these compounds is preferably from 2 to 10% by weight.
- The medium comprises one or more compounds of the formula XXX, preferably of the formula XXXa. The concentration of these compounds is preferably from 2 to 10% by weight.
- The medium comprises one or more compounds of the formula XXXI.. The concentration of these compounds is preferably from 2 to 10% by weight.
- The medium comprises one or more compounds of the formula XXXIV, preferably of the formula XXXIVa. The concentration of these compounds is preferably from 1 to 5% by weight.
- The medium comprises one or more compounds selected from the group consisting of the formulae Y1-2, Y1-10, Y2-2, Y2-10, Y3-6A, LY-4, B1 and B2.
- The medium comprises one or more compounds of formula I, one or more compounds selected from the group consisting of the formulae Y1, Y2 and Y3 or their subformulae, one or more compounds of formula B or its subformulae, one or more compounds selected from the group consisting of formulae IX, X and XIV or their subformulae, one or more compounds selected from the group consisting of formulae II, III, IV, VI, XX, XXIII and XXIX or their subformulae, and one or more compounds selected from the group consisting of the formulae XII, XVI, XVIIa, XVIIb, XVIIc, XXXI and XXXIV or their subformulae.
- The medium comprises one or more compounds of formula I, one or more compounds selected from the group consisting of the formulae Y1, Y2 and Y3 or their subformulae, one or more compounds of formula B or its subformulae, one or more compounds selected from the group consisting of formulae IXa, Xa, Xb and XIVd or their subformulae, one or more compounds selected from the group consisting of formulae II, III, IVc, VIb, XXa, XXIIIa and XXIXa or their subformulae, and one or more compounds selected from the group consisting of the formulae XIIb, XVIb, XVIc, XVIIa, XVIIb, XVIIc, XXXI and XXXIVa or their subformulae.
- Besides the compounds of the formulae I, Y and B, the medium comprises further compounds selected from the group of the compounds of the formula IV, IX, X, XII, XIV, XVI, XVIIa, XVIIb, XVIIc, XXI, XXIII, XXIX, XXX, XXXI and XXIV or their subformulae.
- The proportion of compounds of formula I or its subformulae in the medium is from 1 to 30%, very preferably from 2 to 25%, most preferably from 2 to 15% by weight.
- The proportion of compounds of the formulae Y and B in the mixture as a whole is from 2 to 25%, very preferably from 5 to 20%, most preferably from 8 to 20% by weight.
- The proportion of compounds of the formulae II, III, IV-VIII, XVIII-XXIII and XXVII-XXX in the mixture as a whole is 30 to 60% by weight.
- The proportion of compounds of the formulae IX-XV in the mixture as a whole is 40 to 70% by weight.
- The proportion of compounds of the formulae XIV, XVIIa-c and XXXI-XXXIV in the mixture as a whole is 0.5 to 15% by weight.

The term "alkyl" or "alkyl*" in this application encompasses straight-chain and branched alkyl groups having 1-6 carbon atoms, in particular the straight-chain groups methyl, ethyl, propyl, butyl, pentyl and hexyl. Groups having 2-5 carbon atoms are generally preferred.

The term "alkenyl" or "alkenyl*" encompasses straight-chain and branched alkenyl groups having 2-6 carbon atoms, in particular the straight-chain groups. Preferred alkenyl groups are C₂-C₇-1E-alkenyl, C₄-C₆-3E-alkenyl, in particular C₂-C₆-1E-alkenyl. Examples of particularly preferred alkenyl groups are vinyl, 1E-propenyl, 1E-butenyl, 1E-pentenyl, 1E-hexenyl, 3-butenyl, 3E-pentenyl, 3E-hexenyl, 4-pentenyl, 4Z-hexenyl, 4E-hexenyl and 5-hexenyl. Groups having up to 5 carbon atoms are generally preferred, in particular CH₂=CH, CH₃CH=CH.

The term "fluoroalkyl" preferably encompasses straight-chain groups having a terminal fluorine, i.e. fluoromethyl, 2-fluoroethyl, 3-fluoropropyl, 4-fluorobutyl, 5-fluoropentyl, 6-fluorohexyl and 7-fluoroheptyl. However, other positions of the fluorine are not excluded.

The term "oxaalkyl" or "alkoxy" preferably encompasses straight-chain radicals of the formula CₙH₂ₙ₊₁-O-(CH₂)ₘ, in which n and m each, independently of one another, denote 1 to 6. m may also denote 0. Preferably, n = 1 and m = 1-6 or m = 0 and n = 1-3.

Through a suitable choice of the meanings of R° and X°, the addressing times, the threshold voltage, the steepness of the transmission characteristic lines, etc., can be modified in the desired manner. For example, 1E-alkenyl radicals, 3E-alkenyl radicals, 2E-alkenyloxy radicals and the like generally result in shorter addressing times, improved nematic tendencies and a higher ratio between the elastic constants k₃₃ (bend) and k₁₁ (splay) compared with alkyl and alkoxy radicals. 4-Alkenyl radicals, 3-alkenyl radicals and the like generally give lower threshold voltages and lower values of k₃₃/k₁₁ compared with alkyl and alkoxy radicals. The mixtures according to the invention are distinguished, in particular, by high Δε values and thus have significantly faster response times than the mixtures from the prior art.

The optimum mixing ratio of the compounds of the above-mentioned formulae depends substantially on the desired properties, on the choice of the components of the above-mentioned formulae and on the choice of any further components that may be present.

Suitable mixing ratios within the range indicated above can easily be determined from case to case.

The total amount of compounds of the above-mentioned formulae in the liquid-crystalline media according to the invention is not crucial. The mixtures can therefore comprise one or more further components for the purposes of optimisation of various properties. However, the observed effect on the desired improvement in the properties of the medium is generally greater, the higher the total concentration of compounds of the above-mentioned formulae.

In a particularly preferred embodiment, the liquid-crystalline media according to the invention comprise compounds of the formulae IV to VIII (preferably IV and V) in which X° denotes F, OCF₃, OCHF₂, OCH=CF₂, OCF=CF₂ or OCF₂-CF₂H. A favourable synergistic action with the compounds of the formulae I, II and III results in particularly advantageous properties. In particular, mixtures comprising compounds of the formulae I, II and III are distinguished by their low threshold voltage.

The individual compounds of the above-mentioned formulae and the subformulae thereof which can be used in the liquid-crystalline media according to the invention are either known or can be prepared analogously to the known compounds.

The invention also relates to a process for the preparation of a liquid-crystalline medium as described above and below, by mixing one or more compounds of the formula I with one or more compounds of the formulae Y1, Y2 or Y3, one or more compounds of formula B, and one or more compounds selected from the group consisting of formulae II, III, IV, VI, IX, X, XIV, XII, XVI, XVIIa, XVIIb, XVIIc, XX, XXIII, XXIX, XXXI and XXXIV.

In another preferred embodiment of the present invention the liquid-crystalline medium additionally comprises one or more polymerisable compounds. The polymerisable compounds are preferably selected from formula M

R^{a}-B¹-(Z^{b}-B²)ₘ-R^{b} M

in which the individual radicals, on each occurrence identically or differently, and each, independently of one another, have the following meaning:
- R^{a} and R^{b}: P, P-Sp-, H, F, Cl, Br, I, -CN, -NO₂, -NCO, -NCS, -OCN, -SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where, if B¹ and/or B² contain a saturated C atom, R^{a} and/or R^{b} may also denote a radical which is spiro-linked to this saturated C atom,
wherein at least one of the radicals R^{a} and R^{b} denotes or contains a group P
or P-Sp-,
- P: a polymerisable group,
- Sp: a spacer group or a single bond,
- B¹ and B²: an aromatic, heteroaromatic, alicyclic or heterocyclic group, preferably having 4 to 25 ring atoms, which may also contain fused rings, and which is unsubstituted, or mono- or polysubstituted by L,
- Z^{b}: -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ or a single bond,
- R° and R⁰⁰: each, independently of one another, denote H or alkyl having 1 to 12 C atoms,
- m: denotes 0, 1, 2, 3 or 4,
- n1: denotes 1, 2, 3 or 4,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxy-carbonyloxy having 1 to 25 C atoms, in which, in addition, one or more H atoms may be replaced by F, Cl, P or P-Sp-,
- P and Sp: have the meanings indicated above,
- Y¹: denotes halogen,
- R^{x}: denotes P, P-Sp-, H, halogen, straight-chain, branched or cyclic alkyl having 1 to 25 C atoms, in which, in addition, one or more non-adjacent CH₂ groups may be replaced by -O-, -S-,-CO-,
-CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

Particularly preferred compounds of the formula I are those in which B¹ and B² each, independently of one another, denote 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicycle[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined above.

Particularly preferred compounds of the formula M are those in which B¹ and B² each, independently of one another, denote 1,4-phenylene, 1,3-phenylene, naphthalene-1,4-diyl or naphthalene-2,6-diyl,

Very preferred compounds of formula M are selected from the following formulae: 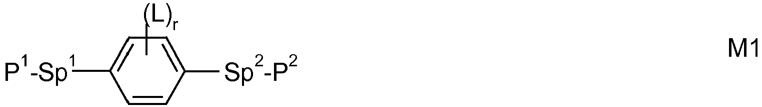 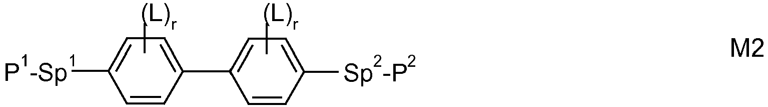 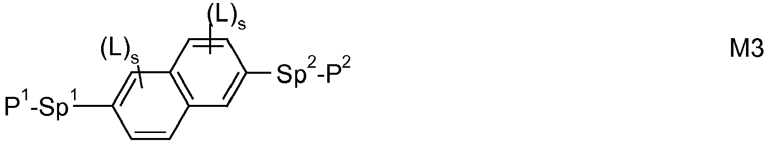 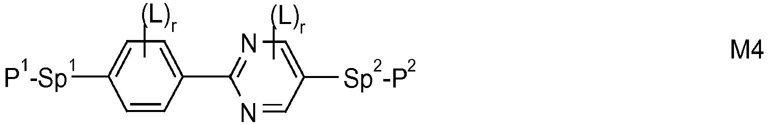 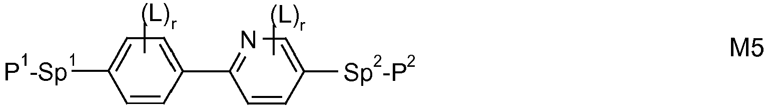 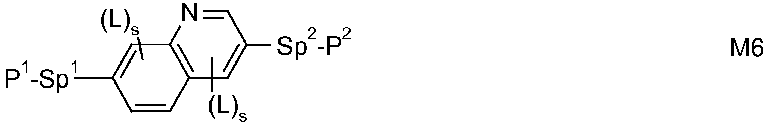 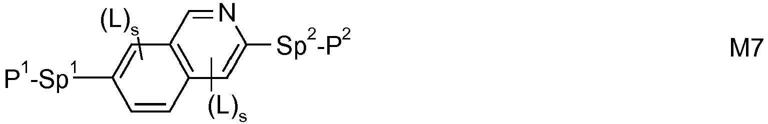 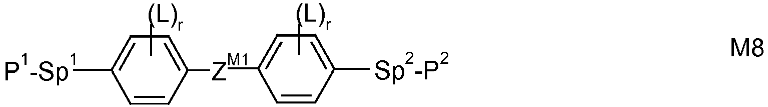 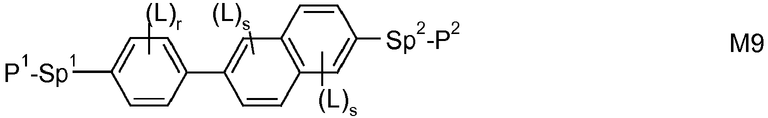 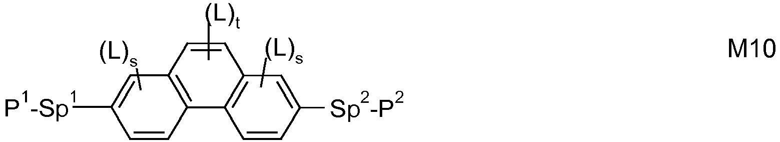 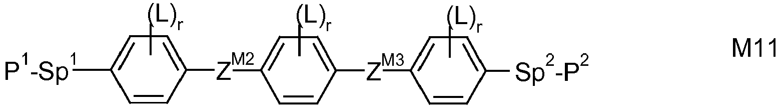 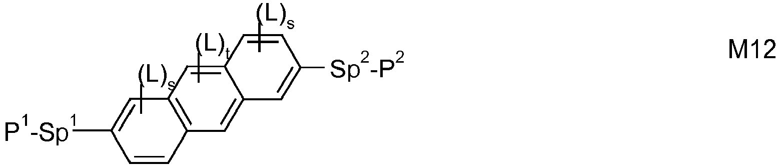 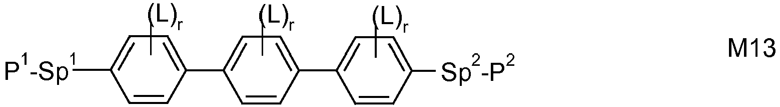 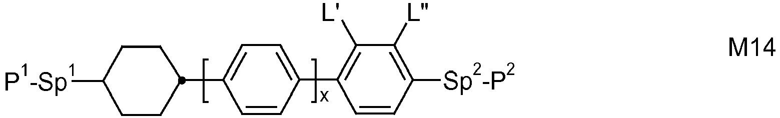 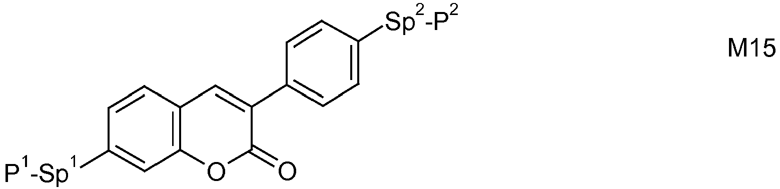 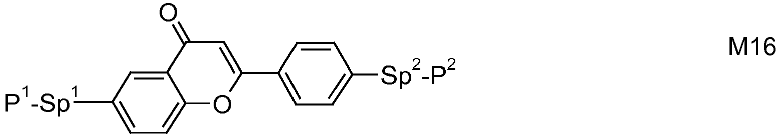 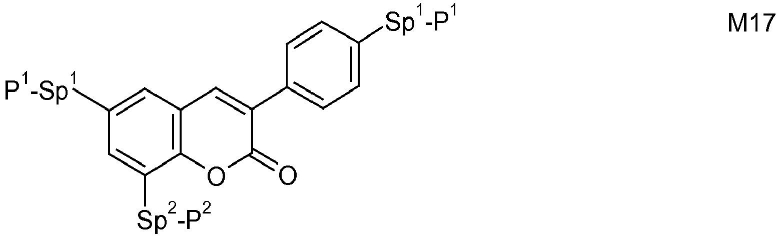 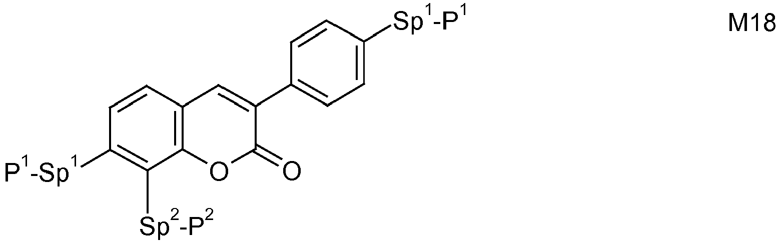 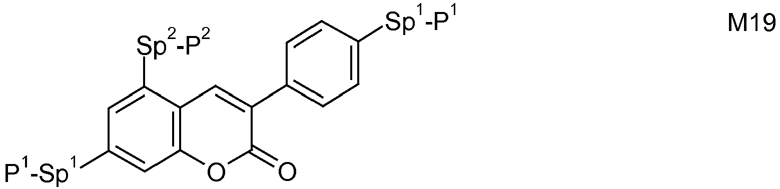 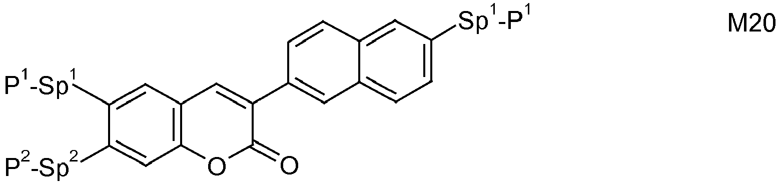 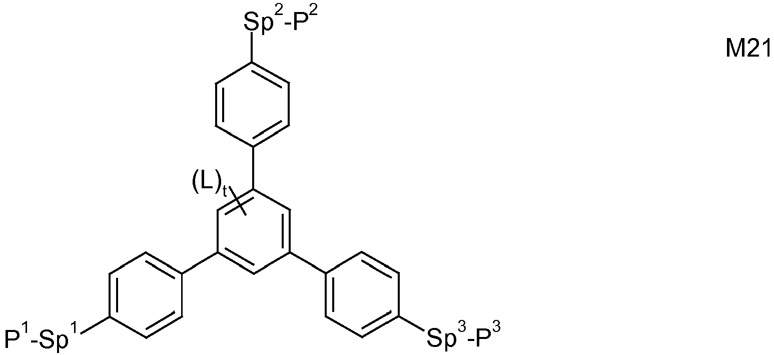 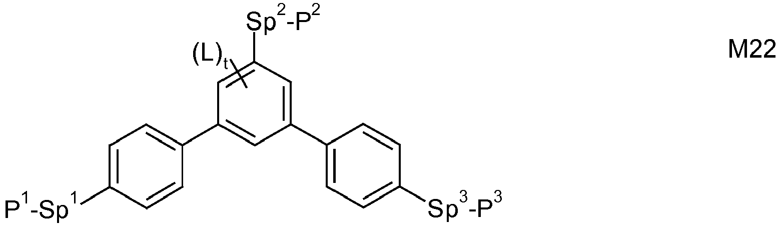 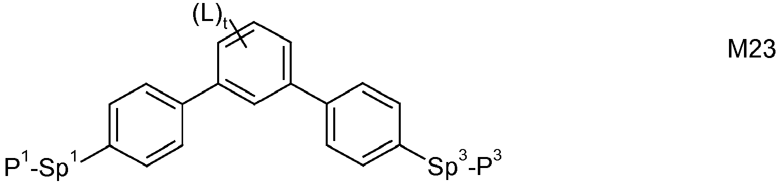 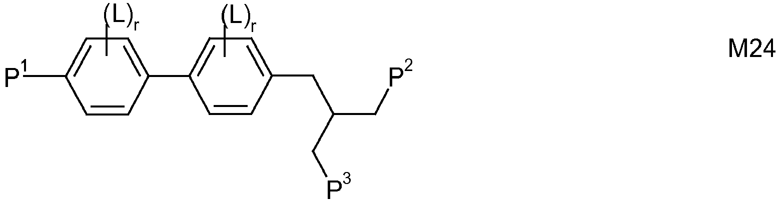 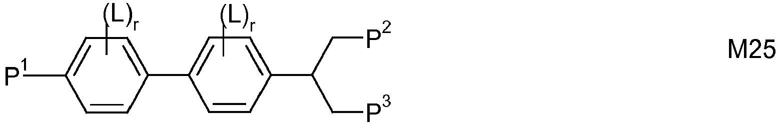 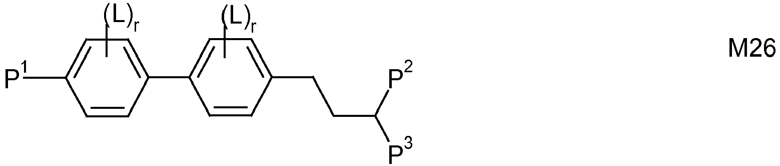 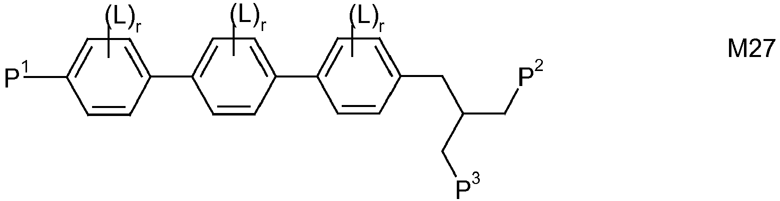 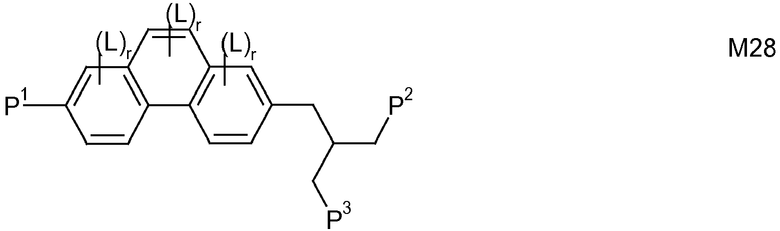 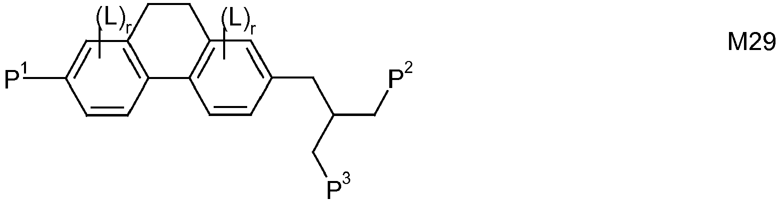 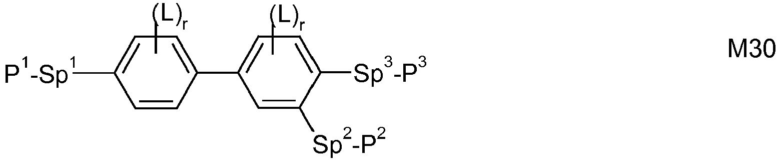 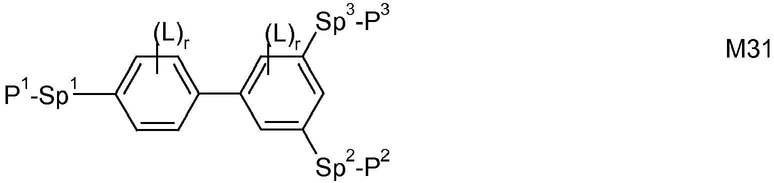 in which the individual radicals, on each occurrence identically or differently, and each, independently of one another, have the following meaning:
- P¹, P², P³: a polymerisable group, preferably selected from vinyloxy, acrylate, methacrylate, fluoroacrylate, chloroacrylate, oxetane and epoxy,
- Sp¹, Sp², Sp³: a single bond or a spacer group where, in addition, one or more of the radicals P¹-Sp¹-, P¹-Sp²- and P³-Sp³- may denote R^{aa}, with the proviso that at least one of the radicals P¹-Sp¹-, P²-Sp² and P³-Sp³- present is different from R^{aa}, preferably -(CH₂)ₚ₁-, -(CH₂)ₚ₁-O-, -(CH₂)ₚ₁-CO-O- or-(CH₂)ₚ₁-O-CO-O- bedeuten, wherein p1 is an integer from 1 to 12,
- R^{aa}: H, F, Cl, CN or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R°)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
- R⁰, R⁰⁰: H or alkyl having 1 to 12 C atoms,
- R^{y} and R^{z}: H, F, CH₃ or CF₃,
- X¹, X², X³: -CO-O-, -O-CO- or a single bond,
- Z^{M1}: -O-, -CO-, -C(R^{y}R^{z})- or -CF₂CF₂-,
- Z^{M2}, Z^{M3}: -CO-O-, -O-CO-, -CH₂O-, -OCH₂-, -CF₂O-, -OCF₂- or -(CH₂)ₙ-, where n is 2, 3 or 4,
- L: F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
- L', L": H, For Cl,
- r: 0, 1, 2, 3 or 4,
- s: 0, 1, 2 or 3,
- t: 0, 1 or 2,
- x: 0 or 1.

Especially preferred are compounds of formulae M2 and M13.

Further preferred are trireactive compounds M15 to M31, in particular M17, M18, M19, M22, M23, M24, M25, M30 and M31.

In the compounds of formulae M1 to M31 the group 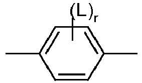 is preferably 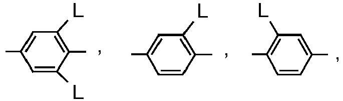 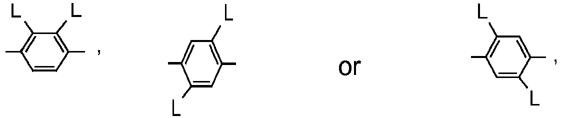 wherein L on each occurrence, identically or differently, has one of the meanings given above or below, and is preferably F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, Cl, CN, CH₃, C₂H₅, OCH₃, COCH₃, OCF₃ or P-Sp-, more preferably F, Cl, CH₃, OCH₃, COCH₃ oder OCF₃, especially F or CH₃.

Preferred compounds of formulae M1 to M31 are those wherein P¹, P² and P³ denote an acrylate, methacrylate, oxetane or epoxy group, very preferably an acrylate or methacrylate group.

Further preferred compounds of formulae M1 to M31 are those wherein Sp¹, Sp² and Sp³ are a single bond.

Further preferred compounds of formulae M1 to M31 are those wherein one of Sp¹, Sp² and Sp³ is a single bond and another one of Sp¹, Sp² and Sp³ is different from a single bond.

Further preferred compounds of formulae M1 to M31 are those wherein those groups Sp¹, Sp² and Sp³ that are different from a single bond denote -(CH₂)ₛ₁-X"-, wherein s1 is an integer from 1 to 6, preferably 2, 3, 4 or 5, and X" is X" is the linkage to the benzene ring and is -O-, -O-CO-, -CO-O-, -O-CO-O- or a single bond.

Particular preference is given to liquid-crystalline media comprising one, two or three polymerisable compounds of formula M, preferably selected from formulae M1 to M31.

Further preferably the liquid-crystalline media according to the present invention comprise one or more polymerisable compounds selected from Table E below.

Preferably the proportion of polymerisable compounds in the liquid-crystalline medium, preferably selected from formula M and Table E, is from 0.01 to 5%, very preferably from 0.05 to 1%, most preferably from 0.1 to 0.5%.

It was observed that the addition of one or more polymerisable compounds to the liquid-crystalline medium, like those selected from formula M and Table E, leads to advantageous properties like fast response times. Such a liquid-crystalline medium is especially suitable for use in PSA displays where it shows low image sticking, a quick and complete polymerisation, the quick generation of a low pretilt angle which is stable after UV exposure, a high reliability, high VHR value after UV exposure, and a high birefringence. By appropriate selection of the polymerisable compounds it is possible to increase the absorption of the liquid-crystalline medium at longer UV wavelengths, so that it is possible to use such longer UV wavelengths for polymerisation, which is advantageous for the display manufacturing process.

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Preferred groups P are selected from the group consisting of CH₂=CW¹-COO-, CH₂=CW¹-CO-, 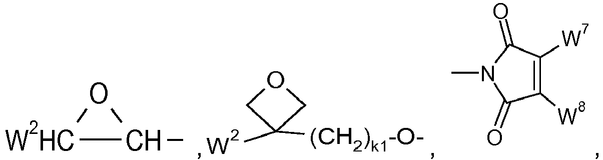 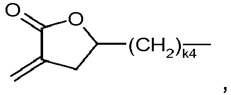 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above which are other than P-Sp-, k₁, k₂ and k₃ each, independently of one another, denote 0 or 1, k₃ preferably denotes 1, and k₄ denotes an integer from 1 to 10.

Very preferred groups P are selected from the group consisting of CH₂=CW¹-CO-O-, CH₂=CW¹-CO-, 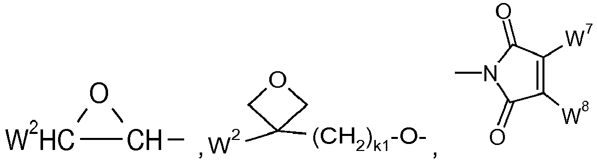 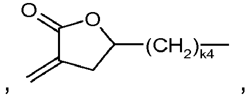 CH₂=CW²-O-, CH₂=CW²-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and k₃ each, independently of one another, denote 0 or 1, k₃ preferably denotes 1, and k₄ denotes an integer from 1 to 10.

Very particularly preferred groups P are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CH₂=CH)₂CH-O-CO-, (CH₂=CH)₂CH-O-,

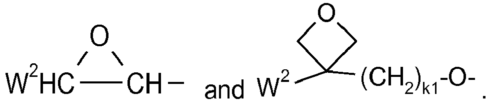

Further preferred polymerisable groups P are selected from the group consisting of vinyloxy, acrylate, methacrylate, fluoroacrylate, chloroacrylate, oxetane and epoxide, most preferably from acrylate and methacrylate.

If Sp is different from a single bond, it is preferably of the formula Sp"-X", so that the respective radical P-Sp- conforms to the formula P-Sp"-X"-, wherein
Sp" denotes alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by -O-, -S-, -NH-, -N(R⁰)-, - Si(R⁰R⁰⁰)-,
   -CO-, -CO-O-, -O-CO-, -O-CO-O-, -S-CO-, -CO-S-, -N(R⁰⁰)-CO-O-, -O-CO-N(R⁰)-, -N(R⁰)-CO-N(R⁰⁰)-, -CH=CH- or -C≡C- in such a way that O and/or S atoms are not linked directly to one another,
X" denotes -O-, -S-, -CO-, -CO-O-, -O-CO-, -O-CO-O-, -CO-N(R⁰)-, -N(R⁰)-CO-, -N(R⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- or a single bond,
R° and R°° each, independently of one another, denote H or alkyl having 1 to 20 C atoms, and
Y² and Y³ each, independently of one another, denote H, F, Cl or CN.
X" is preferably -O-, -S-, -CO-, -COO-, -OCO-, -O-COO-, -CO-NR⁰-, -NR⁰-CO-, -NR⁰-CO-NR⁰⁰- or a single bond.

Typical spacer groups Sp and -Sp"-X"- are, for example, -(CH₂)ₚ₁-, - (CH₂CH₂O)_{q1}-CH₂CH₂-, -CH₂CH₂-S-CH₂CH₂-, -CH₂CH₂-NH-CH₂CH₂- or - (SiR⁰R⁰⁰-O)ₚ₁-, in which p1 is an integer from 1 to 12, q1 is an integer from 1 to 3, and R° and R°° have the meanings indicated above.

Particularly preferred groups Sp and -Sp"-X"- are -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methylimino-ethylene, 1-methylalkylene, ethenylene, propenylene and butenylene.

For the production of PSA displays, the polymerisable compounds contained in the liquid-crystalline medium are polymerised or crosslinked (if one compound contains two or more polymerisable groups) by in-situ polymerisation in the liquid-crystalline medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

The combination of compounds of the preferred embodiments mentioned above with the polymerised compounds described above causes low threshold voltages, low rotational viscosities and very good low-temperature stabilities in the liquid-crystalline media according to the invention at the same time as constantly high clearing points and high VHR values.

The use of liquid-crystalline media containing polymerisable compounds allows the rapid establishment of a particularly low pretilt angle in PSA displays. In particular, the liquid-crystalline media exhibit significantly shortened response times, in particular also the grey-shade response times, in PSA displays compared with the media from the prior art.

Preference is generally given to liquid-crystalline media which have a nematic liquid-crystalline phase, and preferably have no chiral liquid crystal phase.

The invention also relates to the use of a liquid-crystalline medium according to the present invention as described above and below for electro-optical purposes, in particular for the use is in shutter glasses, for 3D applications, in TN, PS-TN, STN, TN-TFT, OCB, IPS, PS-IPS, FFS, HB-FFS, PS-FFS, positive VA and positive PS-VA displays, and to electro-optical displays, in particular of the aforementioned types, containing a liquid-crystalline medium according to the present invention as described above and below, in particular a TN, PS-TN, STN, TN-TFT, OCB, IPS, PS-IPS, FFS, HB-FFS, PS-FFS, positive VA (vertically aligned) or positive PS-VA display.

The invention also relates to electro-optical displays, such as, for example, STN or MLC displays, having two plane-parallel outer plates, which, together with a frame, form a cell, integrated non-linear elements for switching individual pixels on the outer plates, and a nematic liquid-crystal mixture having positive dielectric anisotropy and high specific resistance located in the cell, wherein the a nematic liquid-crystal mixture is a liquid-crystalline medium according to the present invention as described above and below.

The liquid-crystalline media according to the invention enable a significant broadening of the available parameter latitude. The achievable combinations of clearing point, viscosity at low temperature, thermal and UV stability and high optical anisotropy are far superior to previous materials from the prior art.

In particular, the combination of compounds of formula I with compounds of formula Y and/or B, and additionally with compounds selected from formulae II-XXXIV or their subformulae, leads to liquid-crystalline media which show a moderate positive dielectric anisotropy and at the same time an increased dielectric constant ε_{⊥} perpendicular to the longitudinal axes of the liquid-crystalline molecules, while maintaining a low rotational viscosity and a low value of the ratio γ₁ /K₁₁,. This enables liquid-crystalline displays, especially of the HB-FFS, FFS and IPS mode, with high brightness and transmission and low response times.

The liquid-crystalline media according to the invention are suitable for mobile applications and TFT applications, such as, for example, mobile telephones and PDAs. Furthermore, the liquid-crystalline media according to the invention are particularly suitably for use in FFS, HB-FFS and IPS displays based on dielectrically positive liquid crystals.

The liquid-crystalline media according to the invention, while retaining the nematic phase down to -20°C and preferably down to -30°C, particularly preferably down to -40°C, and the clearing point ≥ 75°C, preferably ≥ 80°C, at the same time allow rotational viscosities γ₁ of ≤ 110 mPa·s, particularly preferably ≤ 100 mPa·s, to be achieved, enabling excellent MLC displays having fast response times to be achieved. The rotational viscosities are determined at 20°C.

The dielectric anisotropy Δε of the liquid-crystalline media according to the invention at 20°C and 1kHz is preferably ≥ +1.5, very preferably from +2 to +3,
The birefringence Δn of the liquid-crystalline media according to the invention at 20°C is preferably from 0.08 to 0.12, very preferably from 0.09 to 0.11.

The rotational viscosity γ₁ of the liquid-crystalline media according to the invention is preferably ≤ 80 mPa s, more preferably ≤ 70 mPa s, very preferably ≤ 60 mPa s.

The ratio γ₁/K₁₁ (wherein γ₁ is the rotational viscosity γ₁ and K₁₁ is the elastic constant for splay deformation) of the liquid-crystalline media according to the invention is preferably ≤ 4.5 mPa·s/pN, very preferably ≤ 4.2 mPa·s/pN, most preferably ≤ 4.0 mPa·s/pN.

The nematic phase range of the liquid-crystalline media according to the invention preferably has a width of at least 90°, more preferably of at least 100 °C, in particular at least 110°. This range preferably extends at least from -25° to +80°C.

It goes without saying that, through a suitable choice of the components of the liquid-crystalline media according to the invention, it is also possible for higher clearing points (for example above 100°C) to be achieved at higher threshold voltages or lower clearing points to be achieved at lower threshold voltages with retention of the other advantageous properties. At viscosities correspondingly increased only slightly, it is likewise possible to obtain liquid-crystalline media having a higher Δε and thus low thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975], where, besides particularly favourable electro-optical properties, such as, for example, high steepness of the characteristic line and low angle dependence of the contrast (German patent 30 22 818), lower dielectric anisotropy is sufficient at the same threshold voltage as in an analogous display at the second minimum. This enables significantly higher specific resistance values to be achieved using the mixtures according to the invention at the first minimum than in the case of liquid-crystalline media comprising cyano compounds. Through a suitable choice of the individual components and their proportions by weight, the person skilled in the art is able to set the birefringence necessary for a prespecified layer thickness of the MLC display using simple routine methods.

Measurements of the voltage holding ratio (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] have shown that liquid-crystalline media according to the invention comprising compounds of the formulae ST-1, ST-2, RV, IA and IB exhibit a significantly smaller decrease in the HR on UV exposure than analogous mixtures comprising cyanophenylcyclohexanes of the formula 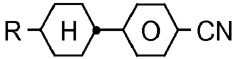 or esters of the formula 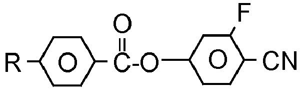 instead of the compounds of the formulae I ST-1, ST-2, RV, IA and IB.

The light stability and UV stability of the liquid-crystalline media according to the invention are considerably better, i.e. they exhibit a significantly smaller decrease in the HR on exposure to light, heat or UV.

The construction of the MLC display according to the invention from polarisers, electrode base plates and surface-treated electrodes corresponds to the usual design for displays of this type. The term usual design is broadly drawn here and also encompasses all derivatives and modifications of the MLC display, in particular including matrix display elements based on poly-Si TFTs or MIM.

A significant difference between the displays according to the invention and the hitherto conventional displays based on the twisted nematic cell consists, however, in the choice of the liquid-crystal parameters of the liquid-crystal layer.

The liquid-crystalline media which can be used in accordance with the invention are prepared in a manner conventional per se, for example by mixing one or more compounds of Claim 1 with one or more compounds of the formulae II-XXXIV or with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

The liquid-crystalline media may also comprise further additives known to the person skilled in the art and described in the literature, such as, for example, polymerisation initiators, inhibitors, surface-active substances, light stabilisers, antioxidants, e.g. BHT, TEMPOL, microparticles, free-radical scavengers, nanoparticles, etc. For example, 0-15% of pleochroic dyes or chiral dopants can be added. Suitable stabilisers and dopants are mentioned below in Tables C and D.

In a preferred embodiment the liquid-crystalline media contain one or more chiral dopants, preferably in a concentration from 0.01 to 1% by weight, very preferably from 0.05 to 0.5% by weight. The chiral dopants are preferably selected from the group consisting of compounds from Table B below, very preferably from the group consisting of R- or S-1011, R- or S-2011, R- or S-3011, R- or S-4011, and R- or S-5011.

In another preferred embodiment the liquid-crystalline media contain a racemate of one or more chiral dopants, which are preferably selected from the chiral dopants mentioned in the previous paragraph.

In another preferred embodiment of the present invention the liquid-crystalline media contain one or more further stabilisers, preferably selected from Table D, very preferably of the following formula 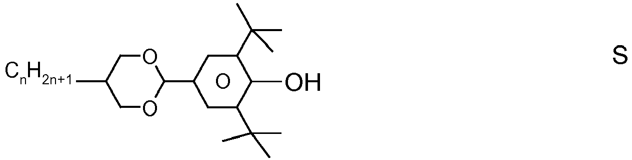 wherein n is an integer from 1 to 6, preferably 3.

Preferably the proportion of stabilisers, like those of formula S, in the liquid-crystalline medium is from 10 to 500 ppm,very preferably from 20 to 100 ppm.

In another preferred embodiment the LC medium according to the present invention contains a self-aligning (SA) additive, preferably in a concentration of 0.1 to 2.5 %. An LC medium according to this preferred embodiment is especially suitable for use in polymer stabilised SA-FFS or SA-HB-FFS displays.

In a preferred embodiment the SA-FFS or SA-HB-FFS display according to the present invention does not contain a polyimide alignment layer. In another preferred embodiment the SA-FFS or SA-HB-FFS display according to preferred embodiment contains a polyimide alignment layer.

Preferred SA additives for use in this preferred embodiment are selected from compounds comprising a mesogenic group and a straight-chain or branched alkyl side chain that is terminated with one or more polar anchor groups selected from hydroxy, carboxy, amino or thiol groups.

Further preferred SA additives contain one or more polymerisable groups which are attached, optionally via spacer groups, to the mesogenic group. These polymerisable SA additives can be polymerised in the LC medium under similar conditions as applied for the RMs in the PSA process.

Suitable SA additives to induce homeotropic alignment, especially for use in SA-VA mode displays, are disclosed for example in US 2013/0182202 A1, US 2014/0838581 A1, US 2015/0166890 A1 and US 2015/0252265 A1.

In another preferred embodiment an LC medium or a polymer stabilised SA-FFS or SA-HB-FFS display according to the present invention contains one or more self-aligning additives selected from Table F below.

Furthermore, it is possible to add to the liquid-crystalline media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

In the present application and in the examples below, the structures of the liquid-crystal compounds are indicated by means of acronyms, the transformation into chemical formulae taking place in accordance with Table A. All radicals CₙH₂ₙ₊₁ and CₘH₂ₘ₊₁ are straight-chain alkyl radicals having n and m C atoms respectively; n, m and k are integers and preferably denote 0, 1, 2, 3, 4, 5, 6, 7, 8, 9, 10, 11 or 12. The coding in Table B is self-evident. In Table A, only the acronym for the parent structure is indicated. In individual cases, the acronym for the parent structure is followed, separated by a dash, by a code for the substituents R^{1*}, R^{2*}, L^{1*} and L^{2*}:

| Code for R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Preferred mixture components are shown in Tables A and B.

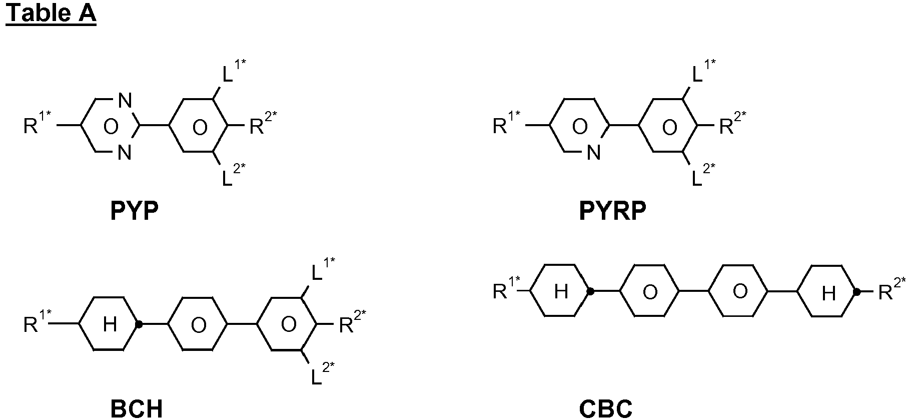

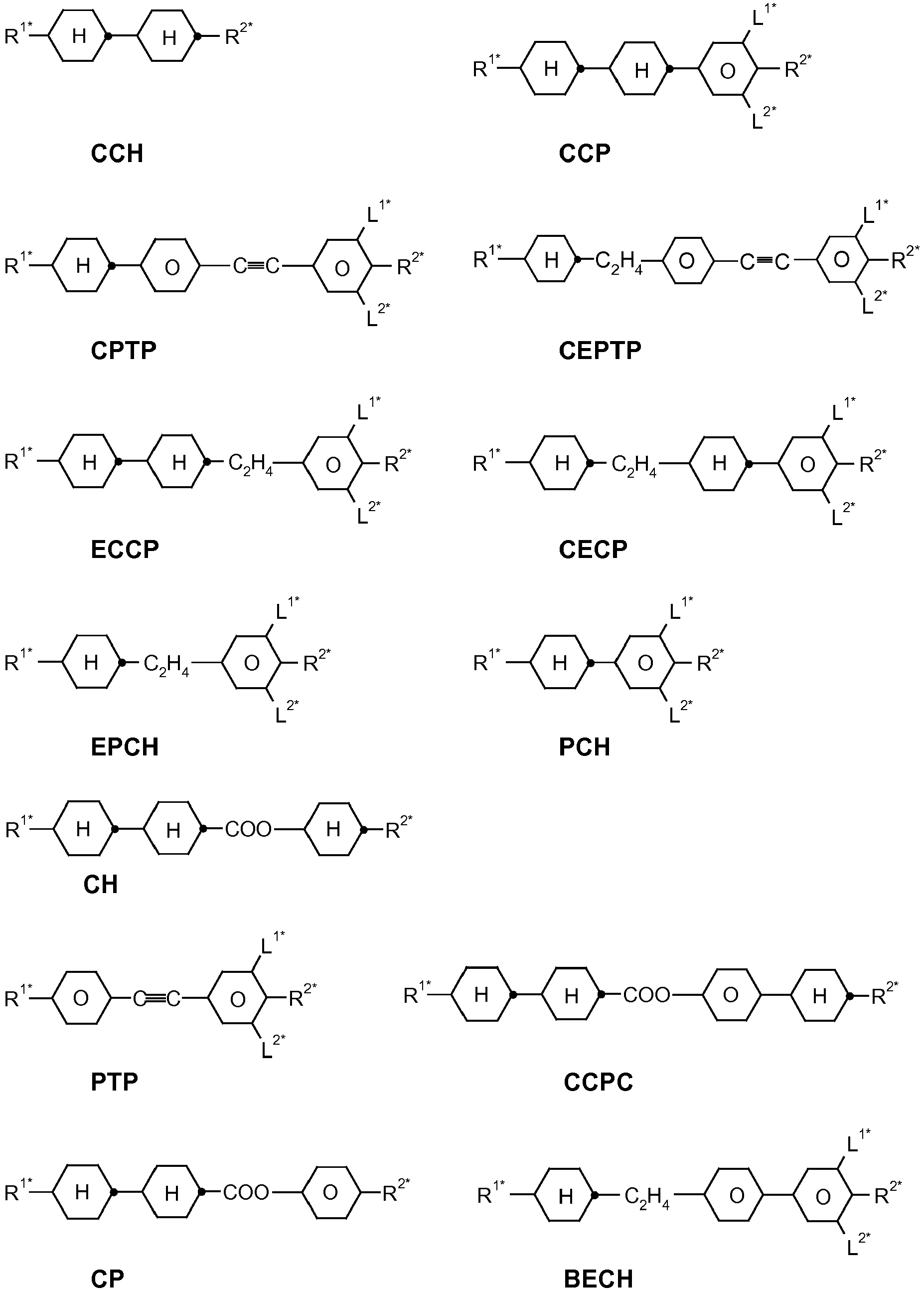

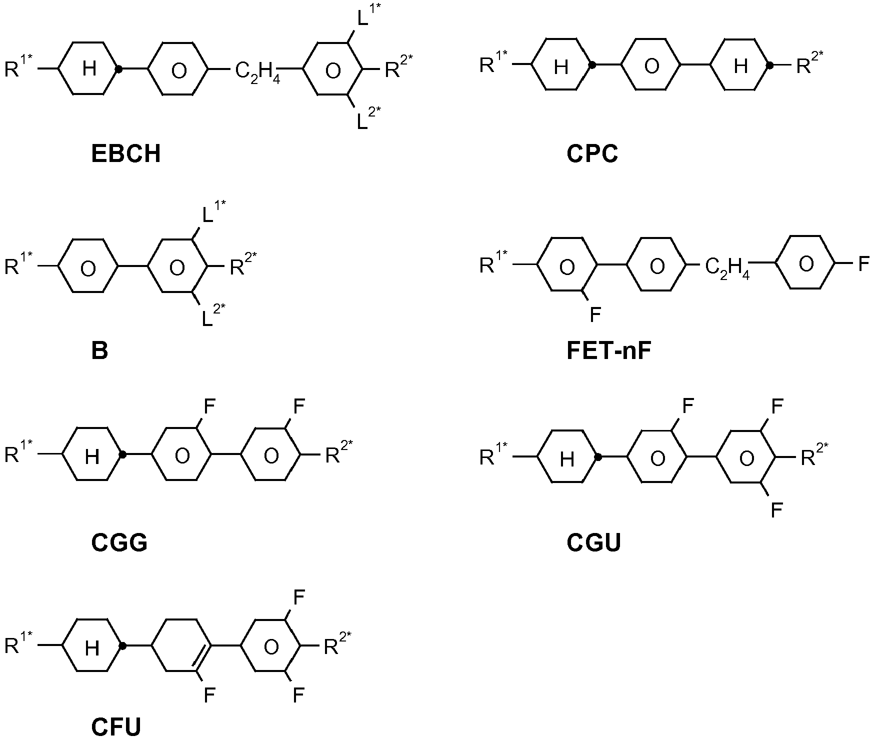

**Table B**

| In the following formulae, n and m each, independently of one another, denote 0, 1, 2, 3, 4, 5, 6, 7, 8, 9, 10, 11 or 12, in particular 2, 3, 5, furthermore 0, 4, 6. |
|---|
| 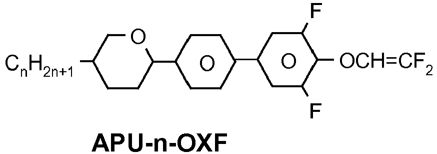 |
| 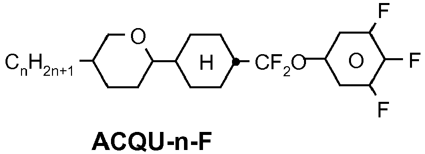 |
| 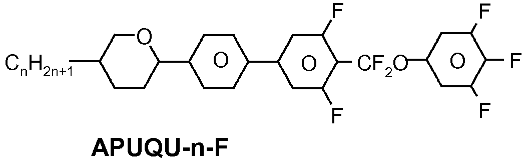 |
| 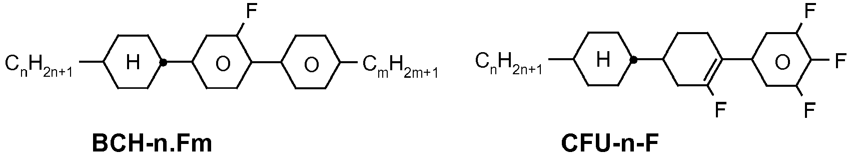 |
| 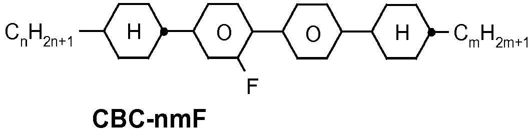 |
| 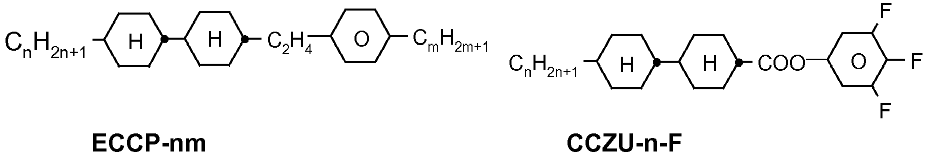 |
| 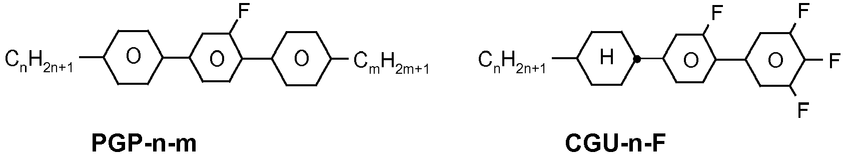 |
| 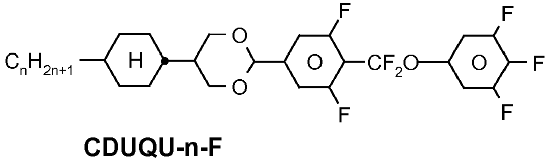 |
| 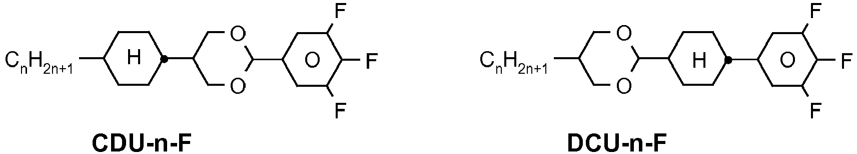 |
| 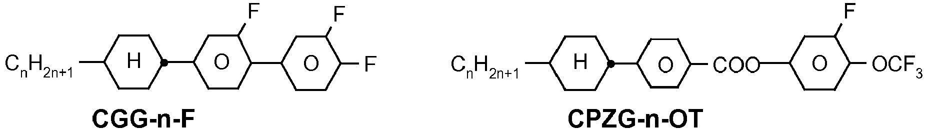 |
| 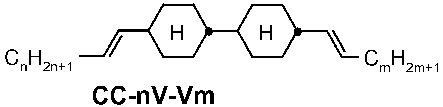 |
| 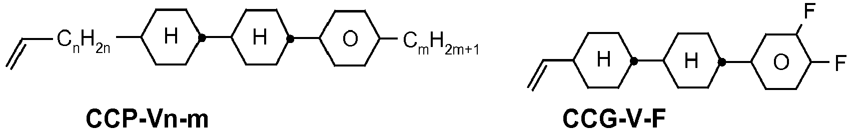 |
| 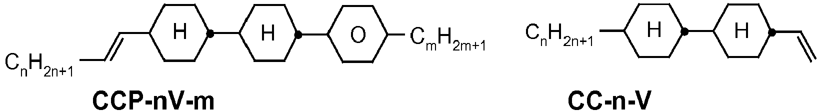 |
| 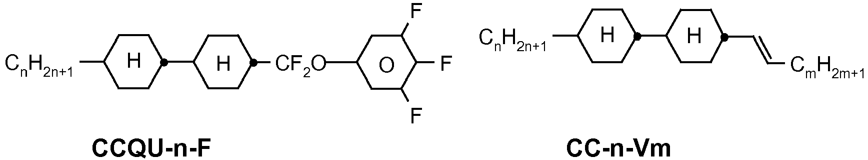 |
| 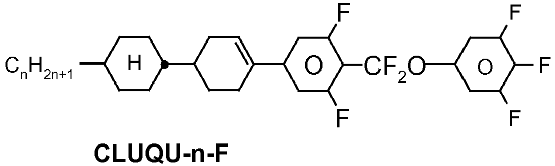 |
| 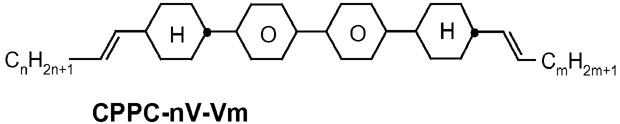 |
| 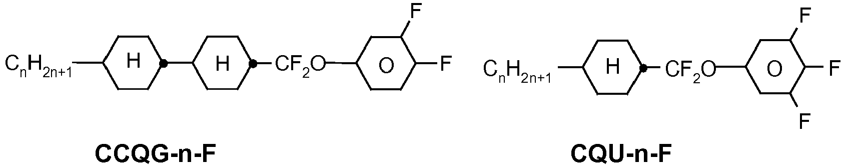 |
| 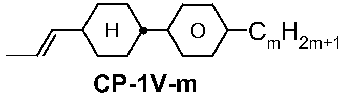 |
| 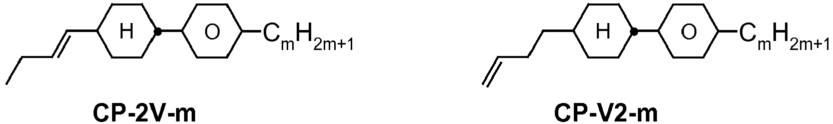 |
| 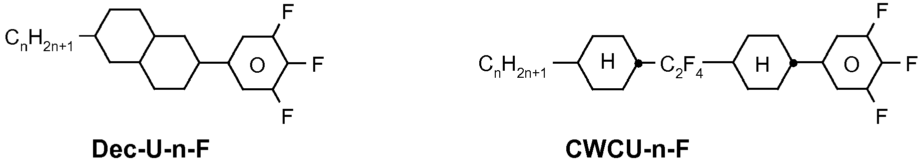 |
| 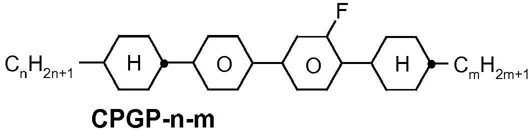 |
| 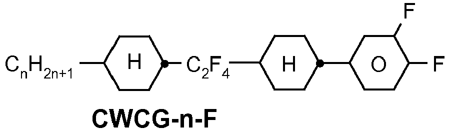 |
| 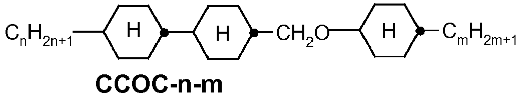 |
| 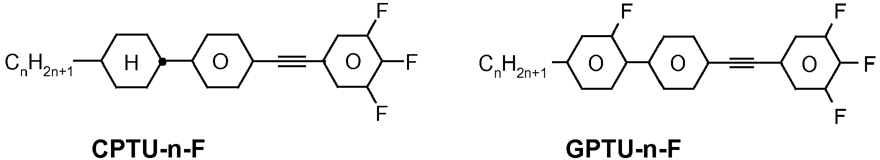 |
| 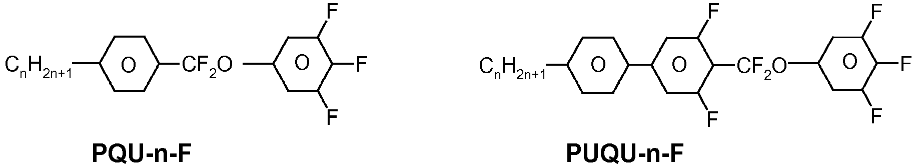 |
| 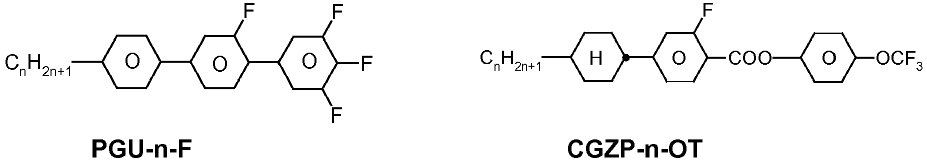 |
| 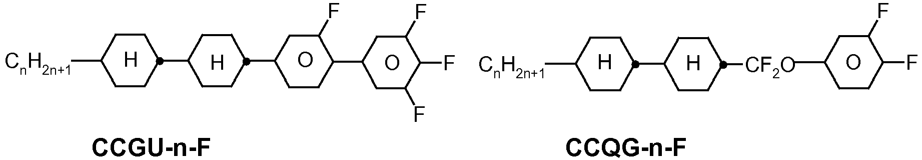 |
| 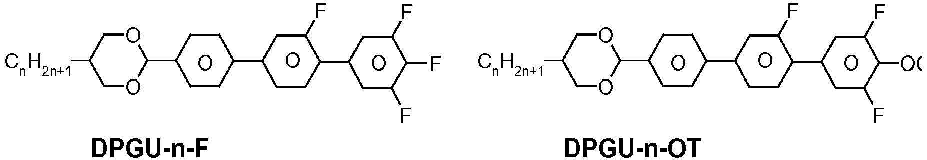 |
| 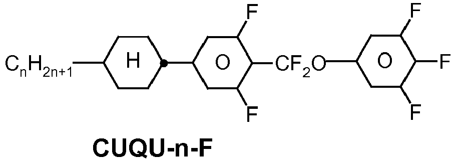 |
| 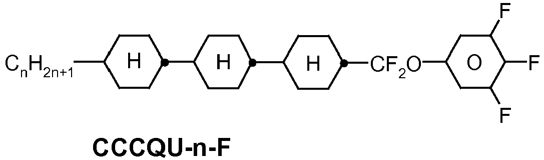 |
| 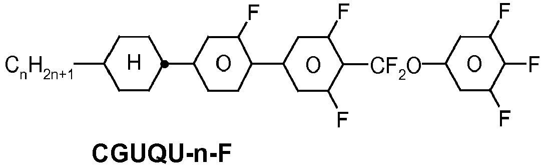 |
| 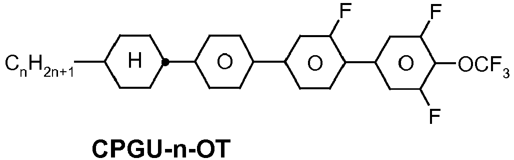 |
| 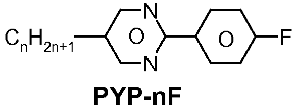 |
| 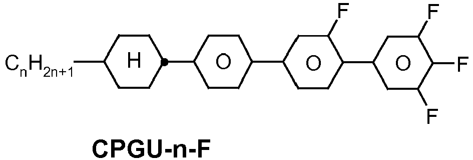 |
| 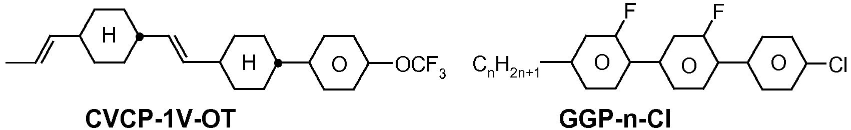 |
| 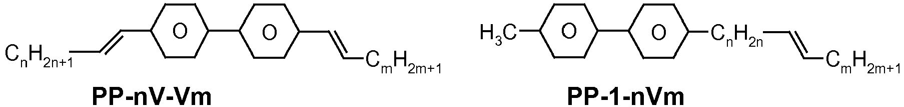 |
| 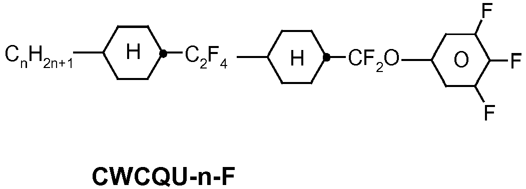 |
| 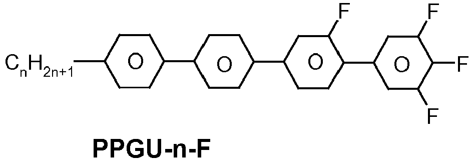 |
| 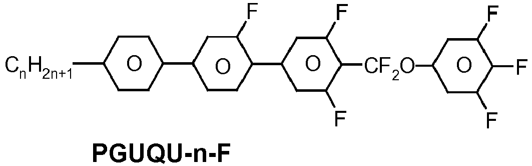 |
| 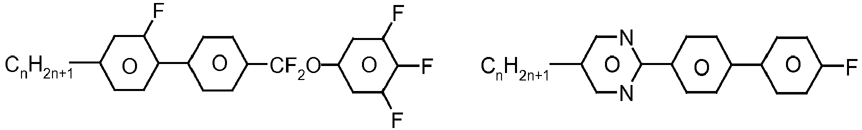 |
| 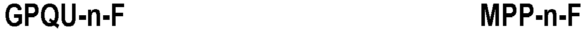 |
| 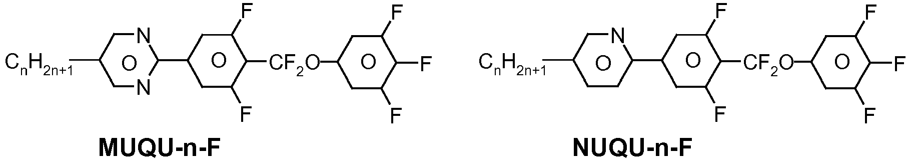 |
| 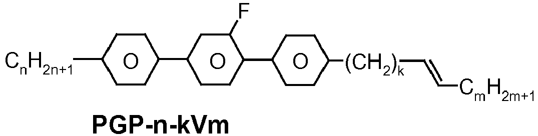 |
| 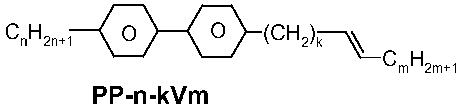 |
| 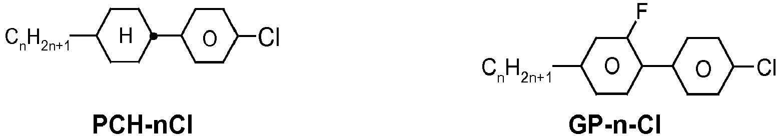 |
| 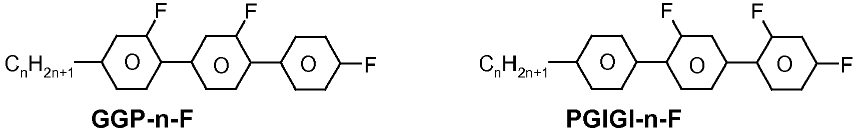 |
| 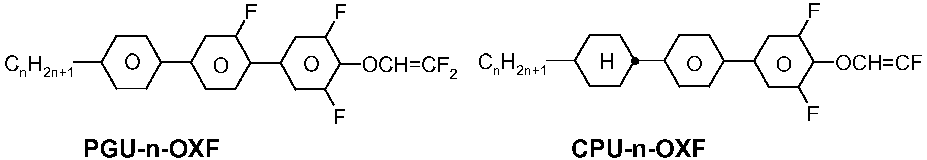 |
| 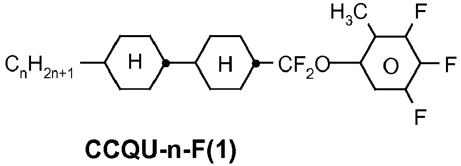 |
| 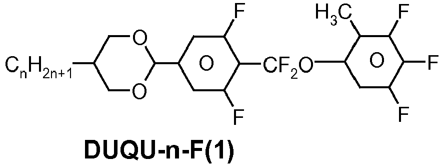 |
| 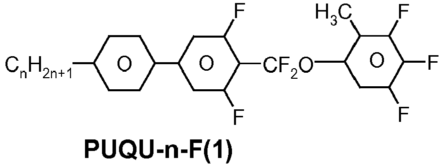 |
| 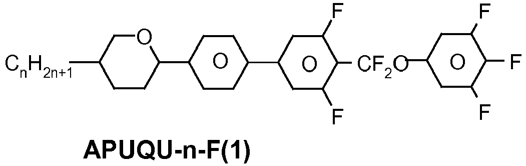 |
| 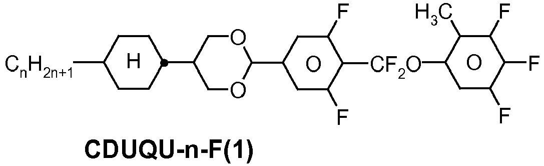 |
| 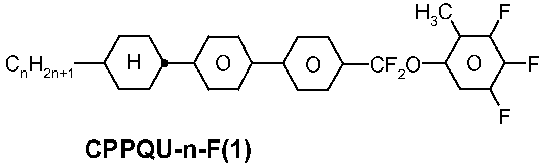 |
| 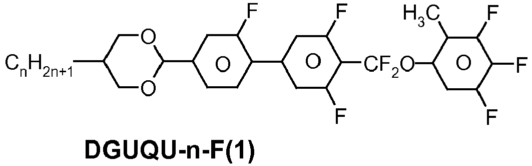 |
| 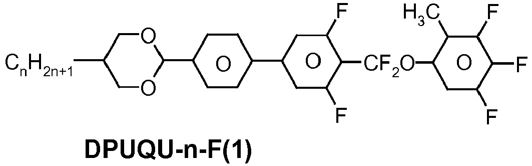 |
| 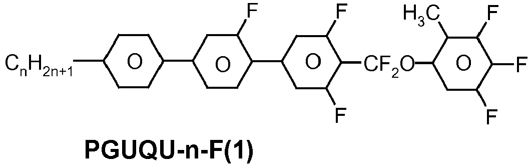 |
| 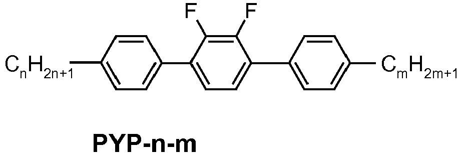 |

Particular preference is given to liquid-crystalline media which, besides the compounds of the formulae IA, IIA, IB and IIB, comprise at least one, two, three, four or more compounds from Table B.

**Table C**

| Table C indicates possible dopants which are generally added to the liquid-crystalline media according to the invention. The liquid-crystalline media preferably comprise 0-10% by weight, in particular 0.01-5% by weight and particularly preferably 0.01-3% by weight of dopants. |
|---|
| 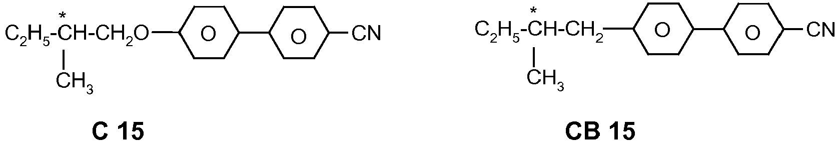 |
| 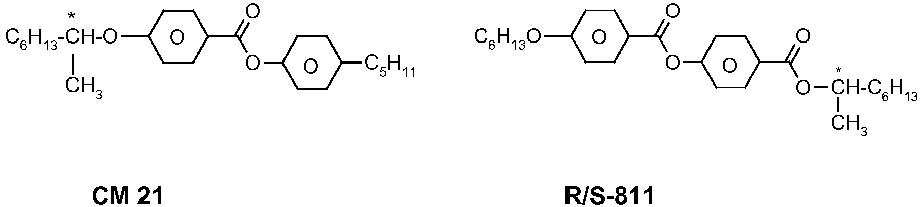 |
| 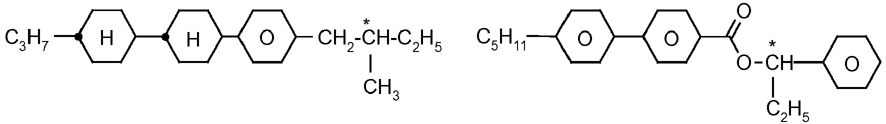 |
| 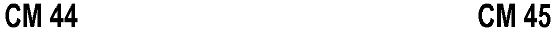 |
| 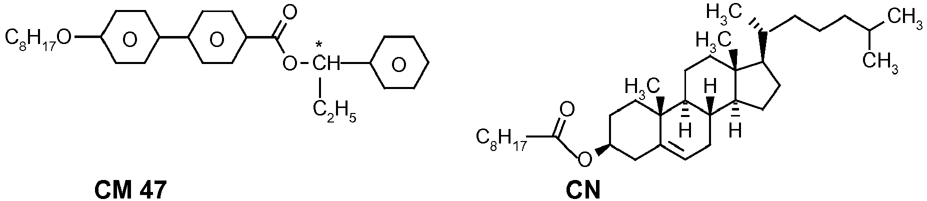 |
| 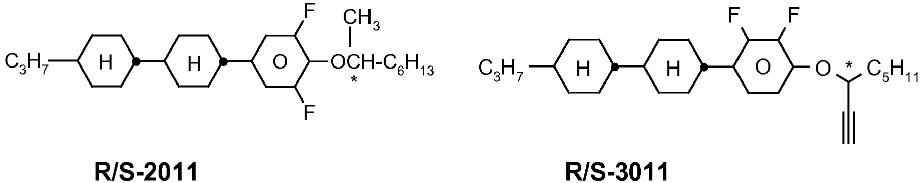 |
| 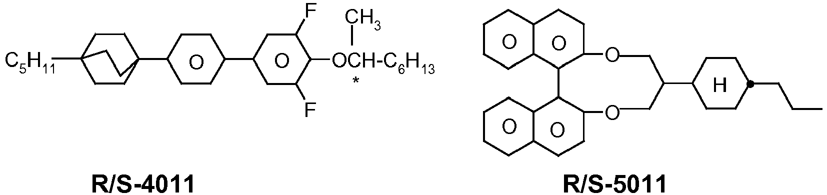 |
| 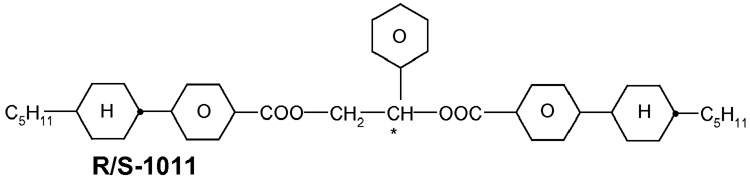 |

**Table D**

| Stabilisers, which can additionally be added, for example, to the liquid-crystalline media according to the invention in amounts of 0-10% by weight, are mentioned below. |
|---|
| 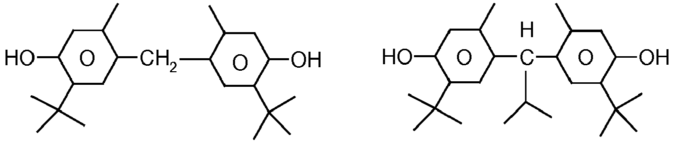 |
| 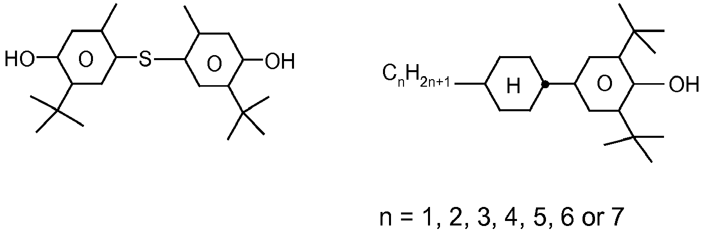 |
| 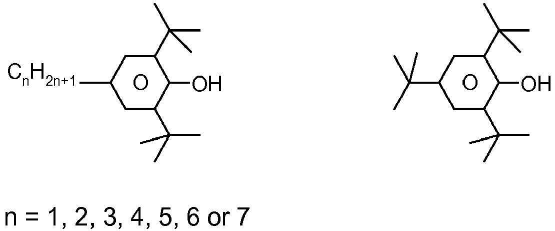 |
| 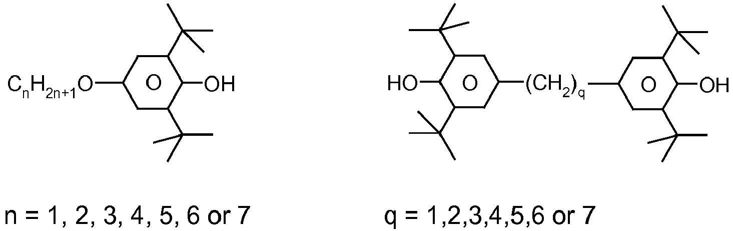 |
| 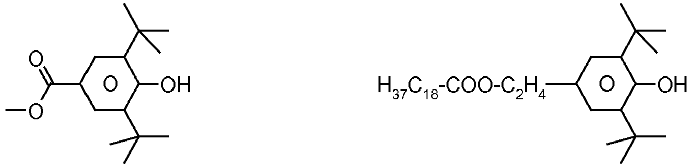 |
| 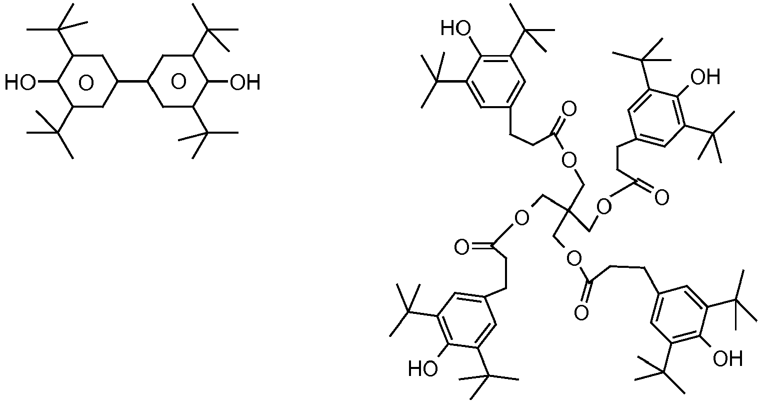 |
| 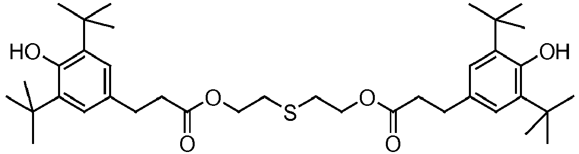 |
| 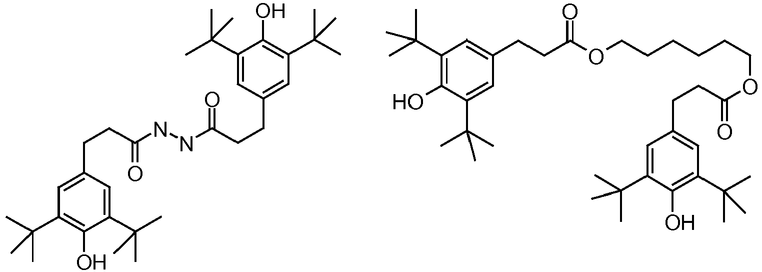 |
| 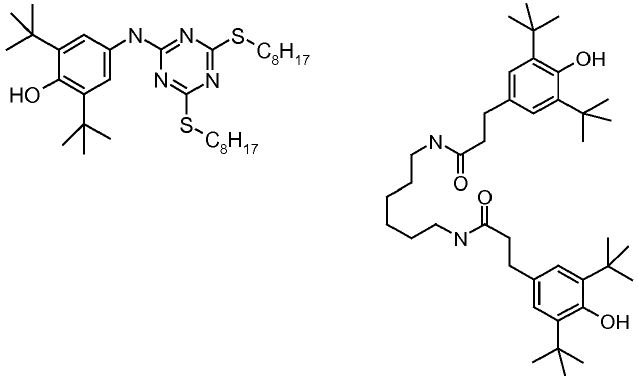 |
| 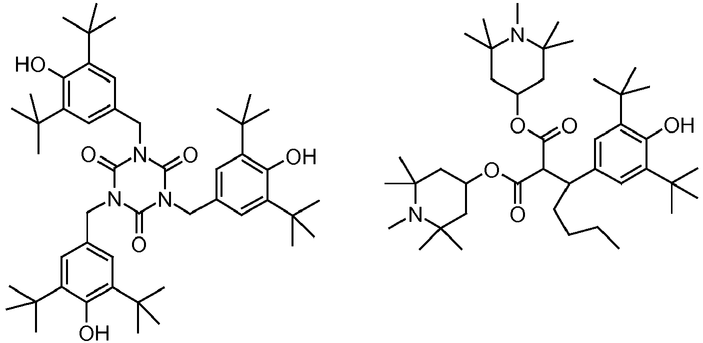 |
| 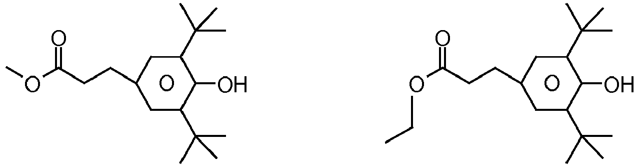 |
| 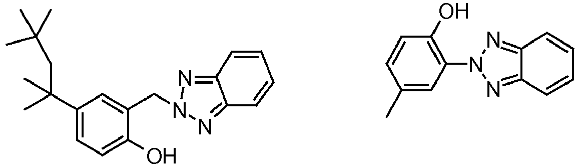 |
| 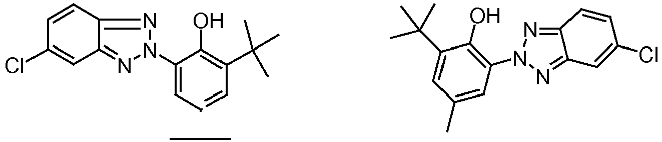 |
| 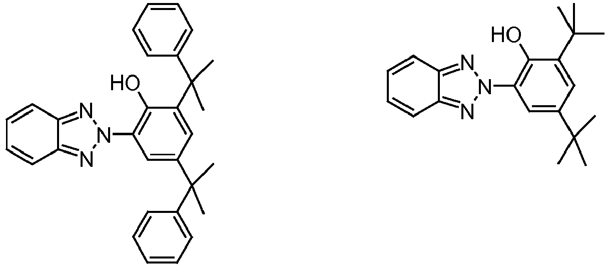 |
| 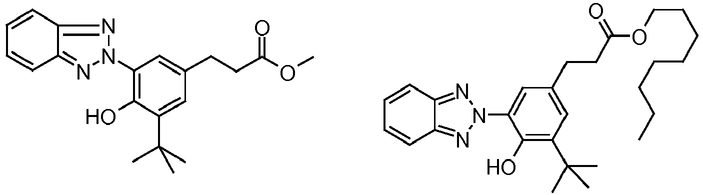 |
| 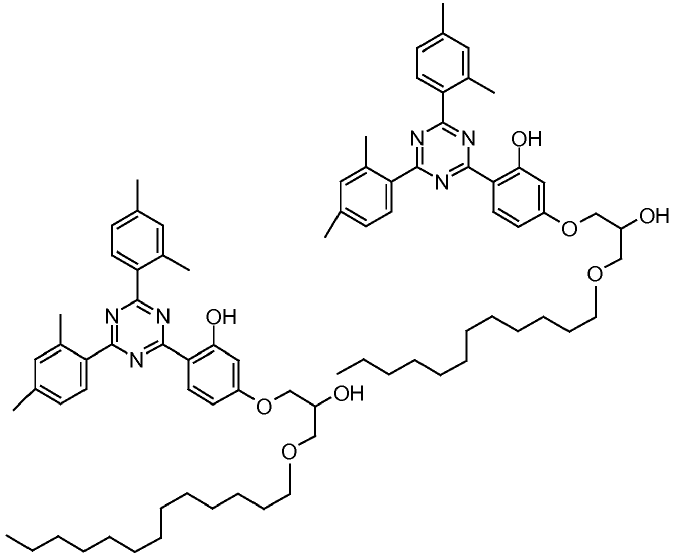 |
| 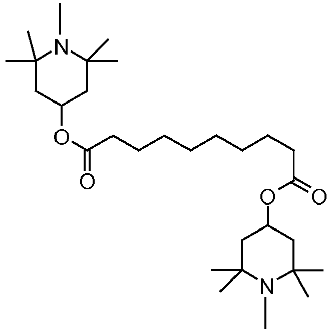 |
| 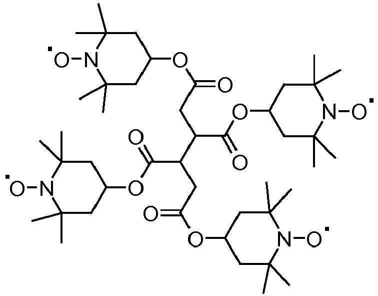 |
| 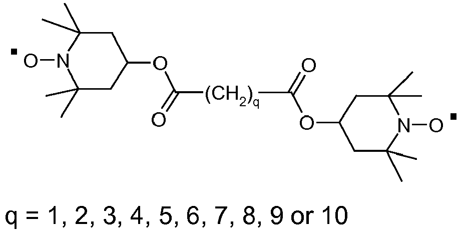 |

**Table E**

| Table E shows illustrative reactive mesogenic compounds (RMs) which can be used in the liquid-crystalline media in accordance with the present invention. |
|---|
| |
| 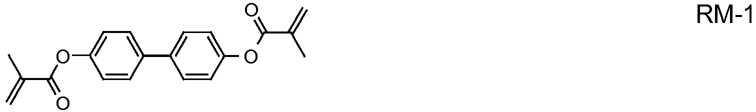 |
| 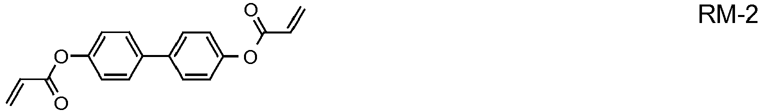 |
| 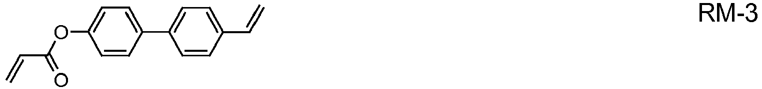 |
| 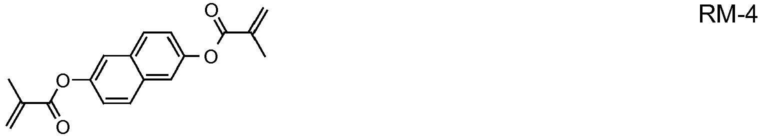 |
| 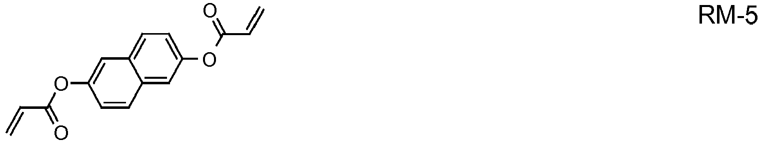 |
| 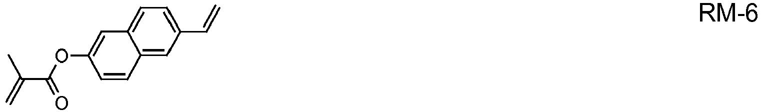 |
| 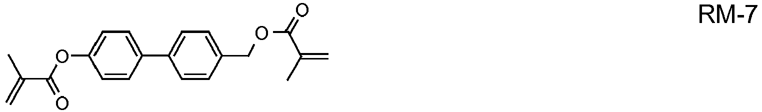 |
| 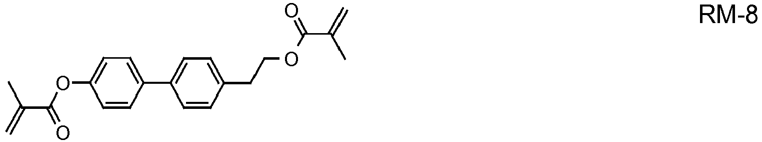 |
| 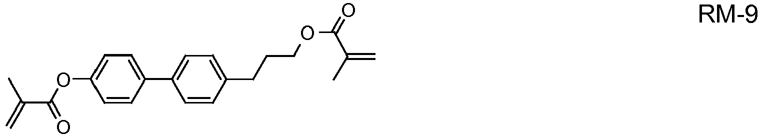 |
| 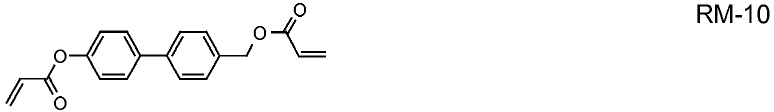 |
| 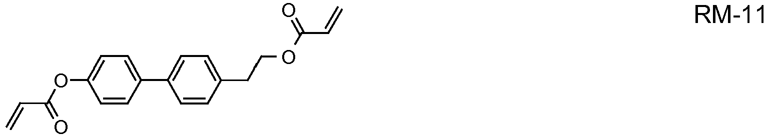 |
| 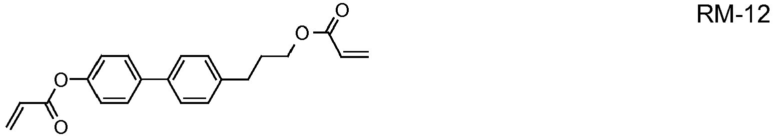 |
| 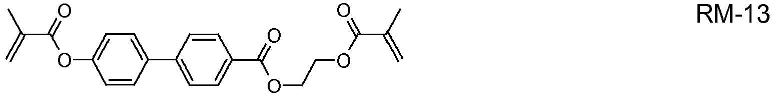 |
| 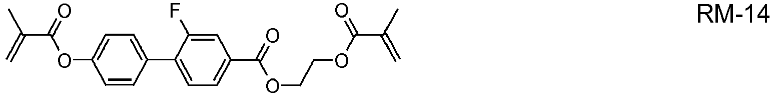 |
| 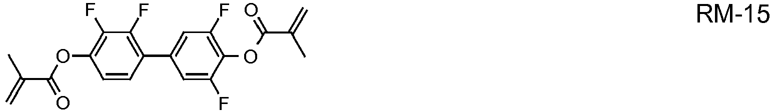 |
| 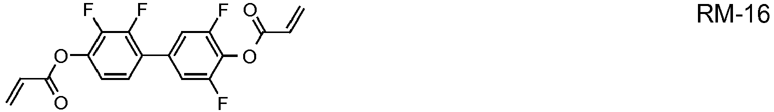 |
| 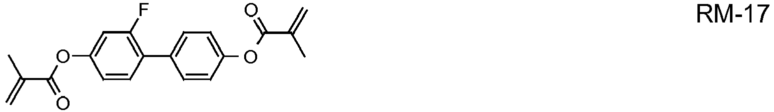 |
| 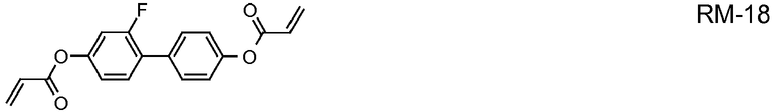 |
| 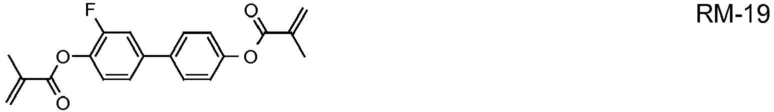 |
| 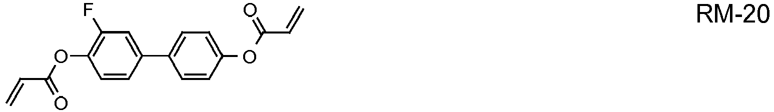 |
| 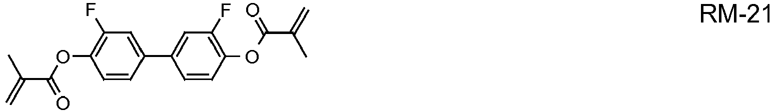 |
| 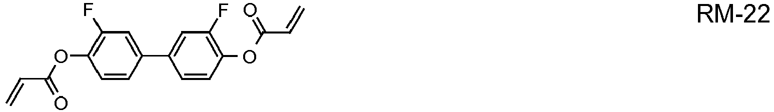 |
| 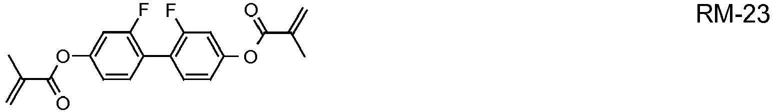 |
| 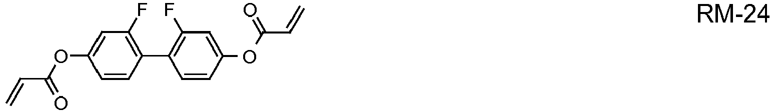 |
| 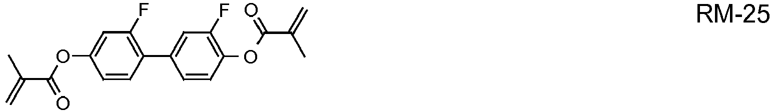 |
| 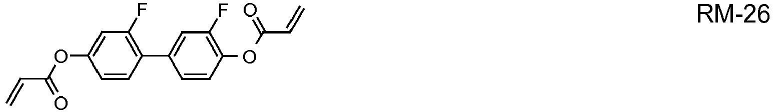 |
| 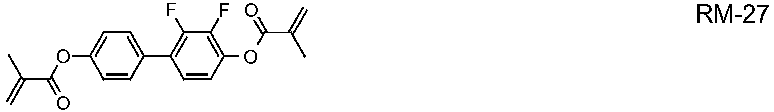 |
| 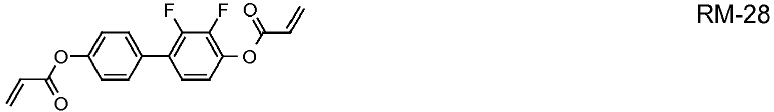 |
| 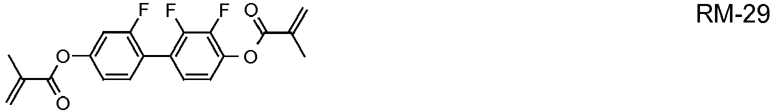 |
| 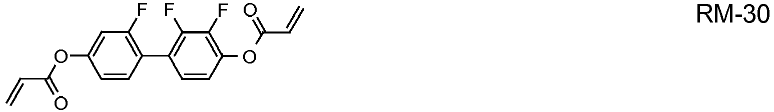 |
| 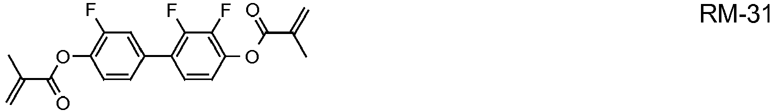 |
| 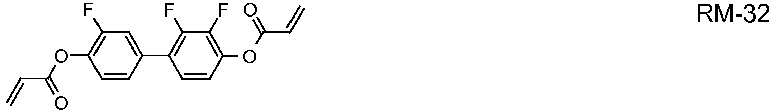 |
| 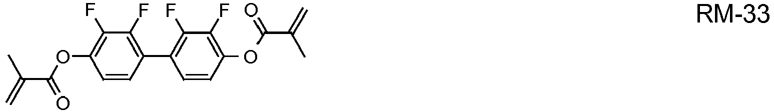 |
| 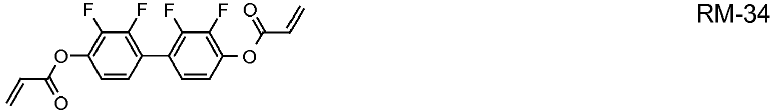 |
| 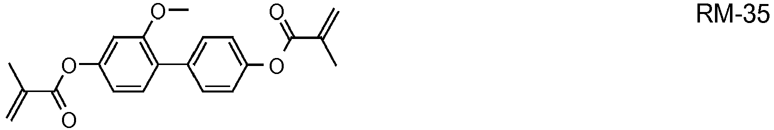 |
| 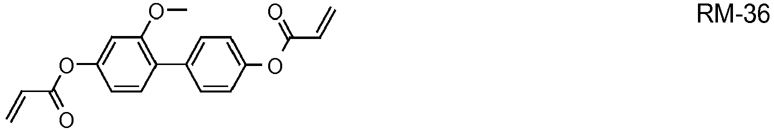 |
| 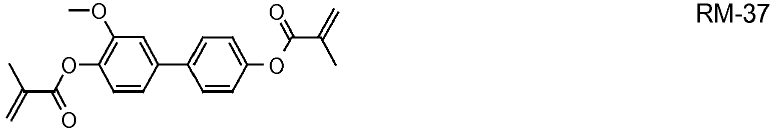 |
| 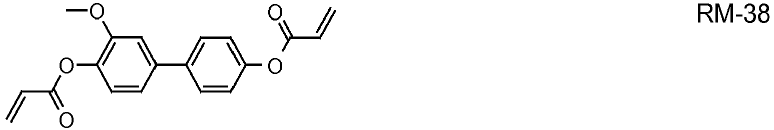 |
| 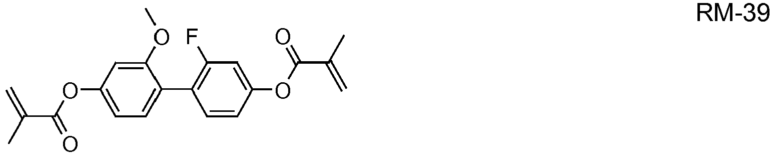 |
| 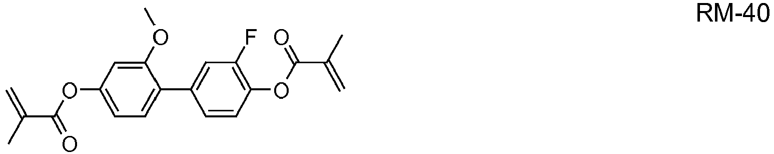 |
| 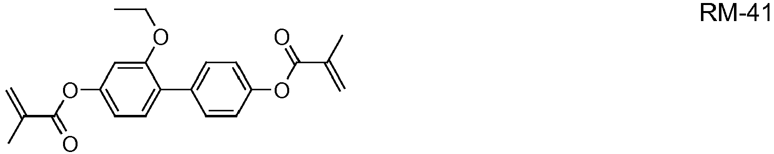 |
| 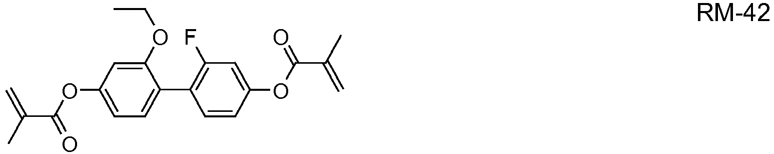 |
| 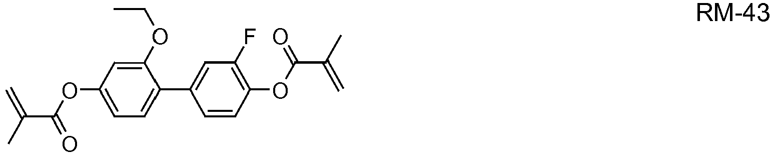 |
| 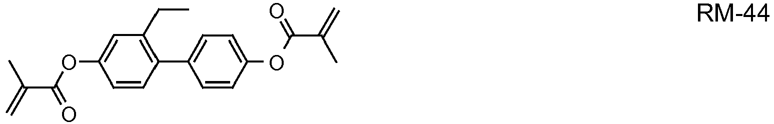 |
| 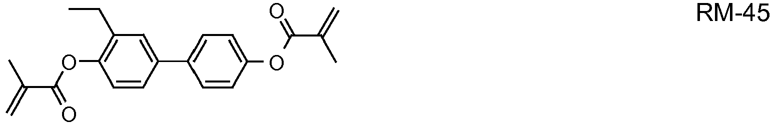 |
| 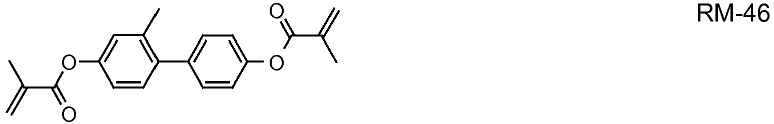 |
| 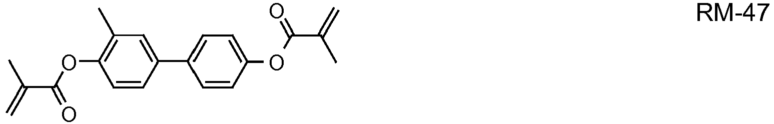 |
| 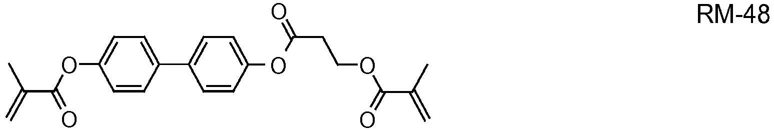 |
| 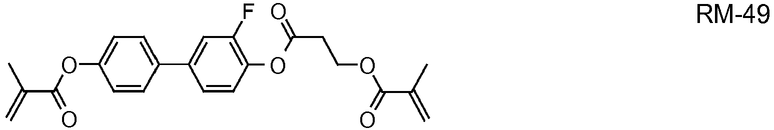 |
| 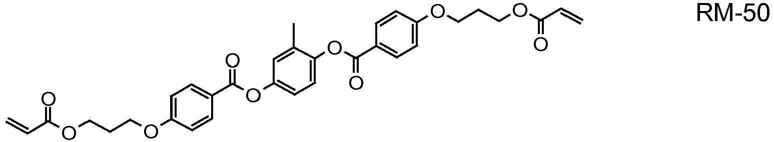 |
| 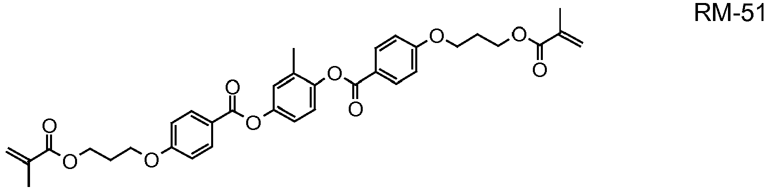 |
| 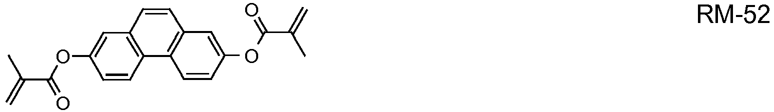 |
| 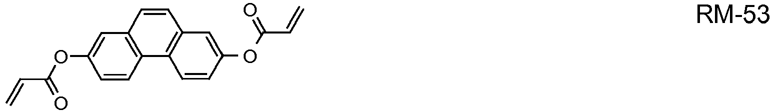 |
| 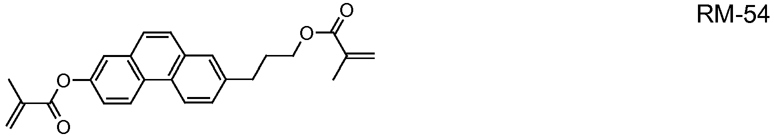 |
| 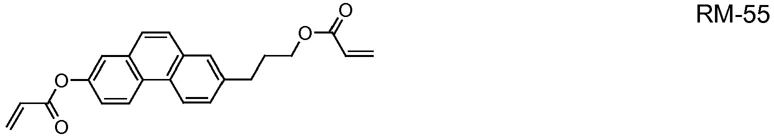 |
| 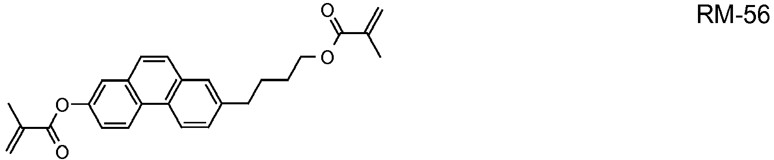 |
| 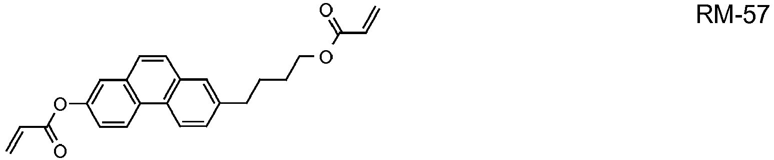 |
| 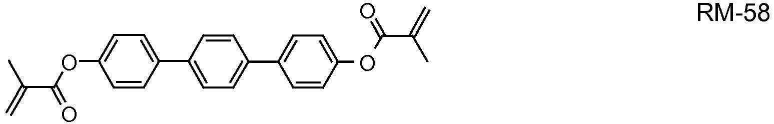 |
| 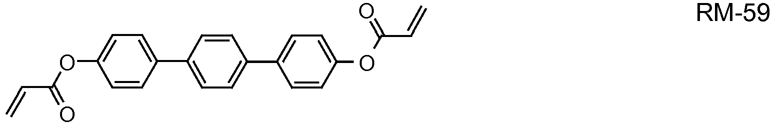 |
| 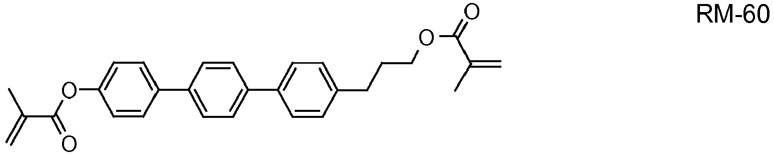 |
| 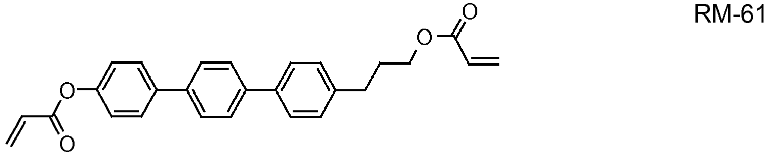 |
| 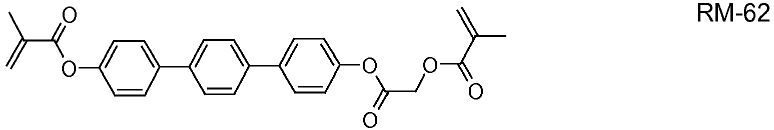 |
| 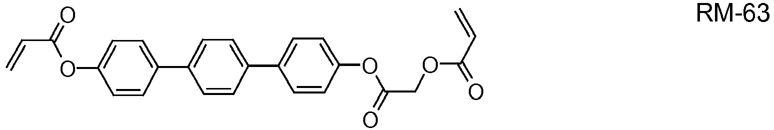 |
| 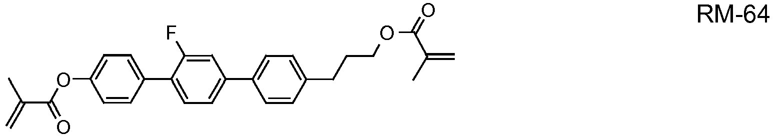 |
| 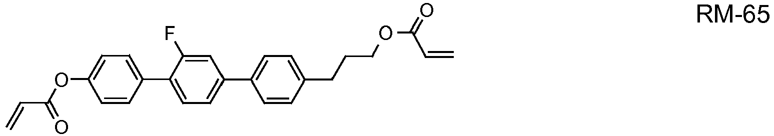 |
| 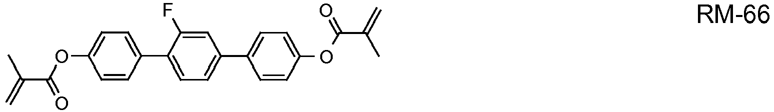 |
| 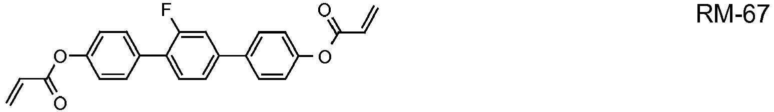 |
| 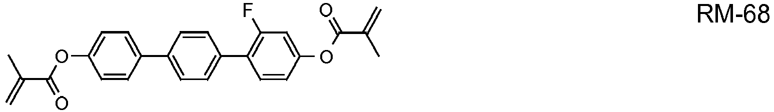 |
| 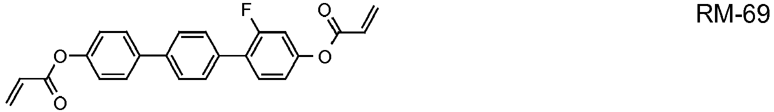 |
| 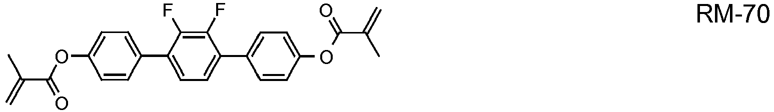 |
| 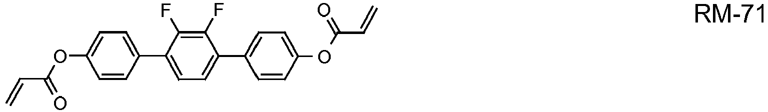 |
| 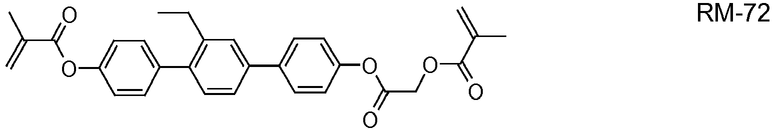 |
| 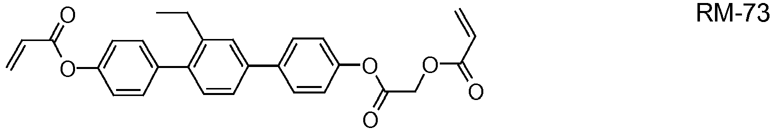 |
| 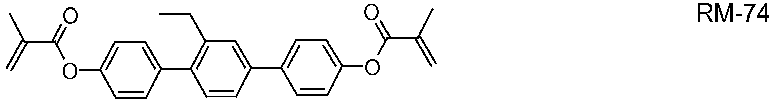 |
| 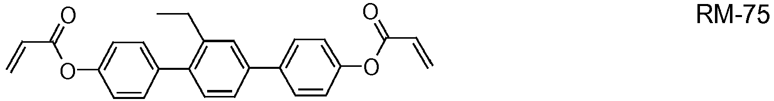 |
| 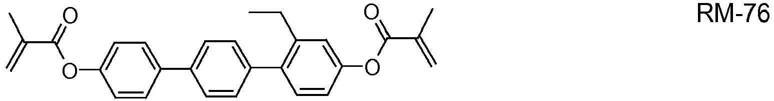 |
| 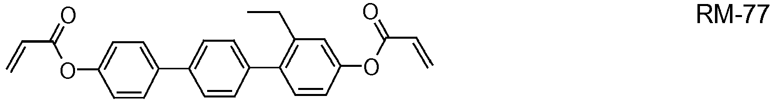 |
| 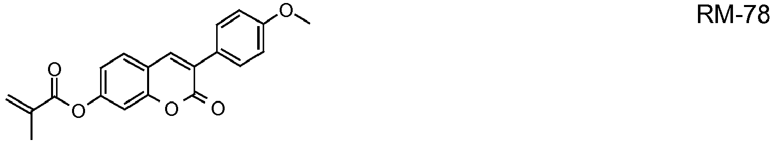 |
| 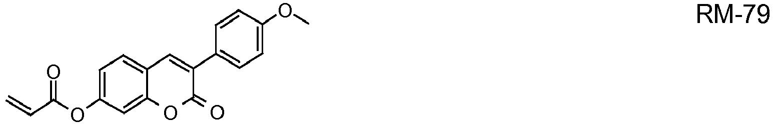 |
| 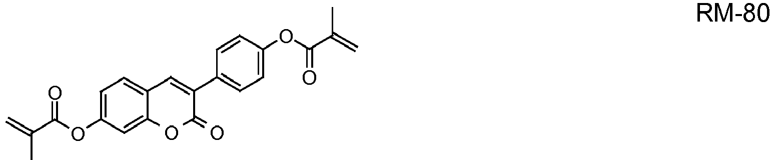 |
| 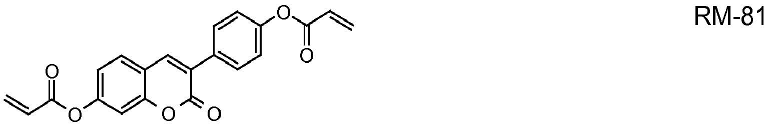 |
| 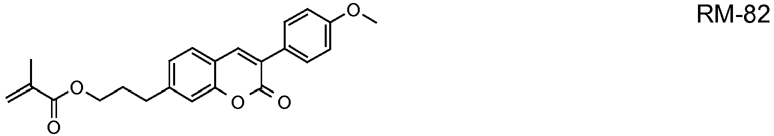 |
| 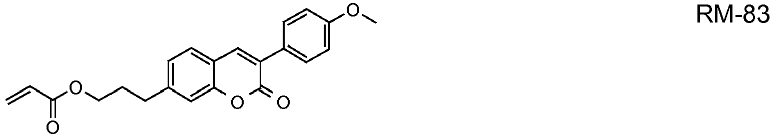 |
| 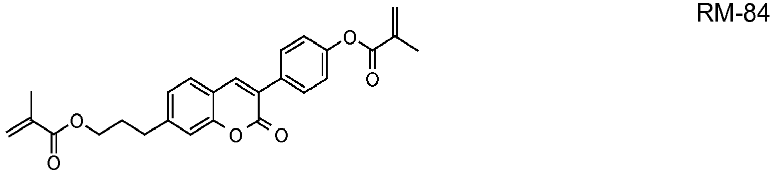 |
| 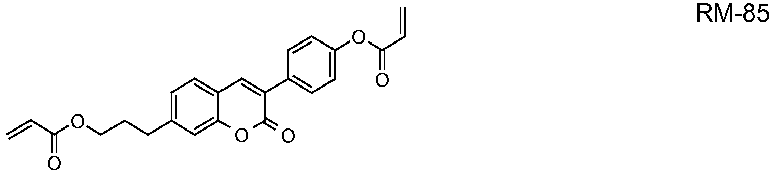 |
| 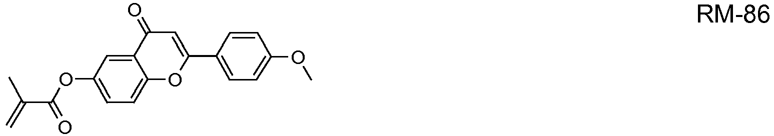 |
| 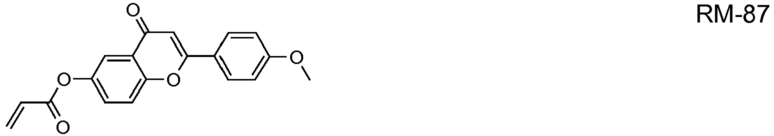 |
| 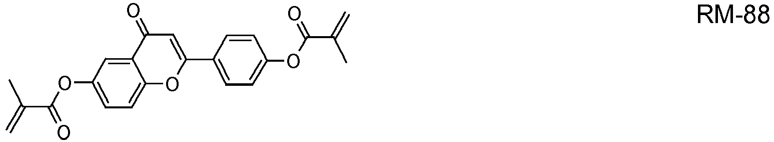 |
| 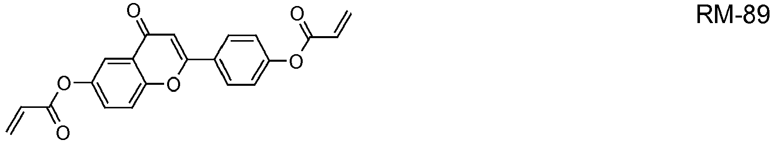 |
| 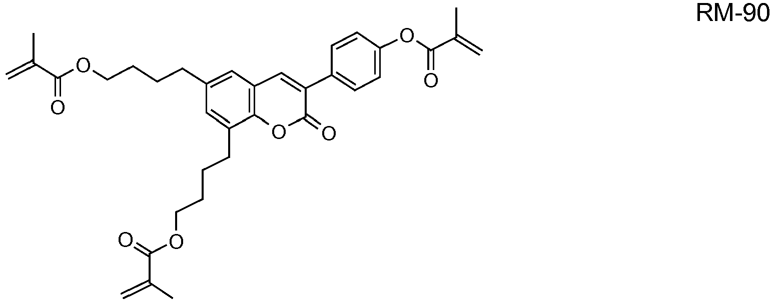 |
| 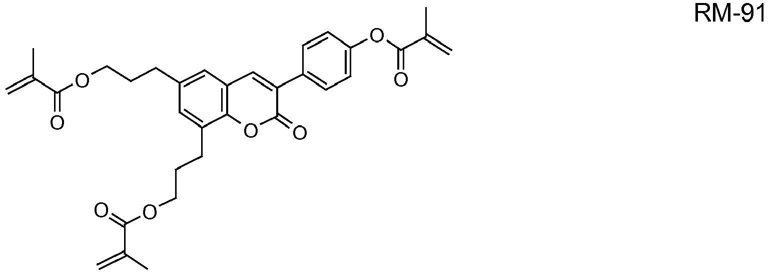 |
| 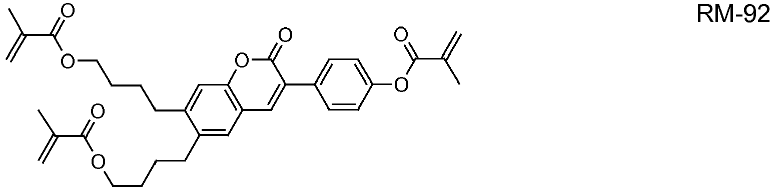 |
| 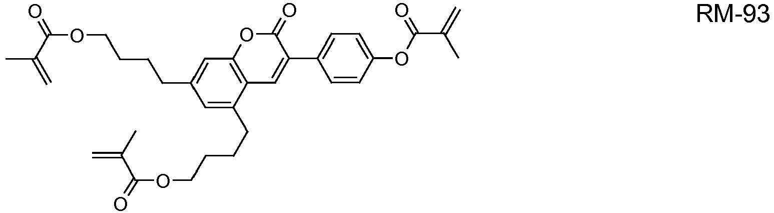 |
| 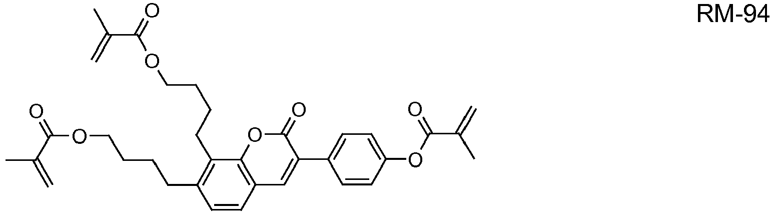 |
| 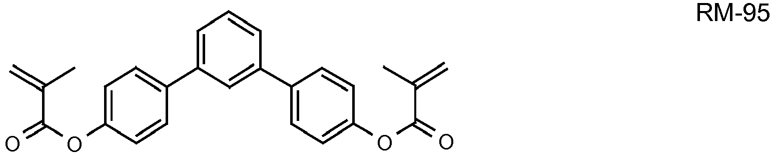 |
| 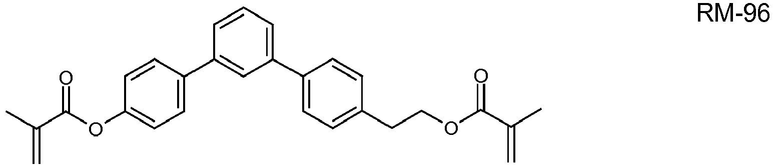 |
| 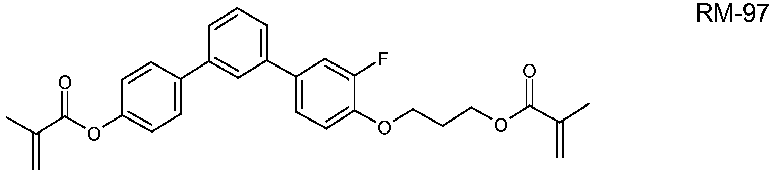 |
| 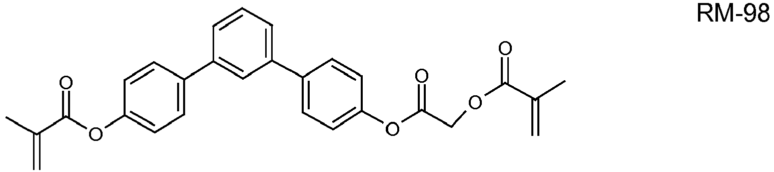 |
| 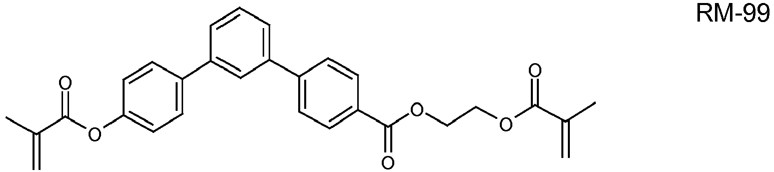 |
| 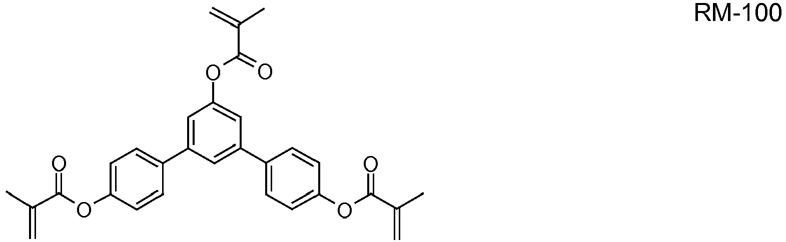 |
| 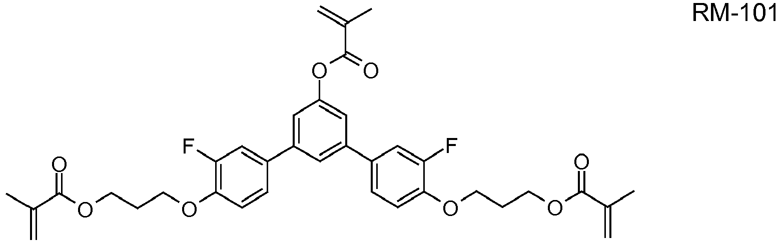 |
| 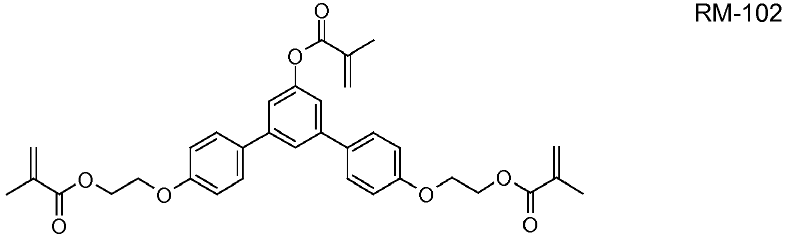 |
| 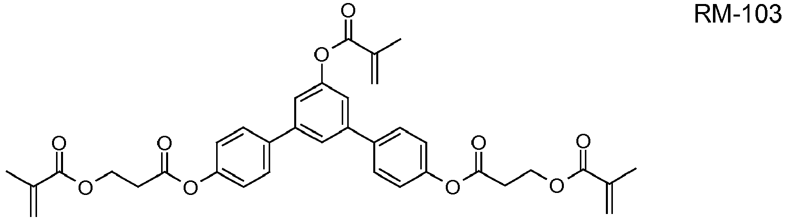 |
| 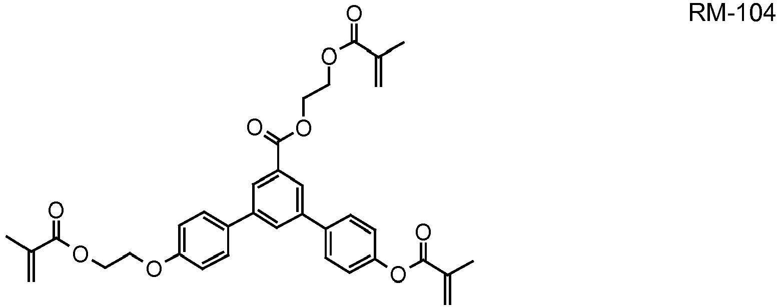 |
| 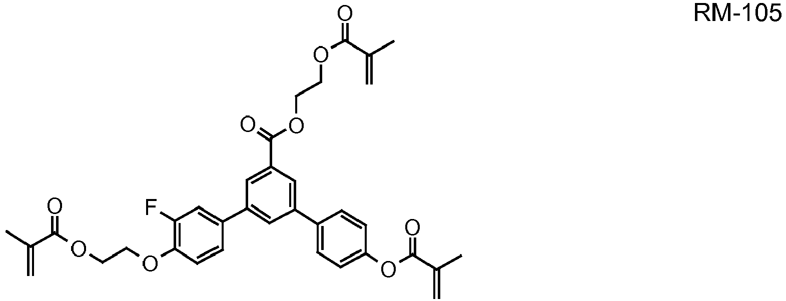 |
| 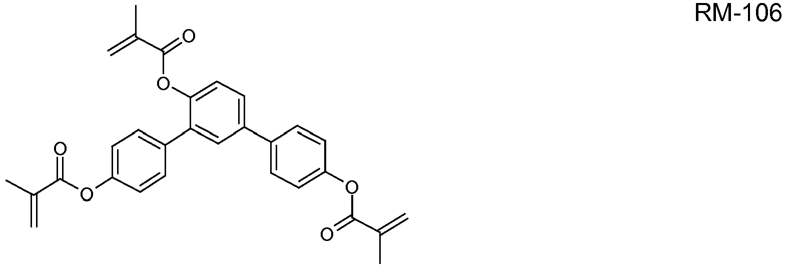 |
| 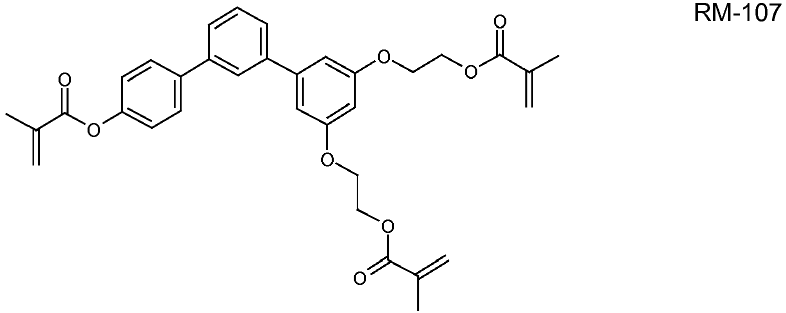 |
| 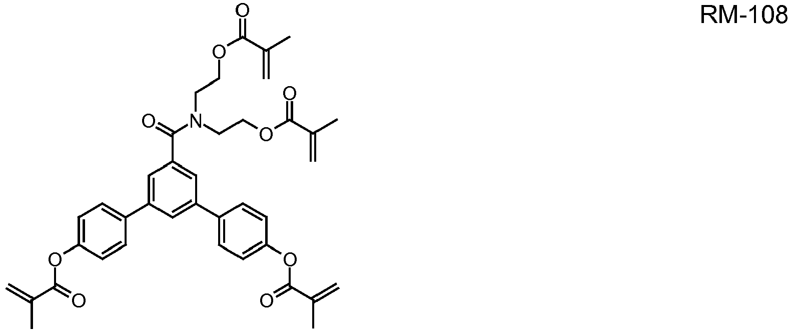 |
| 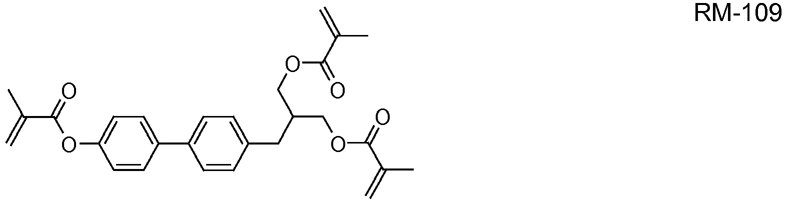 |
| 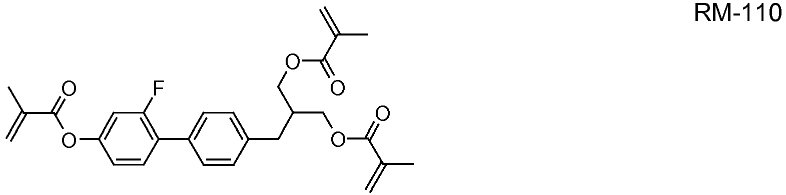 |
| 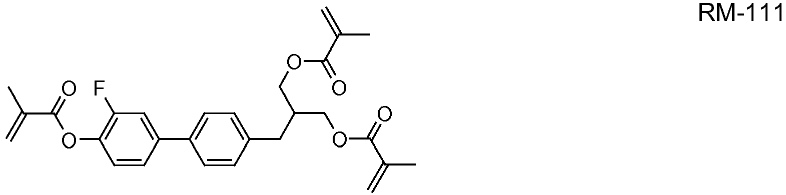 |
| 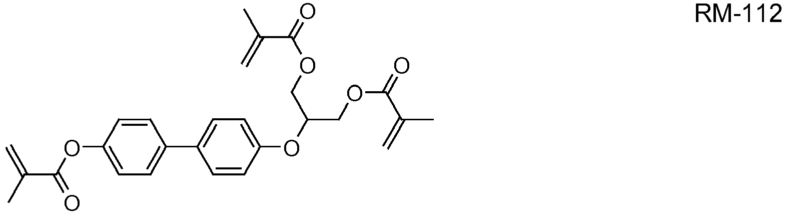 |
| 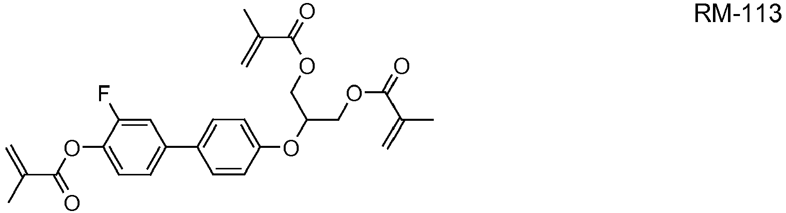 |
| 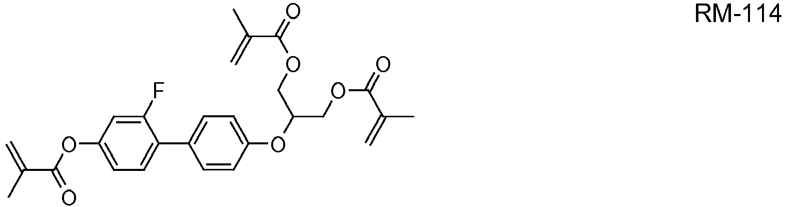 |
| 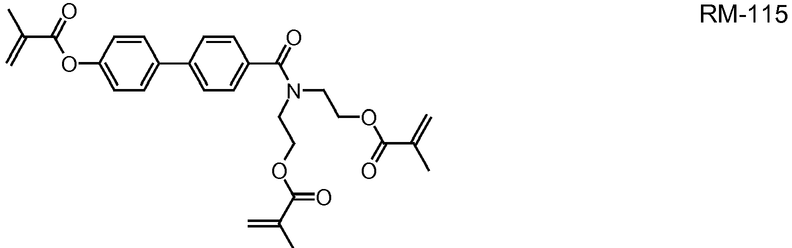 |
| 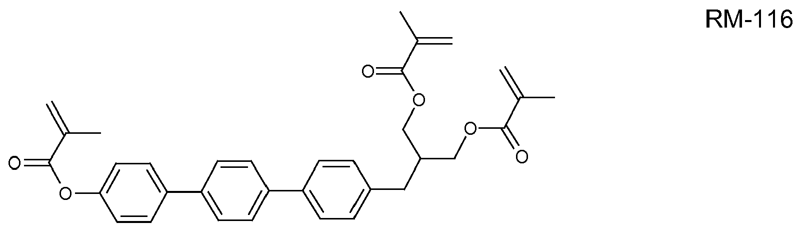 |
| 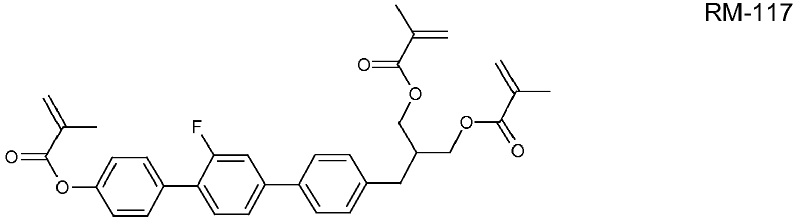 |
| 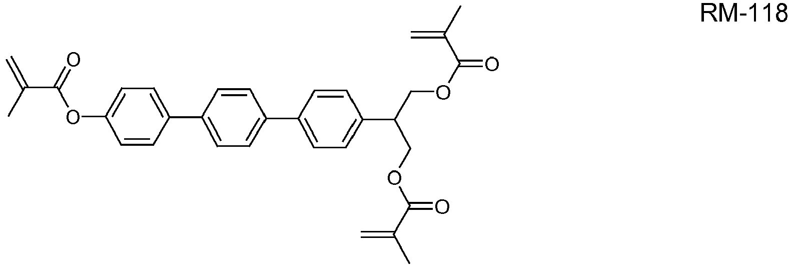 |
| 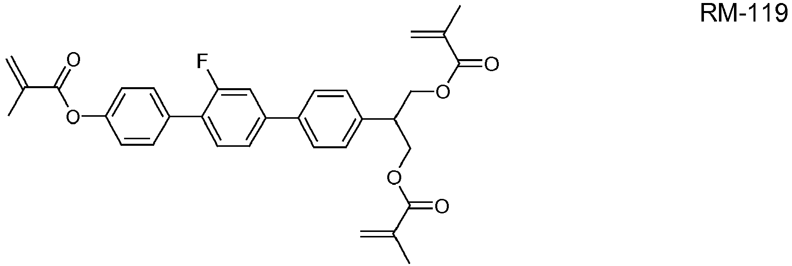 |
| 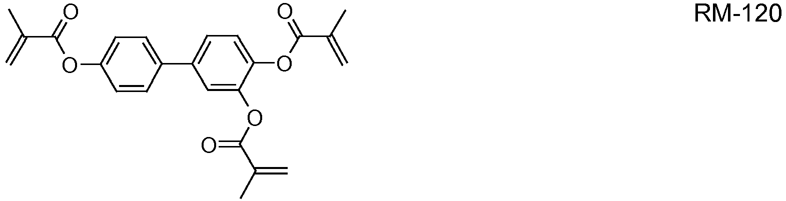 |
| 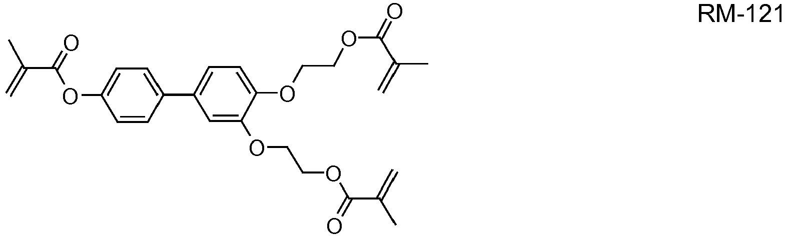 |
| 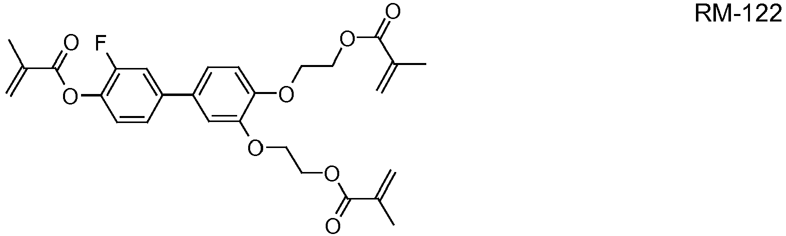 |
| 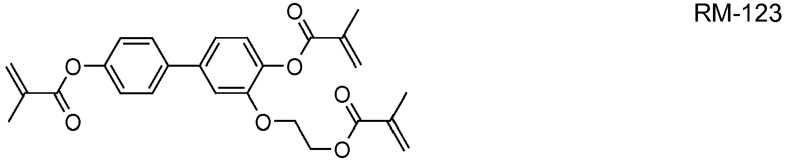 |
| 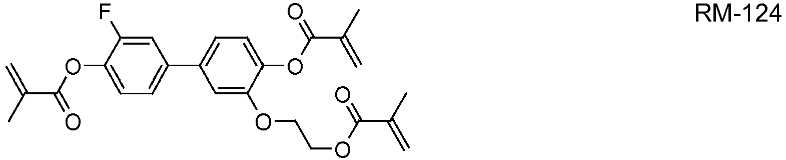 |
| 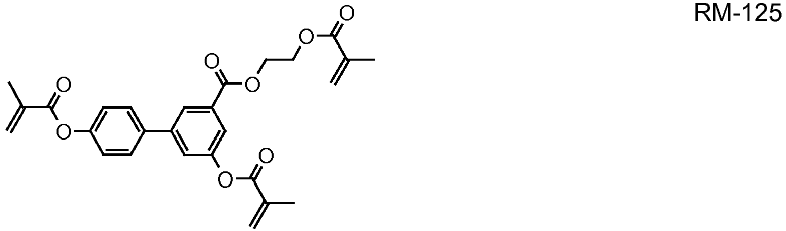 |
| 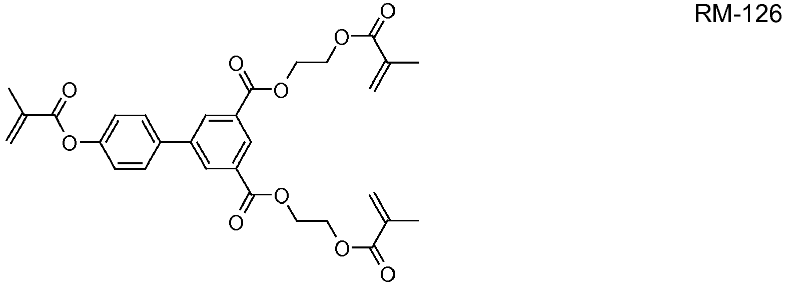 |
| 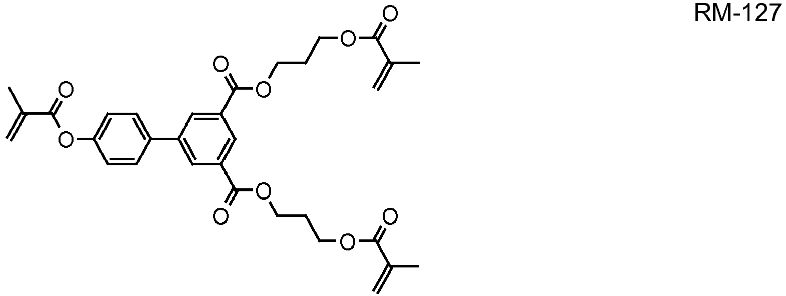 |
| 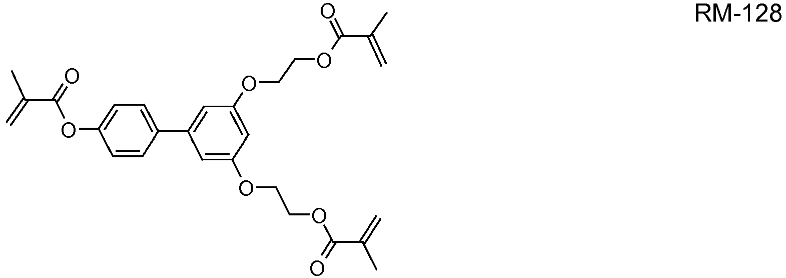 |
| 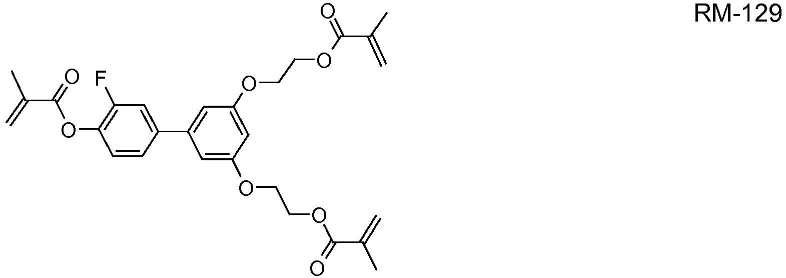 |
| 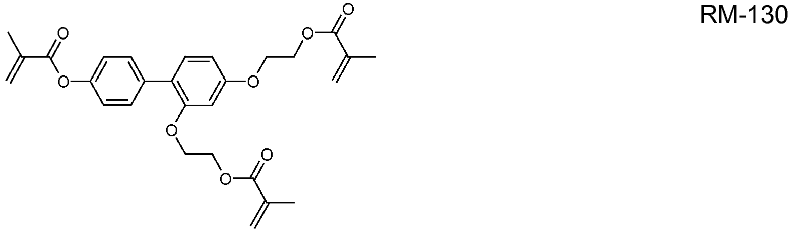 |
| 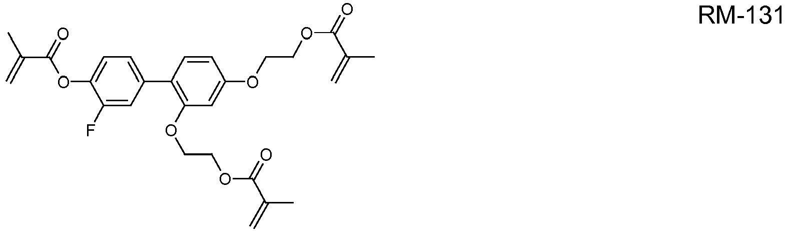 |
| 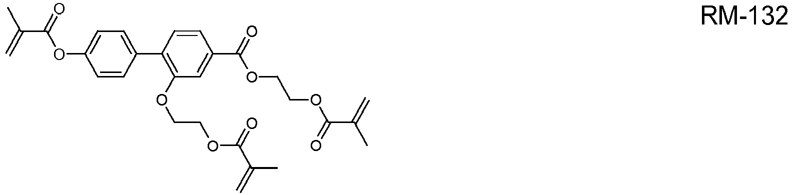 |
| 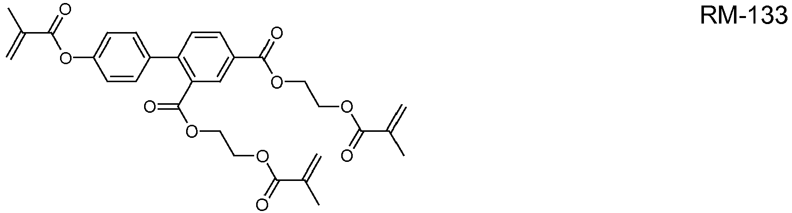 |
| 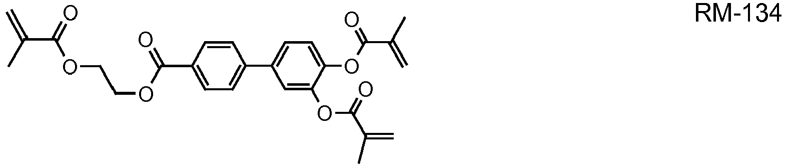 |
| 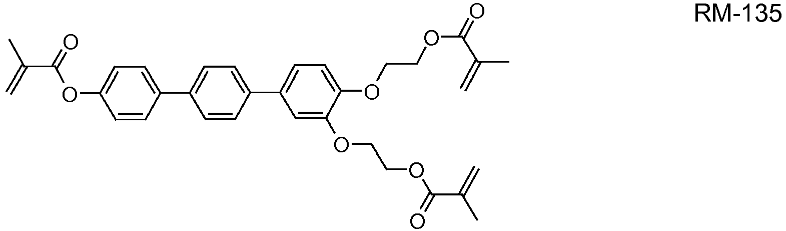 |
| 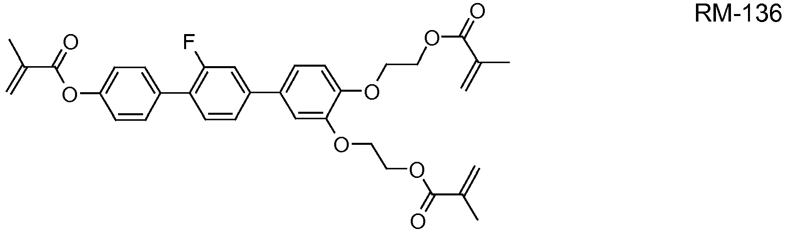 |
| 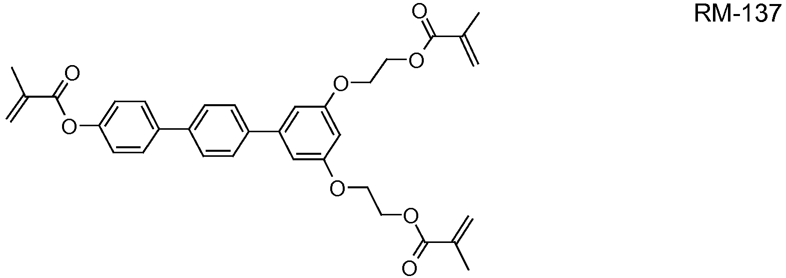 |
| 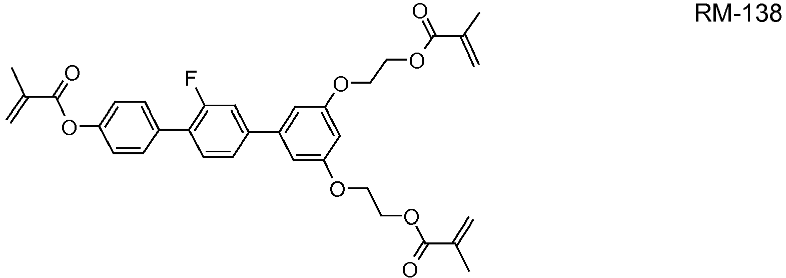 |
| 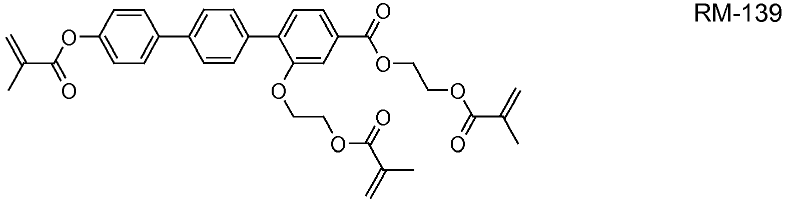 |
| 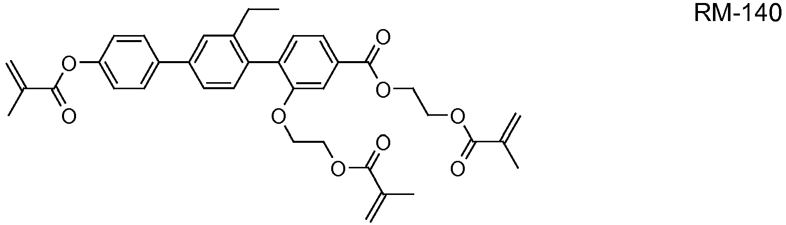 |
| 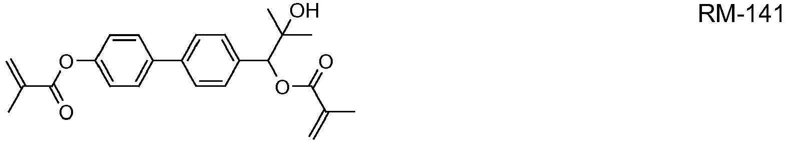 |
| 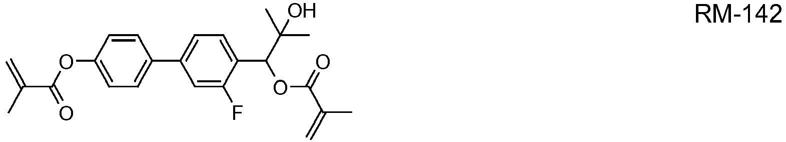 |
| 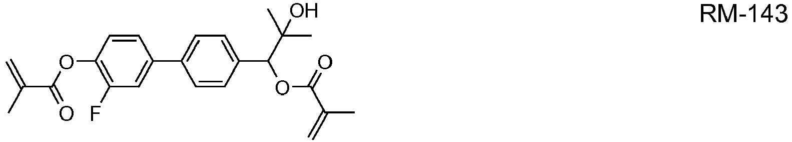 |

In a preferred embodiment, the liquid-crystalline media according to the invention comprise one or more polymerisable compounds, preferably selected from the polymerisable compounds of the formulae RM-1 to RM-143. Of these, compounds RM-1, RM-4, RM-8, RM-17, RM-19, RM-35, RM-37, RM-39, RM-40, RM-41, RM-48, RM-52, RM-54, RM-57, RM-64, RM-74, RM-76, RM-88, RM-102, RM-103, RM-109, RM-117, RM-120, RM-121 and RM-122 are particularly preferred.

**Table E**

| Table E shows self-alignment additives for vertical alignment which can be used in LC media for SA-VA and SA-FFS displays according to the present invention together with the polymerizable compounds of formula I: |
|---|
| 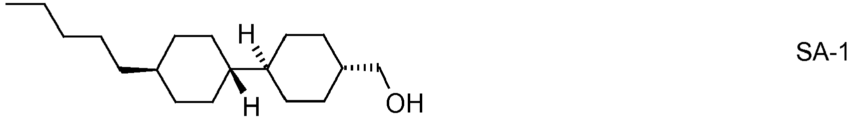 |
| 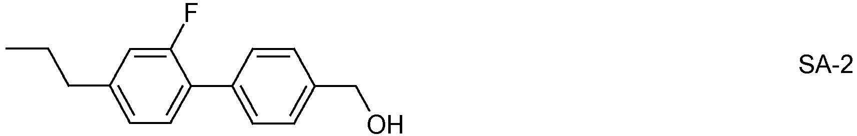 |
| 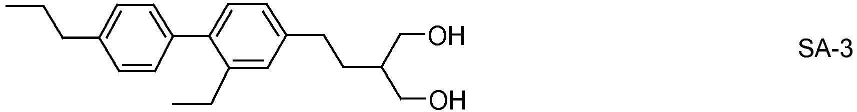 |
| 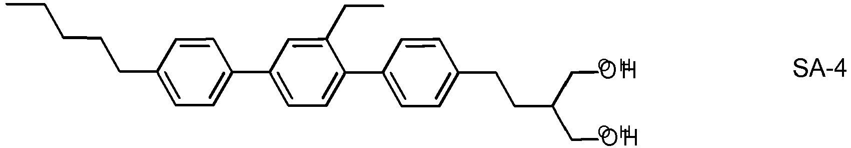 |
| 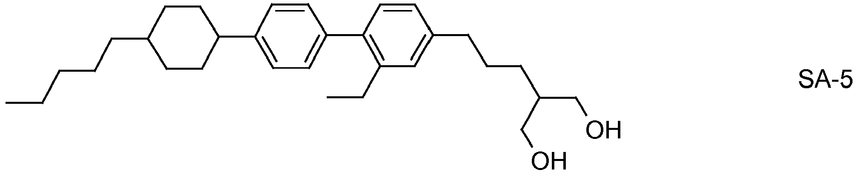 |
| 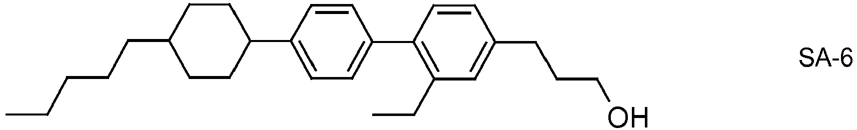 |
| 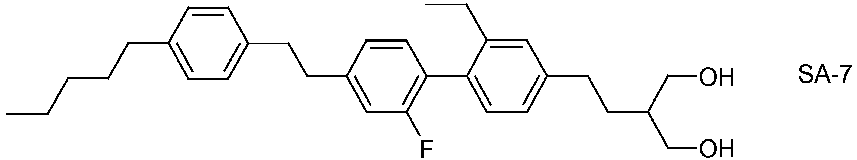 |
| 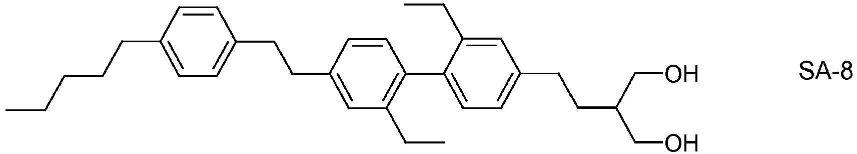 |
| 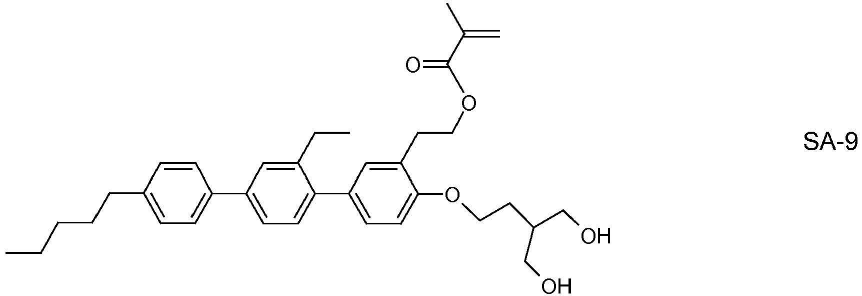 |
| 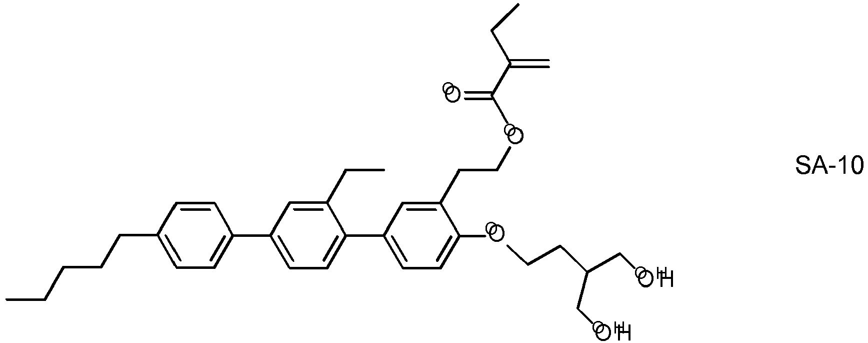 |
| 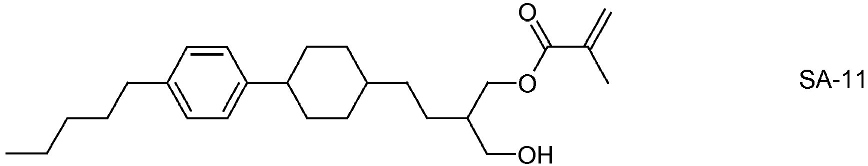 |
| 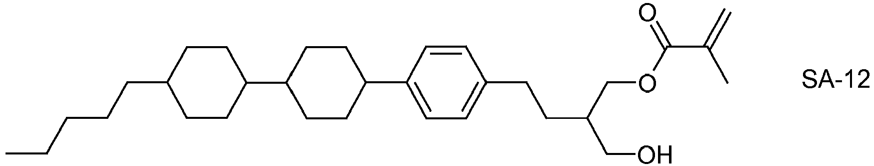 |
| 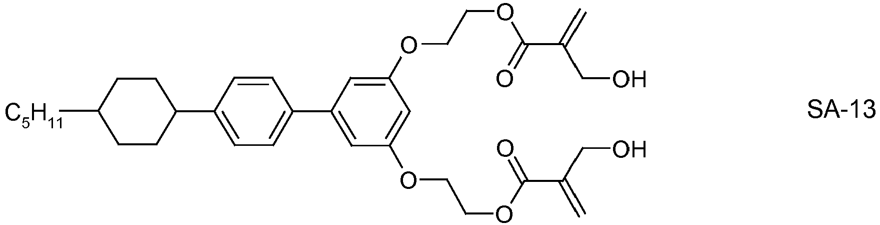 |
| 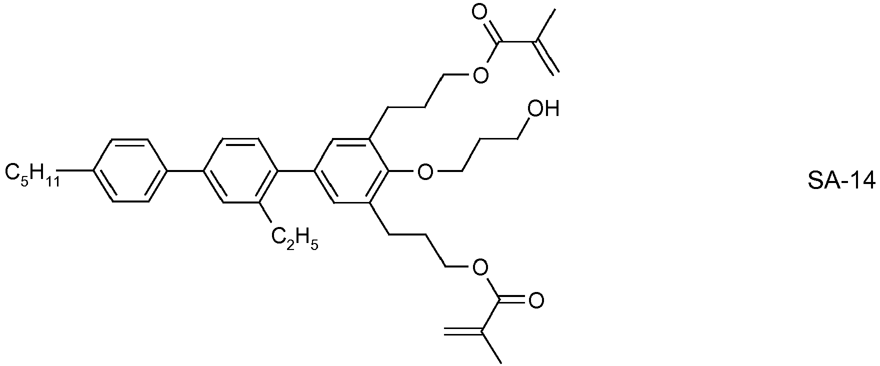 |
| 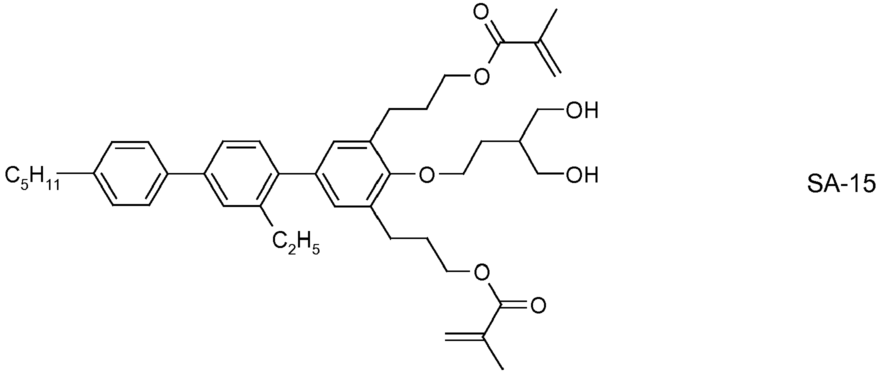 |
| 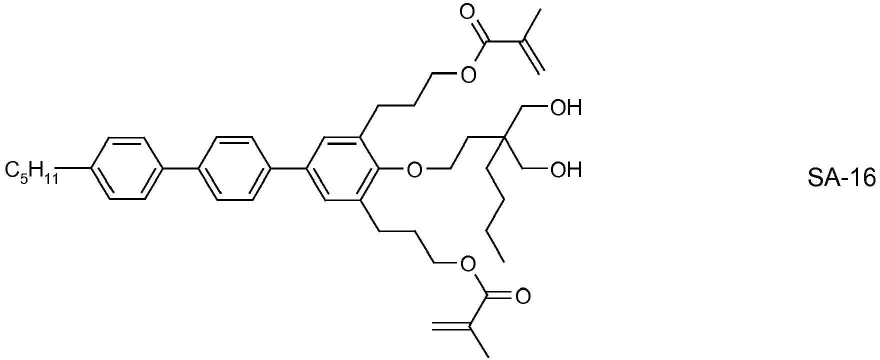 |
| 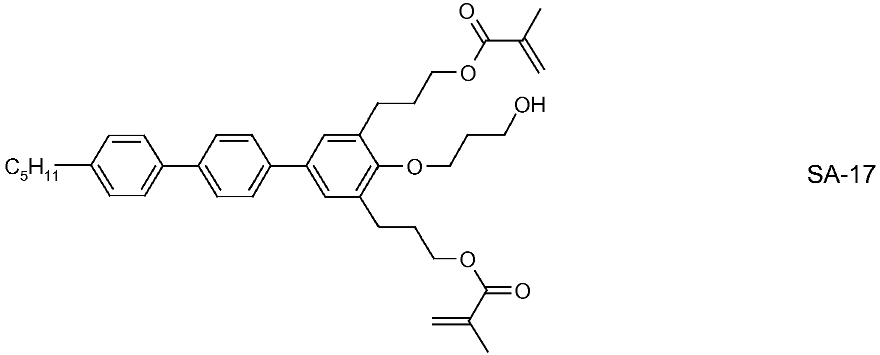 |
| 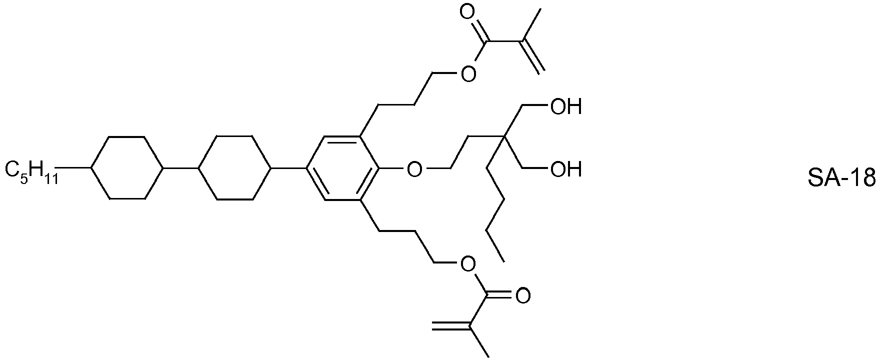 |
| 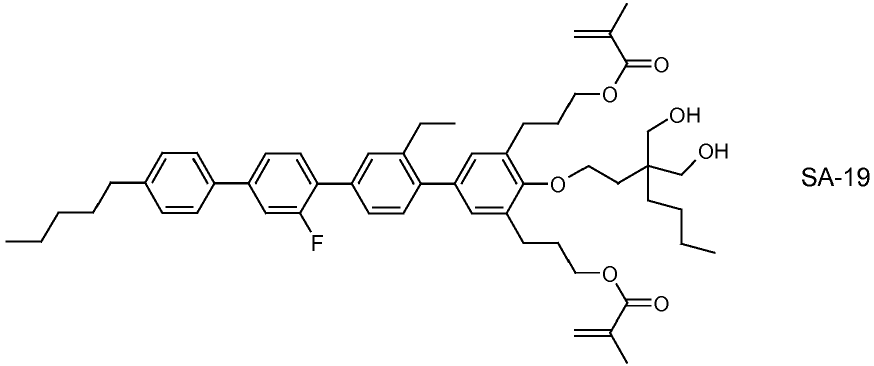 |
| 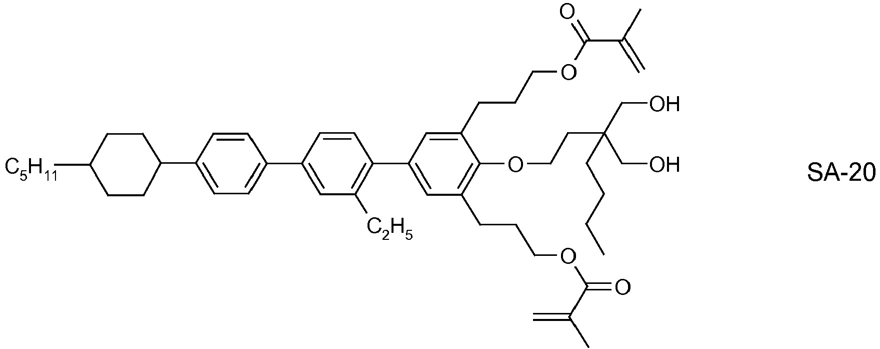 |
| 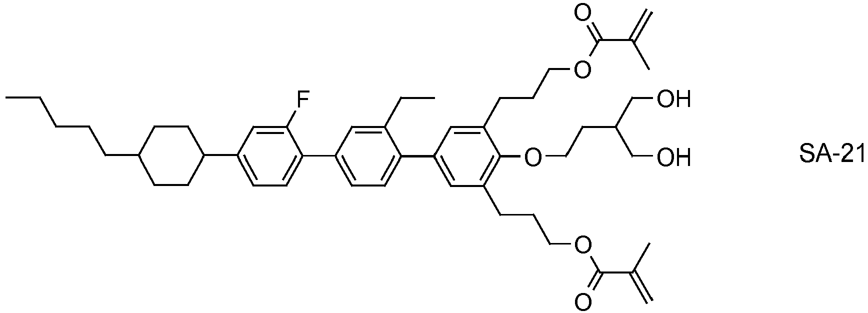 |
| 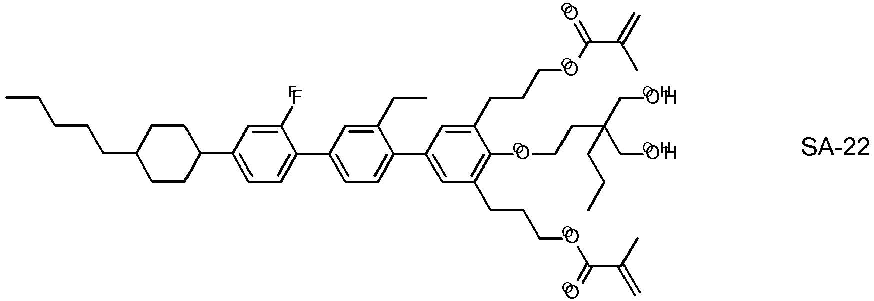 |
| 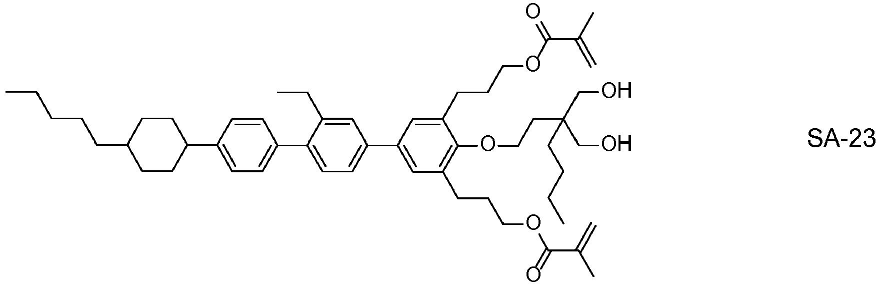 |
| 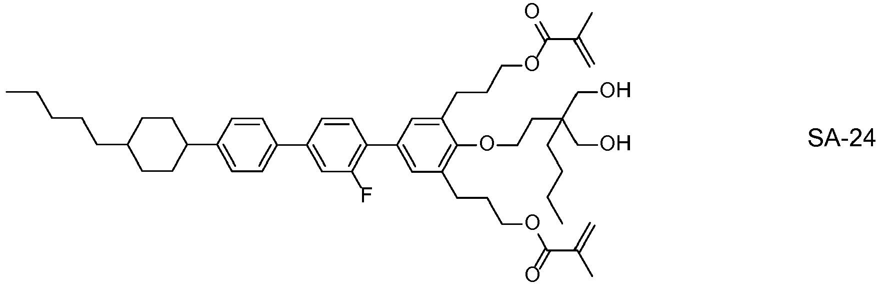 |
| 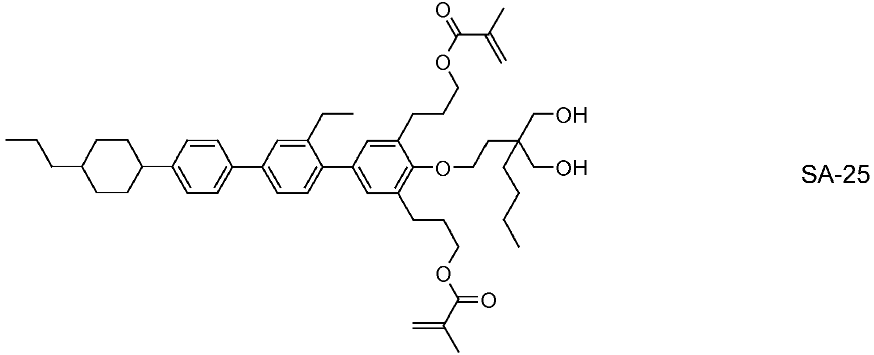 |
| 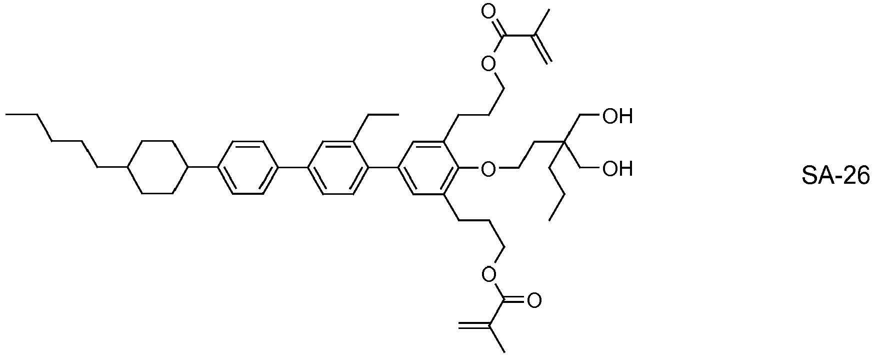 |
| 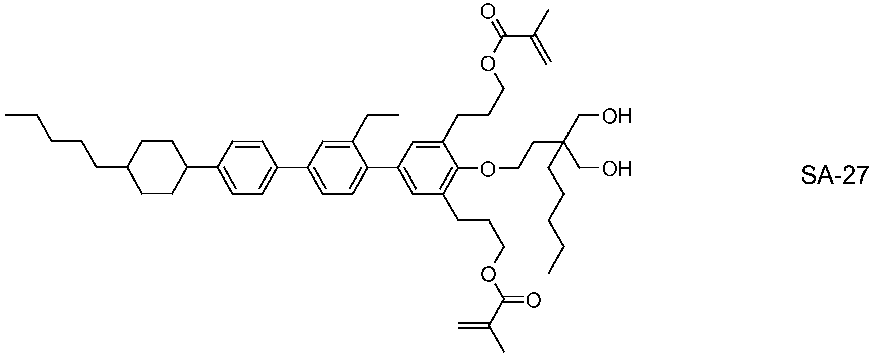 |
| 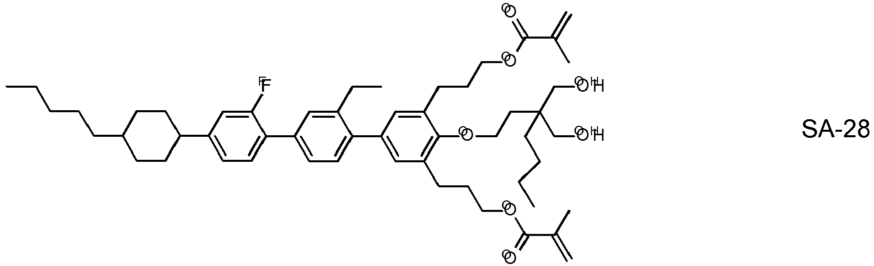 |
| 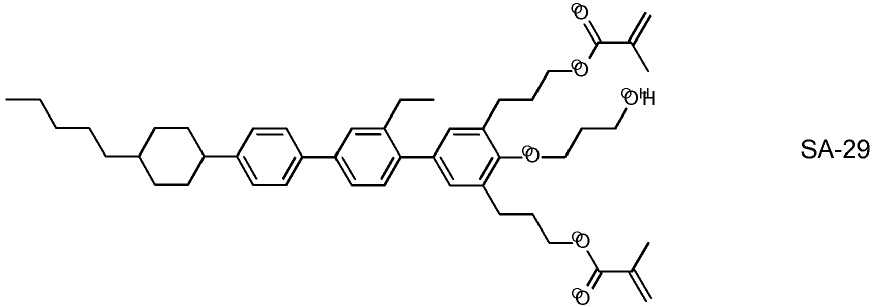 |
| 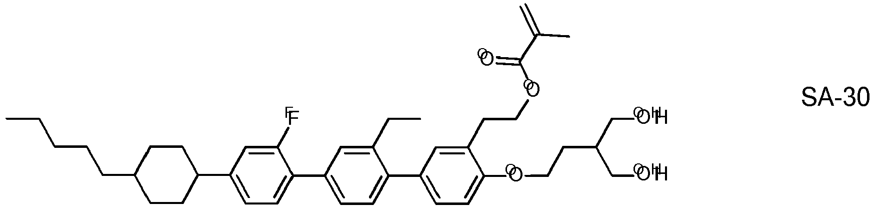 |
| 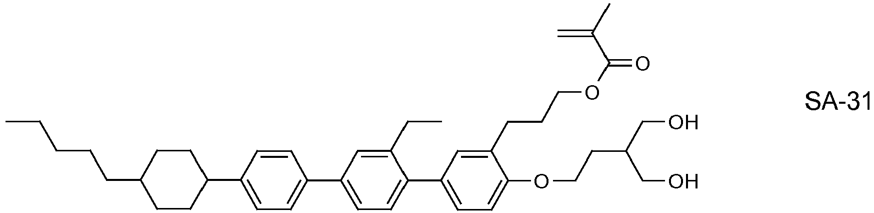 |
| 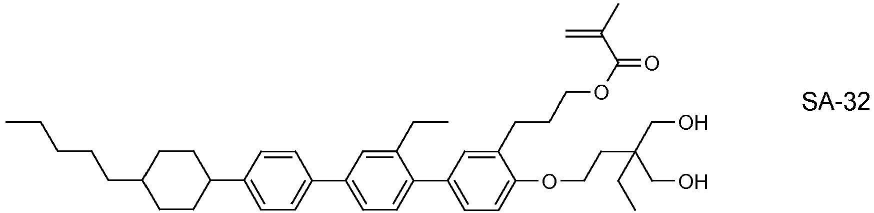 |
| 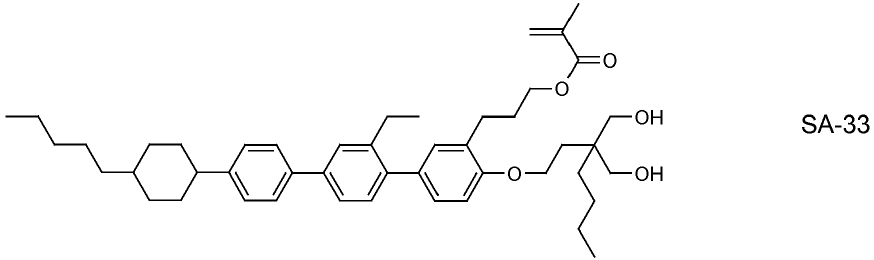 |
| 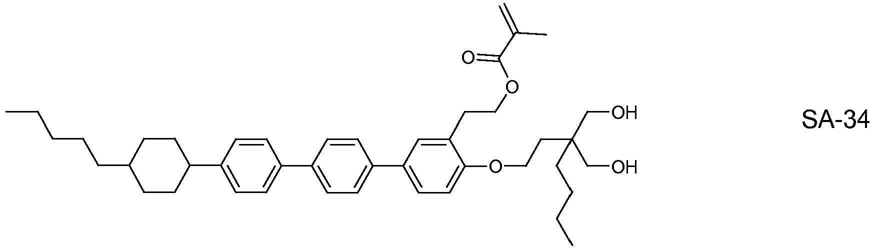 |

In a preferred embodiment, the LC media, SA-FFS and SA-HB-FFS displays according to the present invention comprise one or more SA additives selected from formulae SA-1 to SA-34, preferably from formulae SA-14 to SA-34, very preferably from formulae SA-20 to SA-28, most preferably of formula SA-20, in combination with one or more RMs of formula I. Very preferred is a combination of polymerizable compound 1, 2 or 3 of Example 1 below, very preferably of polymerizable compound 3 of Example 1, with an SA additive of formula SA-20 to SA-28, very preferably of formula SA-20.

The following mixture examples are intended to explain the invention without limiting it.

Above and below, percentage data denote per cent by weight. All temperatures are indicated in degrees Celsius, m.p. denotes melting point, cl.p. = clearing point. Furthermore, C = crystalline state, N = nematic phase, S = smectic phase and I = isotropic phase. The data between these symbols represent the transition temperatures. Furthermore, the following symbols are used
- V₀: Freedericks threshold voltage, capacitive [V] at 20°C,
- V₁₀: voltage [V] for 10% transmission,
- nₑ: extraordinary refractive index measured at 20°C and 589 nm,
- nₒ: ordinary refractive index measured at 20°C and 589 nm,
- Δn: optical anisotropy measured at 20°C and 589 nm,
- ε_{⊥}: dielectric susceptibility (or "dielectric constant") perpendicular to the to the longitudinal axes of the molecules at 20°C and 1 kHz,
- ε_{∥}: dielectric susceptibility (or "dielectric constant") parallel to the to the longitudinal axes of the molecules at 20°C and 1 kHz,
- Δε: dielectric anisotropy at 20°C and 1 kHz,
- cl.p. or T(N,I): clearing point [°C],
- v: flow viscosity measured at 20°C [mm²·s⁻¹],
- γ₁: rotational viscosity measured at 20°C [mPa.s],
- K₁₁: elastic constant, "splay" deformation at 20°C [pN],
- K₂₂: elastic constant, "twist" deformation at 20°C [pN],
- K₃₃: elastic constant, "bend" deformation at 20°C [pN], and
- LTS: low-temperature stability of the phase, determined in test cells,
- VHR: voltage holding ratio.

All physical properties are determined in accordance with "Merck Liquid Crystals, Physical Properties of Liquid Crystals", status Nov. 1997, Merck KGaA, Germany, and apply for a temperature of 20°C, unless explicitly indicated otherwise.

### Comparison Example 1

The following liquid-crystalline medium was formulated:

| | | | |
|---|---|---|---|
| CC-3-V | 30.5% | cl.p. | 81.0 |
| CC-3-V1 | 8.0% | Δn | 0.0994 |
| CC-3-2V1 | 9.5% | Δε | 2.2 |
| CCP-V-1 | 12.0% | ε_{∥} | 6.5 |
| PGP-2-2V | 8.0% | ε_{⊥} | 4.3 |
| DGUQU-4-F | 6.0% | γ₁ | 63 |
| CLY-3-O2 | 2.5% | K11 | 15.3 |
| Y-4O-O4 | 5.5% | K33 | 15.4 |
| B(S)-2O-O4 | 2.5% | γ₁ /K₁₁ | 4.1 mPas/pN |
| B(S)-2O-O5 | 3.0% | | |
| CLP-3-T | 5.0% | | |
| PPGU-3-F | 0.5% | | |
| CCG-V-F | 4.5% | | |
| CCGU-3-F | 2.5% | | |

The medium does not contain a compound of formula I.

### Comparison Example 2

The following liquid-crystalline medium was formulated:

| | | | |
|---|---|---|---|
| CC-3-V | 30.5% | cl.p. | 82.0 |
| CC-3-V1 | 7.0% | Δn | 0.0998 |
| CC-3-2V1 | 9.0% | Δε | 2.7 |
| CCP-V-1 | 11.0% | ε_{∥} | 7.1 |
| PGP-2-2V | 8.0% | ε_{⊥} | 4.4 |
| DGUQU-4-F | 7.0% | γ₁ | 65 |
| CLY-3-O2 | 1.5% | K11 | 14.9 |
| Y-4O-O4 | 5.0% | K33 | 15.5 |
| B(S)-2O-O4 | 3.0% | γ₁ /K₁₁ | 4.4 mPas/pN |
| B(S)-2O-O5 | 3.0% | | |
| CLP-3-T | 4.0% | | |
| CCG-V-F | 7.0% | | |
| CCGU-3-F | | | 4.0% |

The medium does not contain a compound of formula I.

### Comparison Example 3

The following liquid-crystalline medium was formulated:

| | | | |
|---|---|---|---|
| CC-3-V | 33.0% | cl.p. | 80.5 |
| CC-3-V1 | 8.0% | Δn | 0.0990 |
| CC-3-2V1 | 8.5% | Δε | 2.7 |
| CCP-V-1 | 11.5% | ε_{∥} | 7.0 |
| PGP-2-2V | 7.0% | ε_{⊥} | 4.3 |
| DGUQU-4-F | 8.0% | γ₁ | 64 |
| Y-4O-O4 | 6.5% | K11 | 14.7 |
| B(S)-2O-O4 | 2.5% | K33 | 15.6 |
| B(S)-2O-O5 | 3.0% | γ₁ /K₁₁ | 4.4 mPas/pN |
| CLP-3-T | 5.0% | | |
| CCGU-3-F | 3.5% | | |
| CBC-33F | 3.5% | | |

The medium does not contain a compound of formula I.

### Comparison Example 4

The following liquid-crystalline medium was formulated:

| | | | |
|---|---|---|---|
| CC-3-V | 33.0% | cl.p. | 80.0 |
| CC-3-V1 | 7.5% | Δn | 0.0982 |
| CC-3-2V1 | 9.0% | Δε | 2.5 |
| CCP-V-1 | 14.0% | ε_{∥} | 6.9 |
| PGP-2-2V | 7.5% | ε_{⊥} | 4.4 |
| DGUQU-4-F | 8.0% | γ₁ | 62 |
| Y-4O-O4 | 7.0% | K11 | 13.8 |
| B(S)-2O-O4 | 2.5% | K33 | 16.0 |
| B(S)-2O-O5 | 3.0% | γ₁ /K₁₁ | 4.5 mPas/pN |
| CCGU-3-F | | | 5.5% |
| CBC-33F | | | 3.0% |

The medium does not contain a compound of formula I.

### Example 1

The following liquid-crystalline medium was formulated:

| | | | |
|---|---|---|---|
| CC-3-V | 31.0% | cl.p. | 80.0 |
| CC-3-V1 | 8.0% | Δn | 0.0997 |
| CC-3-2V1 | 9.5% | Δε | 2.1 |
| CCP-V-1 | 12.0% | ε_{∥} | 6.4 |
| PGP-2-2V | 8.0% | ε_{⊥} | 4.2 |
| DGUQU-4-F | 6.0% | γ₁ | 55 |
| CLY-3-O2 | 2.5% | K₁₁ | 15.2 |
| Y-4O-O4 | 5.0% | K₃₃ | 15.7 |
| B(S)-2O-O4 | 2.5% | γ₁ /K₁₁ | 3.6 mPas/pN |
| B(S)-2O-O5 | 3.0% | | |
| CLP-3-T | 5.0% | | |
| PPGU-3-F | 0.5% | | |
| CCG-V-F | 4.5% | | |
| CPU-3-OXF | 2.5% | | |

The medium contains compound CPU-3-OXF of formula I and shows a low value of γ₁ and γ₁ /K₁₁.

### Example 2

The following liquid-crystalline medium was formulated:

| | | | |
|---|---|---|---|
| APUQU-3-F | 4.5% | cl.p. | 80.5 |
| PPGU-3-F | 0.5% | Δn | 0.0997 |
| CCP-V-1 | 4.5% | Δε | 2.4 |
| CLP-V-1 | 3.0% | ε_{∥} | 6.7 |
| CLY-3-O2 | 5.0% | ε_{⊥} | 4.3 |
| PGP-2-2V | 0.5% | γ₁ | 51 |
| B(S)-2O-O4 | 4.0% | K₁₁ | 14.7 |
| B(S)-2O-O5 | 4.0% | K₃₃ | 14.5 |
| CC-3-V | 45.0% | γ₁ /K₁₁ | 3.5 mPas/pN |
| CC-3-V1 | 8.0% | | |
| Y-4O-O4 | 1.0% | | |
| CPU-3-OXF | 20.0% | | |

The medium contains compound CPU-3-OXF of formula I and shows a low value of γ₁ and γ₁ /K₁₁.

### Example 3

The following liquid-crystalline medium was formulated:

| | | | |
|---|---|---|---|
| DGUQU-4-F | 0.5% | cl.p. | 80.0 |
| PPGU-3-F | 0.5% | Δn | 0.1002 |
| CCP-V-1 | 5.0% | Δε | 2.3 |
| CLY-3-O2 | 7.0% | ε_{∥} | 6.6 |
| B(S)-2O-O4 | 4.0% | ε_{⊥} | 4.3 |
| B(S)-2O-O5 | 4.0% | γ₁ | 50 |
| CC-3-V | 51.5% | K₁₁ | 13.9 |
| CPU-3-OXF | 27.5% | K₃₃ | 14.0 |
| | | γ₁ /K₁₁ | 3.6 mPas/pN |

The medium contains compound CPU-3-OXF of formula I and shows a low value of γ₁ and γ₁ /K₁₁.

### Example 4

The following liquid-crystalline medium was formulated:

| | | | |
|---|---|---|---|
| CDUQU-3-F | 4.5% | cl.p. | 79.0 |
| PPGU-3-F | 0.5% | Δn | 0.0993 |
| CCP-V-1 | 9.0% | Δε | 2.4 |
| CLP-V-1 | 3.0% | ε_{∥} | 6.9 |
| B(S)-2O-O4 | 4.0% | ε_{⊥} | 4.5 |
| B(S)-2O-O5 | 3.0% | γ₁ | 55 |
| CC-3-V | 42.5% | K₁₁ | 13.9 |
| CC-3-V1 | 5.5% | K₃₃ | 14.1 |
| Y-4O-O4 | 3.0% | γ₁ /K₁₁ | 4.0 mPas/pN |
| CPY-3-O2 | 5.0% | | |
| CPU-3-OXF | 20.0% | | |

The medium contains compound CPU-3-OXF of formula I and shows a low value of γ₁ and γ₁ /K₁₁.

## Claims

1. Liquid-crystalline medium, **characterised in that** it has positive dielectric anisotropy and comprises one or more compounds of formula I and one or more compounds selected from formulae Y and B 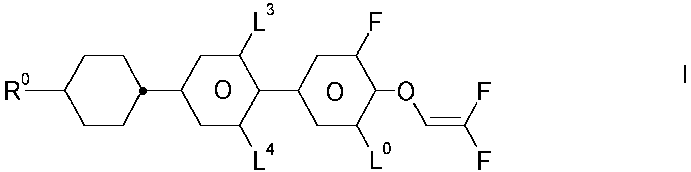 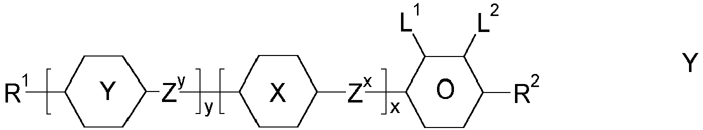 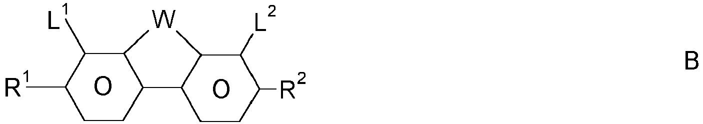 in which the individual radicals, on each occurrence identically or differently, and each, independently of one another, have the following meaning: 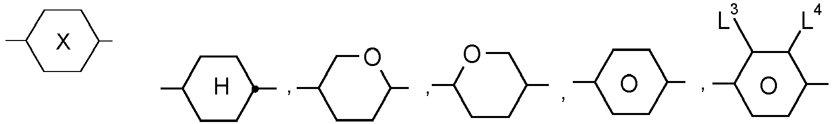 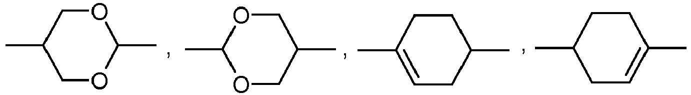 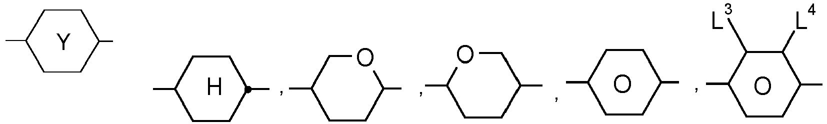 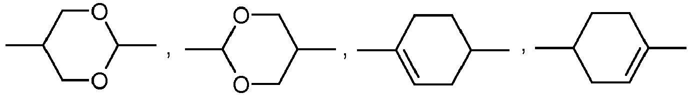
R°, R¹, R² a straight-chain, branched or cyclic alkyl or alkoxy radical that is unsubstituted or halogenated and has 1 to 15 C atoms, where, in addition, one or more CH₂ groups in these radicals may each be replaced, independently of one another, by -C≡C-, -CF₂O-, -CH=CH-, 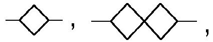 O-, -CO-O- or -O-CO- in such a way that O atoms are not linked directly to one another,
Z^{x}, Z^{y} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond, preferably a single bond,
W O or S,
L⁰ H or F,
L¹, L² H, F or Cl, preferably H or F, very preferably F,
L³, L⁴ H, F or Cl, preferably H or F,
x, y 0, 1 or 2, with x+y ≤3,
wherein the compounds of formula Y contain at least one substituent L¹⁻⁴ that is F or Cl, preferably F,
wherein the liquid-crystalline medium comprises one or more compounds of formula B selected from the following subformulae 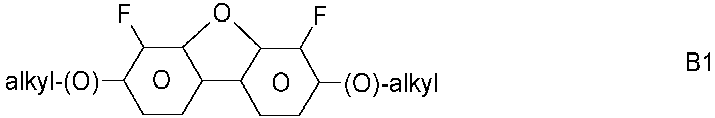 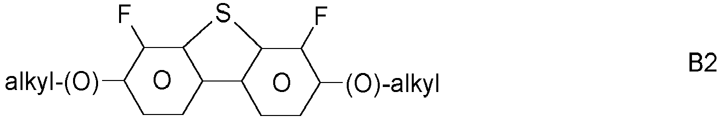
wherein alkyl denotes a straight-chain alkyl radical having 1-6 C atoms, and (O) denotes an oxygen atom or a single bond.

2. Liquid-crystalline medium according to Claim 1, **characterized in that** it comprises one or more compounds of formula I selected from formula I1

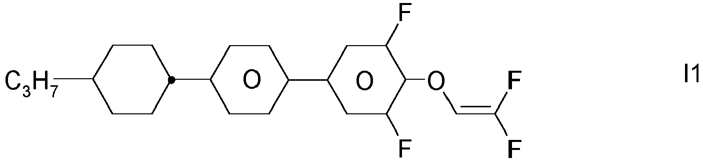

3. Liquid-crystalline medium according to Claim 1 or 2, **characterized in that** it comprises one or more compounds of formula Y selected from the following subformulae 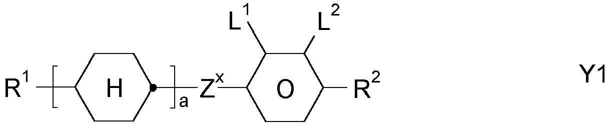 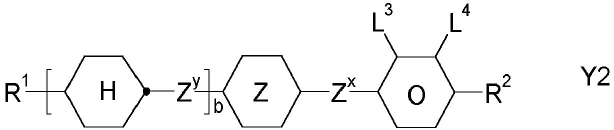 wherein R¹, R², Z^{x}, Z^{y}, L¹ and L² have one of the meanings given in Claim 1,
a denotes 1 or 2,
b denotes 0 or 1, 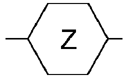 denotes 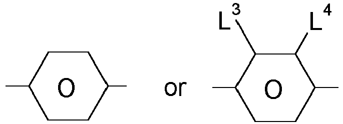
L³, L⁴ denote F or Cl, preferably F.

4. Liquid-crystalline medium according to one or more of Claims 1 to 3, **characterized in that** it comprises one or more compounds of formula Y selected from formula Y3 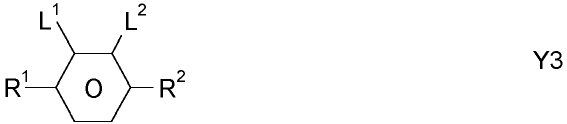 wherein R¹, R², L¹ and L² have one of the meanings given in Claim 1.

5. Liquid-crystalline medium according to one or more of Claims 1 to 4, **characterized in that** it comprises one or more compounds of formula Y1 selected from formula LY 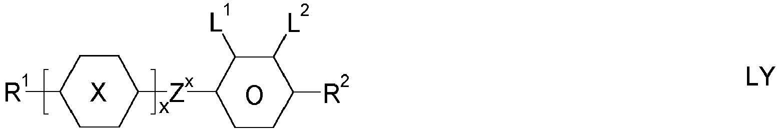 wherein R¹, R², L¹, L², X, x and Z^{x} have the meanings given in Claim 1, and wherein at least one of the rings X is cyclohexenylene.

6. Liquid-crystalline medium according to one or more of Claims 1 to 5, **characterized in that** it comprises one or more compounds of formula Y selected from formula LY4 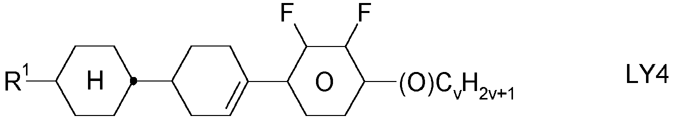 in which R¹ has the meaning indicated in Claim 1, (O) denotes an oxygen atom or a single bond, and v denotes an integer from 1 to 6.

7. Liquid-crystalline medium according to one or more of Claims 1 to 6, **characterised in that** it additionally comprises one or more compounds selected from the group consisting of the following formulae 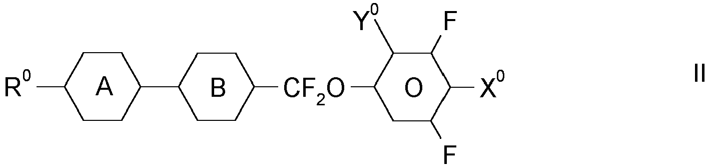 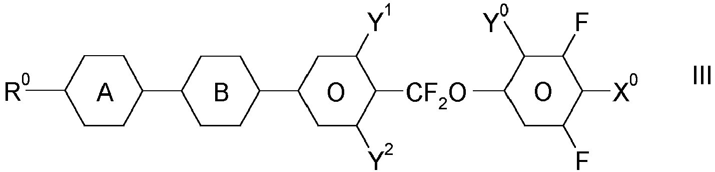 wherein the individual radicals, independently of each other and on each occurrence identically or differently, have the following meanings 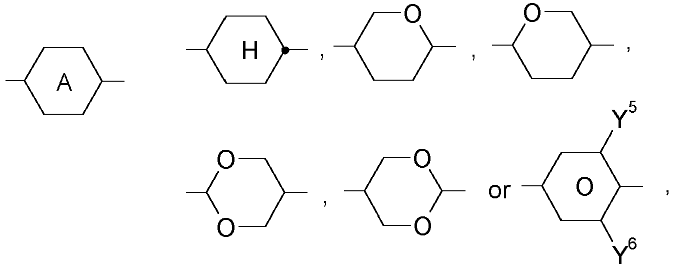 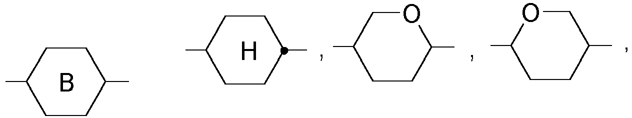 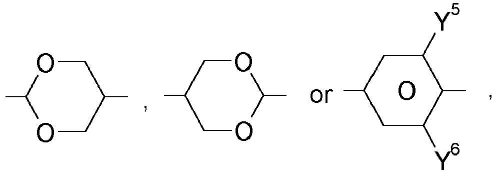
R° one of the meanings given in formula I or one of the preferred meanings as given above and below,
X⁰ F, Cl, CN, SF₅, SCN, NCS, a halogenated alkyl radical, a halogenated alkenyl radical, a halogenated alkoxy radical or a halogenated alkenyloxy radical having up to 6 C atoms, and
Y¹⁻⁶ H or F,
Y° H or CH₃.

8. Liquid-crystalline medium according to one or more of Claims 1 to 7, **characterised in that** it additionally comprises one or more compounds selected from the group consisting of the following formulae 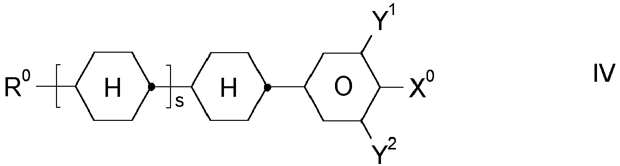 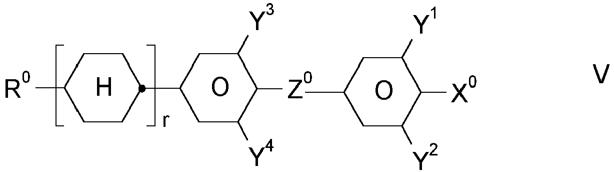 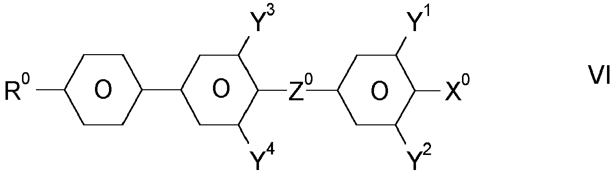 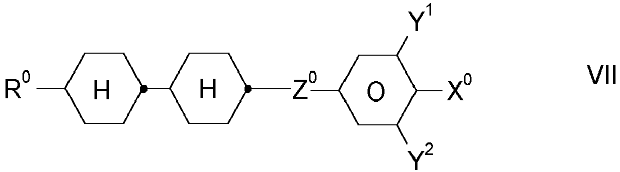 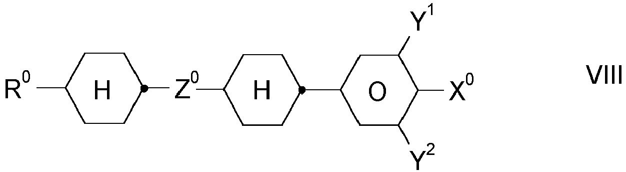 in which R°, X° and Y¹⁻⁴ have the meanings given in Claim 1 and 7,
Z⁰ denotes -C₂H₄-, -(CH₂)₄-, -CH=CH-, -CF=CF-, -C₂F₄-, -CH₂CF₂-,-CF₂CH₂-, -CH₂O-, -OCH₂-, -COO- or -OCF₂-, in formulae V and VI also a single bond, in formulae V and VIII also -CF₂O-,
r denotes 0 or 1, and
s denotes 0 or 1.

9. Liquid-crystalline medium according to one or more of Claims 1 to 8, **characterised in that** it comprises one or more compounds selected from group consisting of the following formulae 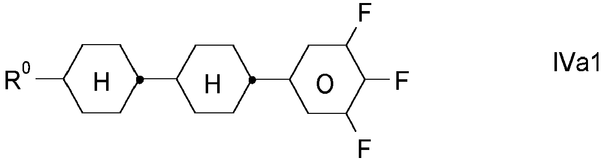 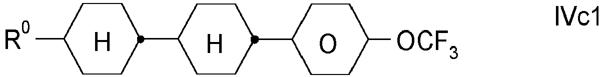 in which R° has the meanings given in Claim 1.

10. Liquid-crystalline medium according to one or more of Claims 1 to 9, **characterised in that** it comprises one or more compounds selected from group consisting of the following formulae 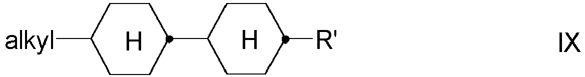 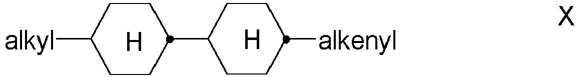 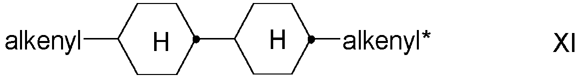 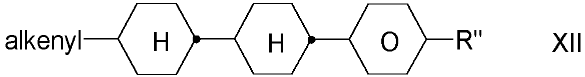 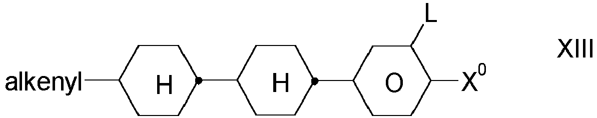 in which X° has one of the meanings indicated in Claim 1, and
L denotes H or F,
"alkyl" denotes C₁₋₆-alkyl,
R' denotes C₁₋₆-alkyl or C₁₋₆-alkoxy,
R" denotes C₁₋₆-alkyl, C₁₋₆-alkoxy or C₂₋₆-alkenyl, and
"alkenyl" and "alkenyl*" each, independently of one another, denote C₂₋₆-alkenyl.

11. Liquid-crystalline medium according to one or more of Claims 1 to 10, **characterised in that** it comprises one or more compounds of the formula XIV 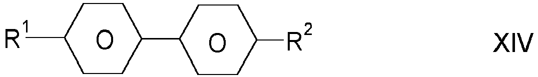 in which R¹ and R² each, independently of one another, denote n-alkyl, alkoxy, oxaalkyl, fluoroalkyl or alkenyl, each having up to 6 C atoms.

12. Liquid-crystalline medium according to one or more of Claims 1 to 11, **characterised in that** it comprises one or more compounds of the formula XVI 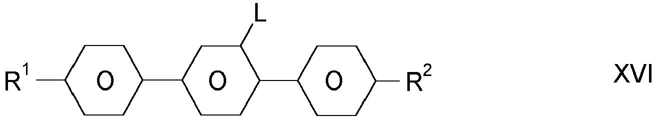 in which L, R¹ and R² have the meanings indicated in Claim 1 and 10.

13. Liquid-crystalline medium according to one or more of Claims 1 to 12, **characterised in that** it comprises one or more compounds selected from the group consisting of the following formulae 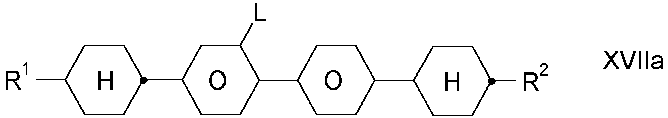 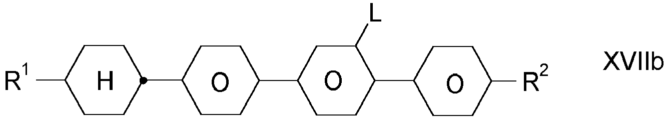 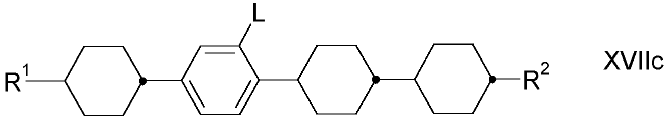 in which L, R¹ and R² have the meanings indicated in Claim 12.

14. Liquid-crystalline medium according to one or more of Claims 1 to 13, **characterised in that** it comprises one or more compounds selected from the group consisting of the following formulae 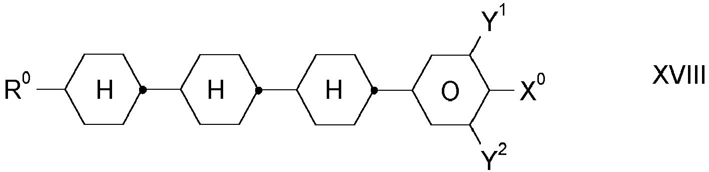 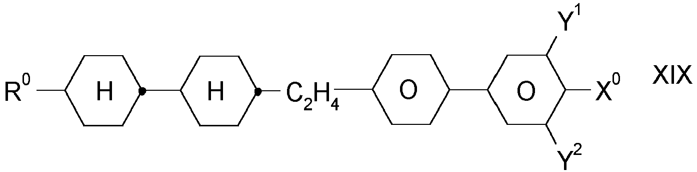 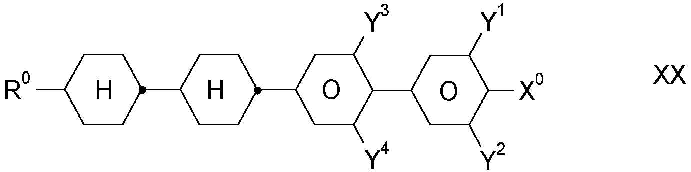 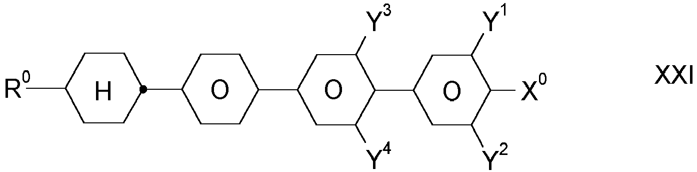 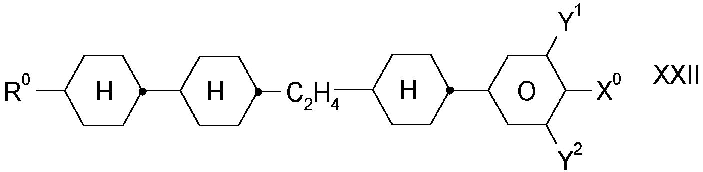 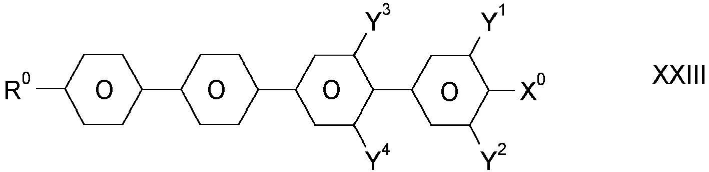 in which R° and X° each, independently of one another, have one of the meanings indicated in Claim 1 and 7.

15. Liquid-crystalline medium according to one or more of Claims 1 to 14, **characterized in that** it comprises one or more compounds selected from the group consisting of the following formulae 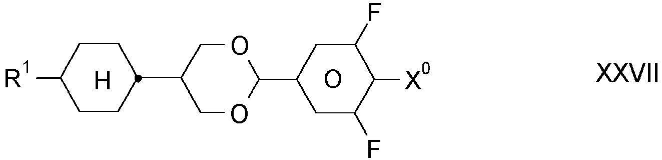 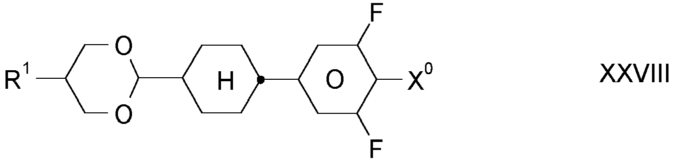 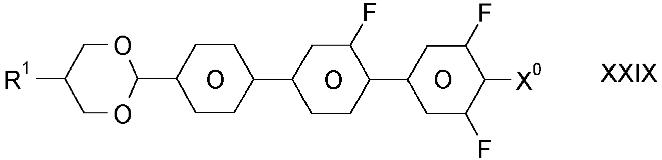 in which R¹ and X⁰ have the meanings indicated in Claim 1.

16. Liquid-crystalline medium according to one or more of Claims 1 to 15, **characterised in that** it comprises one or more compounds of formula XXX 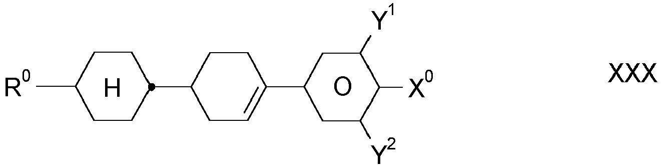 in which R°, X° and Y¹⁻² each, independently of one another, have one of the meanings given in Claim 1 and 7.

17. Liquid-crystalline medium according to one or more of Claims 1 to 16, **characterised in that** it comprises one or more compounds selected from the group consisting of the following formulae 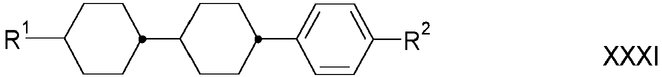 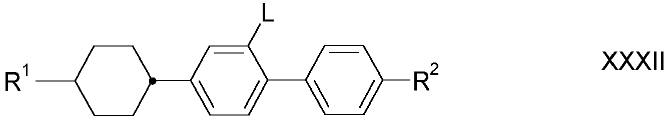 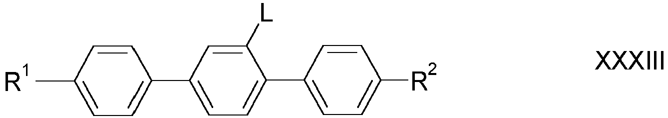 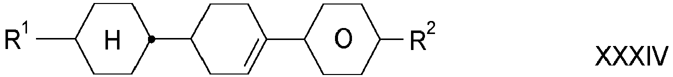 in which L, R¹ and R² have the meanings indicated in Claim 12.

18. Liquid-crystalline medium according to one or more of Claims 1 to 17, **characterised in that** it comprises one or more compounds of formula I, one or more compounds selected from the group consisting of the formulae Y1, Y2 and Y3, one or more compounds of formula B, one or more compounds selected from the group consisting of formulae IX, X and XIV, one or more compounds selected from the group consisting of formulae II, III, IV, VI, XX, XXIII and XXIX, and one or more compounds selected from the group consisting of the formulae XII, XVI, XVIIa, XVIIb, XVIIc, XXXI and XXXIV.

19. Process for the preparation of a liquid-crystalline medium according to one or more of Claims 1 to 18, **characterised in that** one or more compounds of the formula I are mixed with one or more compounds of the formulae Y1, Y2 or Y3, one or more compounds of formula B, and one or more compounds selected from the group consisting of formulae II, III, IV, VI, IX, X, XIV, XII, XVI, XVIIa, XVIIb, XVIIc, XX, XXIII, XXIX, XXXI and XXXIV.

20. Use of a liquid-crystalline medium according to one or more of Claims 1 to 19 for electro-optical purposes.

21. Use according to Claim 20, where the use is in shutter glasses, LC windows, for 3D applications, in TN, PS-TN, STN, TN-TFT, OCB, IPS, PS-IPS, FFS, HB-FFS, PS-HB-FFS, SA-HB-FFS, polymer stabilised SA-HB-FFS, positive VA and positive PS-VA displays.

22. Electro-optical liquid-crystal display containing a liquid-crystalline medium according to one or more of Claims 1 to 19.

23. Electro-optical liquid-crystal display according to Claim 22, **characterized in that** it is a TN, PS-TN, STN, TN-TFT, OCB, IPS, PS-IPS, FFS, HB-FFS, PS-HB-FFS, SA-HB-FFS, polymer stabilised SA-HB-FFS, positive VA or positive PS-VA display.

24. Electro-optical liquid-crystal display according to Claim 23, **characterized in that** it is an FFS, HB-FFS, PS-HB-FFS, IPS or PS-IPS display.

## Patentansprüche

1. Flüssigkristallines Medium, **dadurch gekennzeichnet, dass** es eine positive dielektrische Anisotropie aufweist und eine oder mehrere Verbindungen der Formel I und eine oder mehrere Verbindungen, die ausgewählt sind aus den Formeln Y und B, 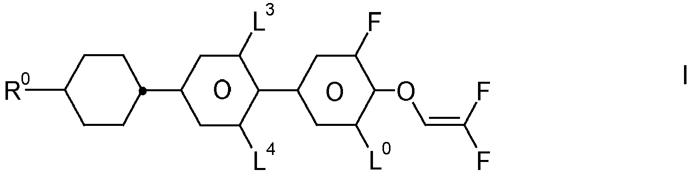 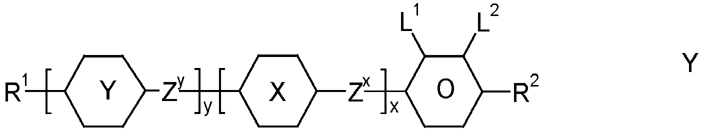 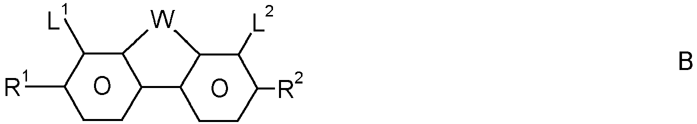 enthält, worin die einzelnen Reste bei jedem Auftreten gleich oder verschieden und jeweils unabhängig voneinander die folgende Bedeutung besitzen: 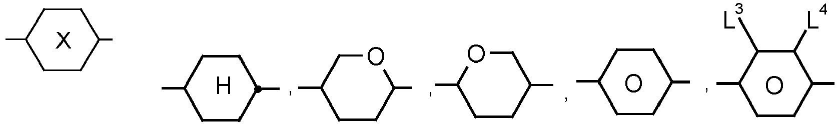 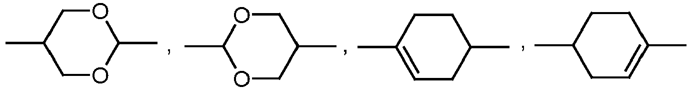 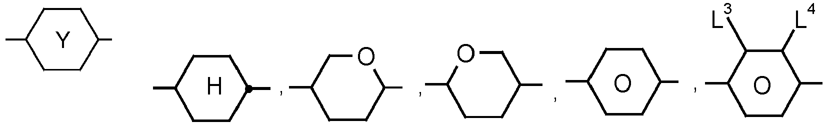 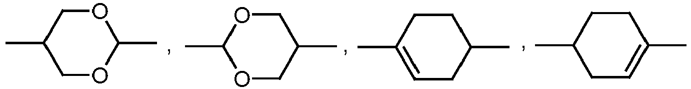
R°, R¹, R² einen geradkettigen, verzweigten oder cyclischen Alkyl- oder Alkoxyrest, der unsubstituiert oder halogeniert ist und 1 bis 15 C-Atome aufweist, wobei in diesen Resten zusätzlich eine oder mehrere CH₂-Gruppen jeweils unabhängig voneinander so durch -C≡C-, -CF₂O-, -CH=CH-, 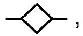 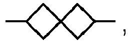 -O-, -CO-O- oder -O-CO- ersetzt sein können, dass O-Atome nicht direkt miteinander verknüpft sind,
Z^{x}, Z^{y} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung, vorzugsweise eine Einfachbindung,
W O oder S,
L⁰ H oder F,
L¹, L² H, F oder Cl, vorzugsweise H oder F, ganz bevorzugt F,
L³, L⁴ H, F oder Cl, vorzugsweise H oder F,
x, y 0, 1 oder 2, wobei x+y ≤3,
bei dem die Verbindungen der Formel Y mindestens einen Substituenten L¹⁻⁴ enthalten, der F oder Cl, vorzugsweise F ist,
bei der das flüssigkristalline Medium eine oder mehrere Verbindungen der Formel B enthält, die ausgewählt sind aus den folgenden Unterformeln 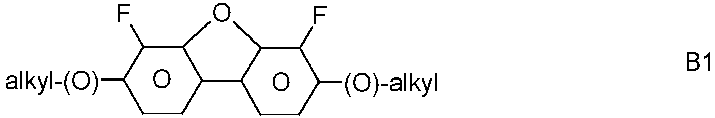 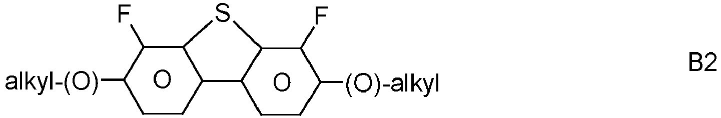
bei denen alkyl einen geradkettigen Alkylrest mit 1-6 C-Atomen bedeutet und (O) ein Sauerstoffatom oder eine Einfachbindung bedeutet.

2. Flüssigkristallines Medium nach Anspruch 1, **dadurch gekennzeichnet, dass** es eine oder mehrere Verbindungen der Formel I enthält, die ausgewählt sind aus Formel I1

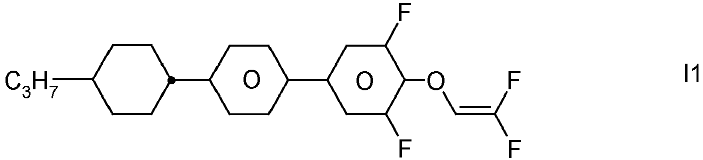

3. Flüssigkristallines Medium nach Anspruch 1 oder 2, **dadurch gekennzeichnet, dass** es eine oder mehrere Verbindungen der Formel Y enthält, die ausgewählt sind aus den folgenden Unterformeln 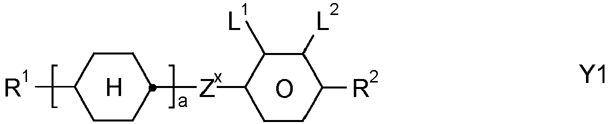 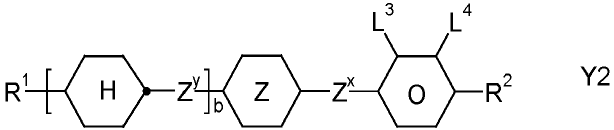 bei denen R¹, R², Z^{x}, Z^{y}, L¹ und L² eine der in Anspruch 1 genannten Bedeutungen besitzen,
a 1 oder 2 bedeutet,
b 0 oder 1 bedeutet, 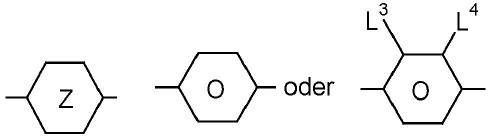 bedeutet,
L³, L⁴ F oder Cl, vorzugsweise F bedeuten.

4. Flüssigkristallines Medium nach einem oder mehreren der Ansprüche 1 bis 3, **dadurch gekennzeichnet, dass** es eine oder mehrere Verbindungen der Formel Y enthält, die ausgewählt sind aus der Formel Y3 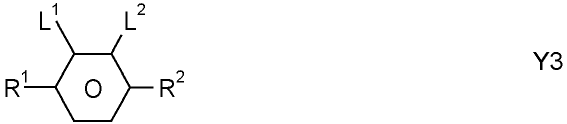 bei der R¹, R², L¹ und L² eine der in Anspruch 1 genannten Bedeutungen besitzen.

5. Flüssigkristallines Medium nach einem oder mehreren der Ansprüche 1 bis 4, **dadurch gekennzeichnet, dass** es eine oder mehrere Verbindungen der Formel Y1 enthält, die ausgewählt sind aus der Formel LY 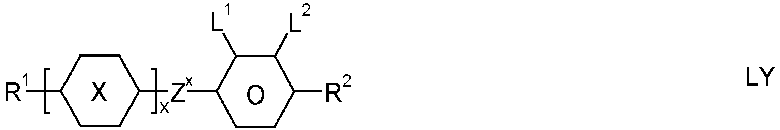 bei der R¹, R², L¹, L², X, x und Z^{x} die in Anspruch 1 genannten Bedeutungen besitzen und bei der mindestens einer der Ringe X Cyclohexenylen ist.

6. Flüssigkristallines Medium nach einem oder mehreren der Ansprüche 1 bis 5, **dadurch gekennzeichnet, dass** es eine oder mehrere Verbindungen der Formel Y enthält, die ausgewählt sind aus der Formel LY4 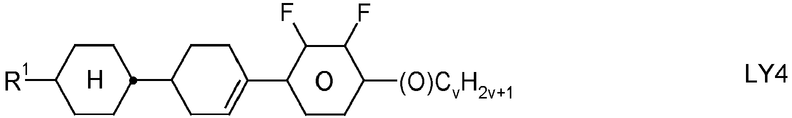 worin R¹ die in Anspruch 1 angegebene Bedeutung besitzt, (O) ein Sauerstoffatom oder eine Einfachbindung bedeutet und v eine ganze Zahl von 1 bis 6 bedeutet.

7. Flüssigkristallines Medium nach einem oder mehreren der Ansprüche 1 bis 6, **dadurch gekennzeichnet, dass** es zusätzlich eine oder mehrere Verbindungen enthält, die ausgewählt sind aus der Gruppe bestehend aus den folgenden Formeln 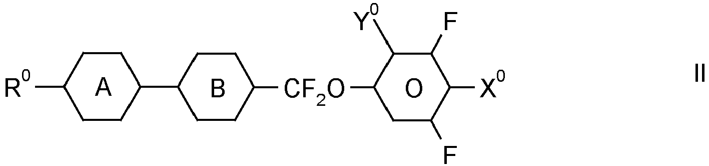 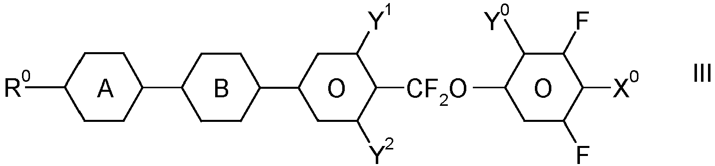 bei der die einzelnen Reste unabhängig voneinander und bei jedem Auftreten gleich oder verschieden die folgenden Bedeutungen besitzen 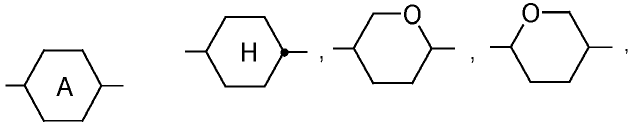 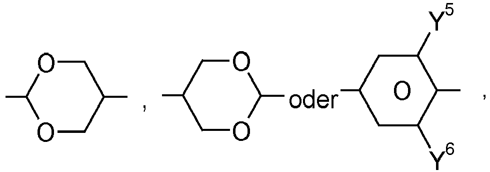 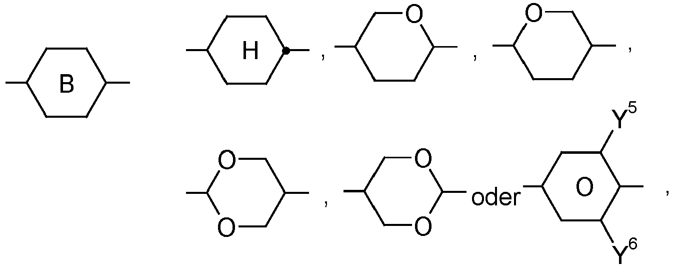
R° eine der in Formel I genannten Bedeutungen oder eine der bevorzugten Bedeutungen wie vor- und nachstehend genannt,
X⁰ F, Cl, CN, SFs, SCN, NCS, einen halogenierten Alkylrest, einen halogenierten Alkenylrest, einen halogenierten Alkoxyrest oder einen halogenierten Alkenyloxyrest mit bis zu 6 C-Atomen, und
L¹⁻⁶ H oder F,
Y⁰ H oder CH₃.

8. Flüssigkristallines Medium nach einem oder mehreren der Ansprüche 1 bis 7, **dadurch gekennzeichnet, dass** es zusätzlich eine oder mehrere Verbindungen enthält, die ausgewählt sind aus der Gruppe bestehend aus den folgenden Formeln 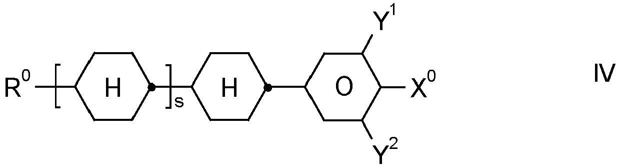 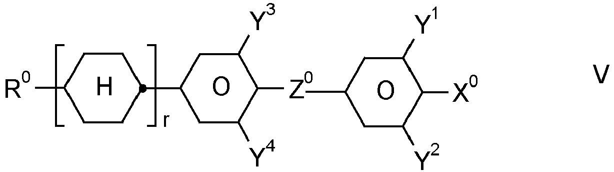 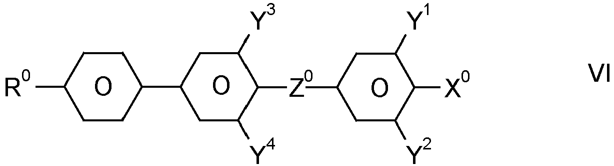 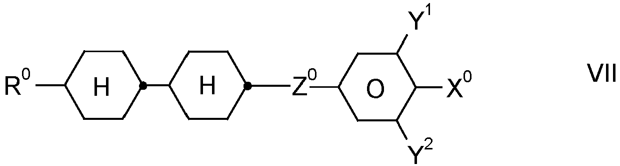 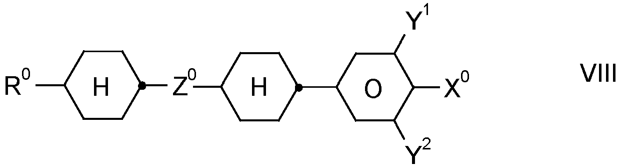 worin R°, X° und Y¹⁻⁴ die in Anspruch 1 und 7 genannten Bedeutungen besitzen,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO- oder -OCF₂-, in den Formeln V und VI auch eine Einfachbindung, in den Formeln V und VIII auch -CF₂O- bedeutet,
r 0 oder 1 bedeutet, und
s 0 oder 1 bedeutet.

9. Flüssigkristallines Medium nach einem oder mehreren der Ansprüche 1 bis 8, **dadurch gekennzeichnet, dass** es eine oder mehrere Verbindungen enthält, die ausgewählt sind aus der Gruppe bestehend aus den folgenden Formeln 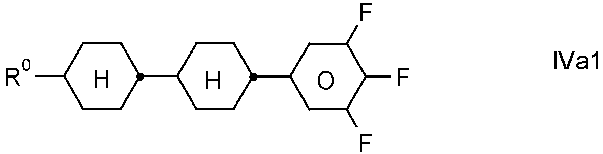 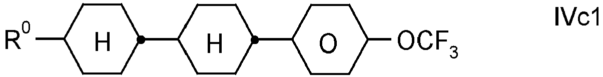 worin R° die in Anspruch 1 genannten Bedeutungen besitzt.

10. Flüssigkristallines Medium nach einem oder mehreren der Ansprüche 1 bis 9, **dadurch gekennzeichnet, dass** es eine oder mehrere Verbindungen enthält, die ausgewählt sind aus der Gruppe bestehend aus den folgenden Formeln 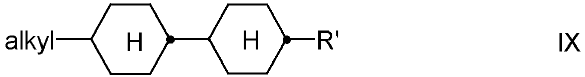 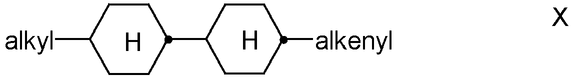 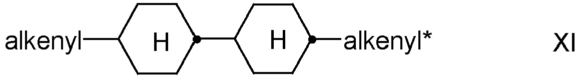 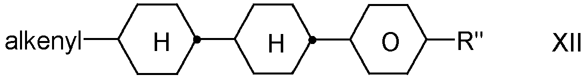 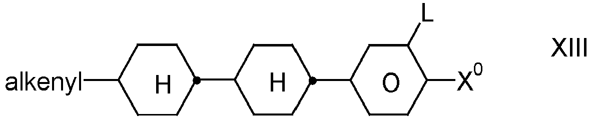 worin X° eine der in Anspruch 1 angegebenen Bedeutungen besitzt, und
L H oder F bedeutet,
"alkyl" C₁₋₆-Alkyl bedeutet,
R' C₁₋₆-Alkyl oder C₁₋₆-Alkoxy bedeutet,
R" C₁₋₆-Alkyl, C₁₋₆-Alkoxy oder C₂₋₆-Alkenyl bedeutet, und
"alkenyl" und "alkenyl*" jeweils unabhängig voneinander C₂₋₆-Alkenyl bedeuten.

11. Flüssigkristallines Medium nach einem oder mehreren der Ansprüche 1 bis 10, **dadurch gekennzeichnet, dass** es eine oder mehrere Verbindungen der Formel XIV 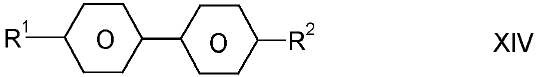 enthält, worin R¹ und R² jeweils unabhängig voneinander n-Alkyl, Alkoxy, Oxaalkyl, Fluoralkyl oder Alkenyl bedeuten, jeweils mit bis zu 6 C-Atomen.

12. Flüssigkristallines Medium nach einem oder mehreren der Ansprüche 1 bis 11, **dadurch gekennzeichnet, dass** es eine oder mehrere Verbindungen der Formel XVI 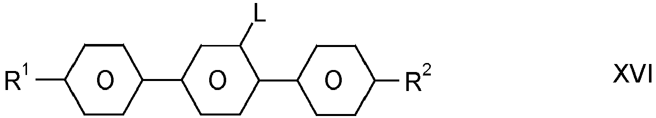 enthält, worin L, R¹ und R² die in Anspruch 1 und 10 angegebenen Bedeutungen besitzen.

13. Flüssigkristallines Medium nach einem oder mehreren der Ansprüche 1 bis 12, **dadurch gekennzeichnet, dass** es eine oder mehrere Verbindungen enthält, die ausgewählt sind aus der Gruppe bestehend aus den folgenden Formeln 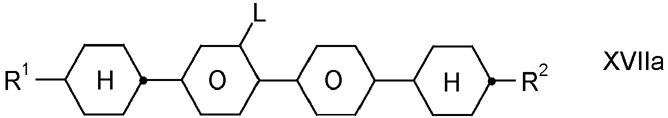 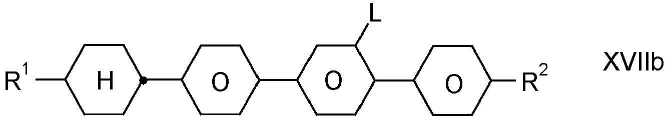 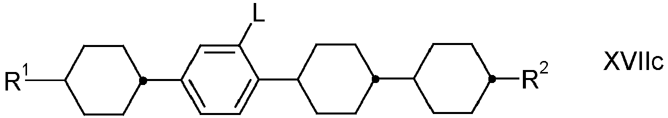 worin L, R¹ und R² die in Anspruch 12 angegebenen Bedeutungen besitzen.

14. Flüssigkristallines Medium nach einem oder mehreren der Ansprüche 1 bis 13, **dadurch gekennzeichnet, dass** es eine oder mehrere Verbindungen enthält, die ausgewählt sind aus der Gruppe bestehend aus den folgenden Formeln 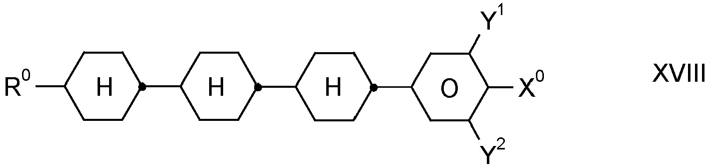 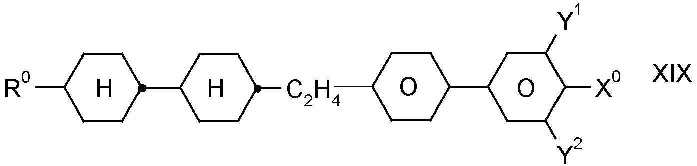 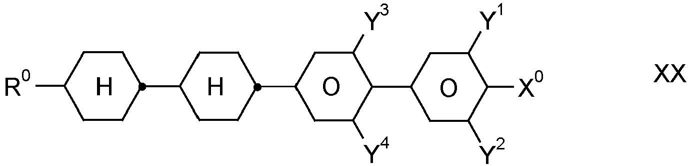 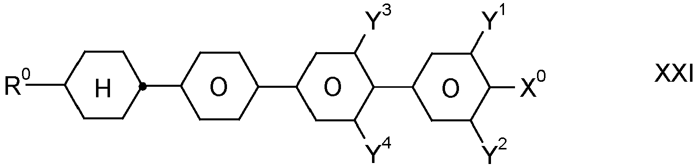 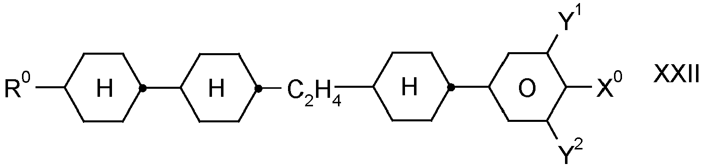 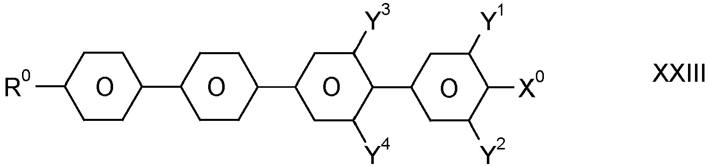 worin R° und X° jeweils unabhängig voneinander eine der in Anspruch 1 und 7 angegebenen Bedeutungen besitzen.

15. Flüssigkristallines Medium nach einem oder mehreren der Ansprüche 1 bis 14, **dadurch gekennzeichnet, dass** es eine oder mehrere Verbindungen enthält, die ausgewählt sind aus der Gruppe bestehend aus den folgenden Formeln 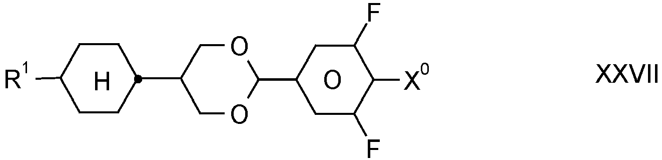 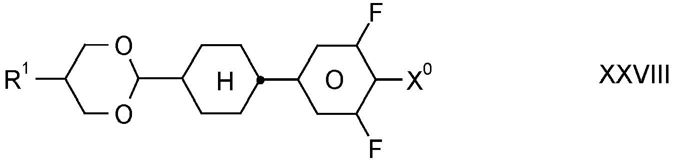 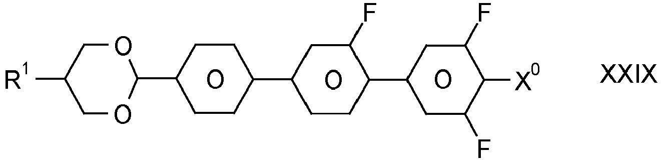 worin R¹ und X⁰ die in Anspruch 1 angegebenen Bedeutungen besitzen.

16. Flüssigkristallines Medium nach einem oder mehreren der Ansprüche 1 bis 15, **dadurch gekennzeichnet, dass** es eine oder mehrere Verbindungen der Formel XXX 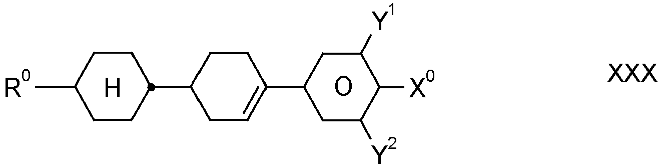 enthält, worin R⁰, X⁰ und Y¹⁻² jeweils unabhängig voneinander eine der in Anspruch 1 und 7 genannten Bedeutungen besitzen.

17. Flüssigkristallines Medium nach einem oder mehreren der Ansprüche 1 bis 16, **dadurch gekennzeichnet, dass** es eine oder mehrere Verbindungen enthält, die ausgewählt sind aus der Gruppe bestehend aus den folgenden Formeln 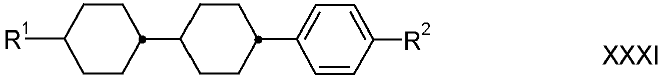 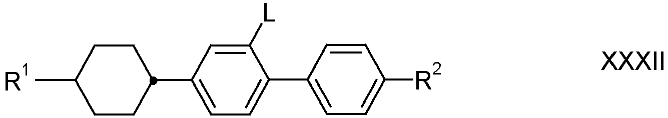 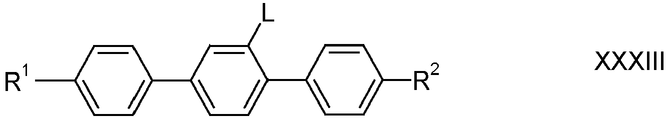 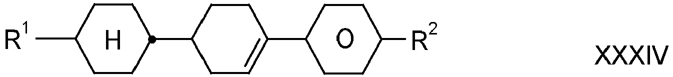 worin L, R¹ und R² die in Anspruch 12 angegebenen Bedeutungen besitzen.

18. Flüssigkristallines Medium nach einem oder mehreren der Ansprüche 1 bis 17, **dadurch gekennzeichnet, dass** es eine oder mehrere Verbindungen der Formel I, eine oder mehrere Verbindungen, die ausgewählt sind aus der Gruppe bestehend aus den Formeln Y1, Y2 und Y3, eine oder mehrere Verbindungen der Formel B, eine oder mehrere Verbindungen, die ausgewählt sind aus der Gruppe bestehend aus den Formeln IX, X und XIV, eine oder mehrere Verbindungen, die ausgewählt sind aus der Gruppe bestehend aus den Formeln II, III, IV, VI, XX, XXIII und XXIX, und eine oder mehrere Verbindungen, die ausgewählt sind aus der Gruppe bestehend aus den Formeln XII, XVI, XVIIa, XVIIb, XVIIc, XXXI und XXXIV, enthält.

19. Verfahren zur Herstellung eines flüssigkristallinen Mediums nach einem oder mehreren der Ansprüche 1 bis 18, **dadurch gekennzeichnet, dass** man eine oder mehrere Verbindungen der Formel I mit einer oder mehreren Verbindungen der Formeln Y1, Y2 oder Y3, einer oder mehreren Verbindungen der Formel B und einer oder mehreren Verbindungen, die ausgewählt sind aus der Gruppe bestehend aus den Formeln II, III, IV, VI, IX, X, XIV, XII, XVI, XVIIa, XVIIb, XVIIc, XX, XXIII, XXIX, XXXI und XXXIV, mischt.

20. Verwendung eines flüssigkristallinen Mediums nach einem oder mehreren der Ansprüche 1 bis 19 für elektrooptische Zwecke.

21. Verwendung nach Anspruch 20, wobei die Verwendung in Shutter-Brillen, FK-Fenstern, für 3D-Anwendungen, in TN-, PS-TN-, STN-, TN-TFT-, OCB-, IPS-, PS-IPS-, FFS-, HB-FFS-, PS-HB-FFS-, SA-HB-FFS-, polymerstabilisierten SA-HB-FFS-, positiven VA- und positiven PS-VA-Anzeigen erfolgt.

22. Elektrooptische Flüssigkristallanzeige enthaltend ein flüssigkristallines Medium nach einem oder mehreren der Ansprüche 1 bis 19.

23. Elektrooptische Flüssigkristallanzeige nach Anspruch 22, **dadurch gekennzeichnet, dass** es sich um eine TN-, PS-TN-, STN-, TN-TFT-, OCB-, IPS-, PS-IPS-, FFS-, HB-FFS-, PS-HB-FFS-, SA-HB-FFS-, polymerstabilisierte SA-HB-FFS-, positive VA- oder positive PS-VA-Anzeige handelt.

24. Elektrooptische Flüssigkristallanzeige nach Anspruch 23, **dadurch gekennzeichnet, dass** es sich um eine FFS-, HB-FFS-, PS-HB-FFS-, IPS- oder PS-IPS-Anzeige handelt.

## Revendications

1. Milieu cristallin liquide, **caractérisé en ce qu'**il présente une anisotropie diélectrique positive et comprend un ou plusieurs composés de formule I et un ou plusieurs composés choisis parmi les formules Y et B 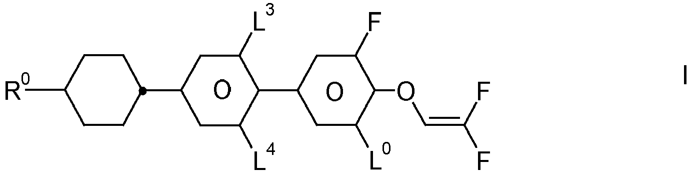 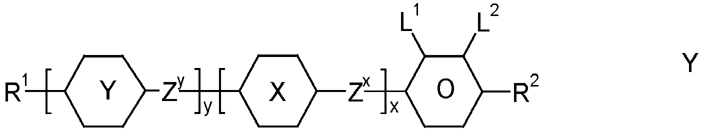 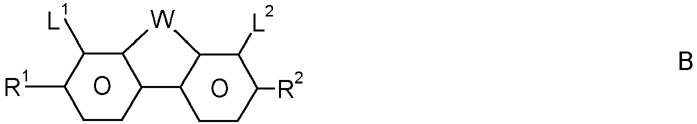 dans lesquelles les radicaux individuels, à chaque occurrence de manière identique ou différente, et chacun, indépendamment les uns des autres, revêtent la signification suivante : 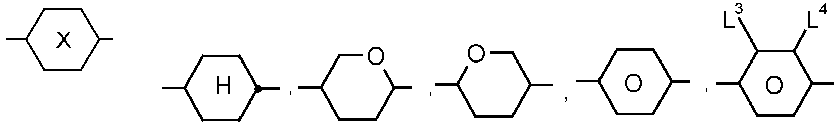 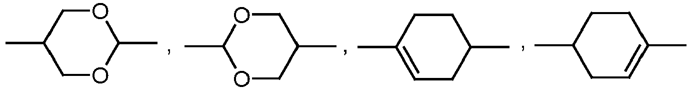 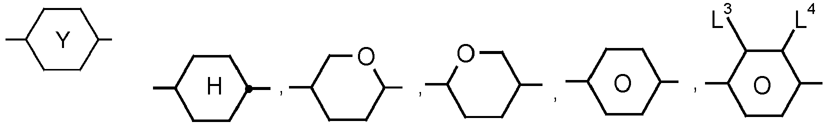 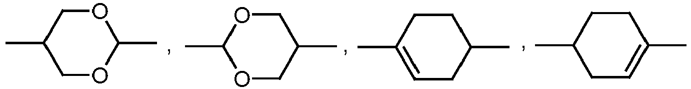
R⁰, R¹, R² un radical alkyle ou alcoxy à chaîne linéaire, ramifiée ou cyclique qui est non substitué, ou halogéné, et possède de 1 à 15 atomes de C, où, de plus, un ou plusieurs groupements CH₂ dans ces radicaux peuvent chacun être remplacés, indépendamment les uns des autres, par -C≡C-, -CF₂O-, -CH=CH-, 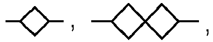 -O-, -CO-O- ou -O-CO- de telle sorte que les atomes de O ne soient pas liés directement les uns aux autres,
Z^{x}, Z^{y} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, ou une liaison simple, préférablement une liaison simple,
W O ou S,
L⁰ H ou F,
L¹, L² H, F ou Cl, préférablement H ou F, très préférablement F,
L³, L⁴ H, F ou Cl, préférablement H ou F,
x, y 0, 1 ou 2, avec x+y ≤3,
où les composés de formule Y contiennent au moins un substituant L¹⁻⁴ qui est F ou Cl, préférablement F,
le milieu cristallin liquide comprenant un ou plusieurs composés de formule B choisis parmi les sous-formules suivantes 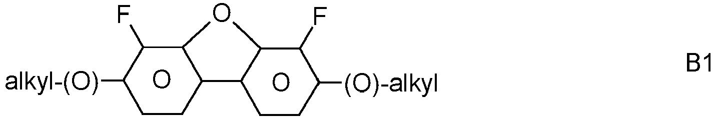 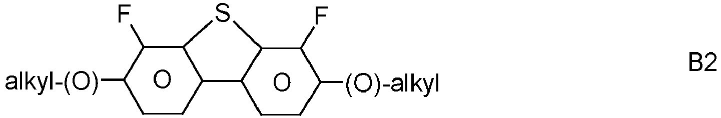
dans lesquelles « alkyl » désigne un radical alkyle à chaîne linéaire ayant 1-6 atomes de C, et (O) désigne un atome d'oxygène ou une liaison simple.

2. Milieu cristallin liquide selon la revendication 1, **caractérisé en ce qu'**il comprend un ou plusieurs composés de formule I choisis parmi la formule I1

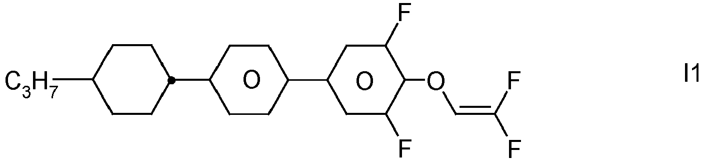

3. Milieu cristallin liquide selon la revendication 1 ou 2, **caractérisé en ce qu'**il comprend un ou plusieurs composés de formule Y choisis parmi les sous-formules suivantes 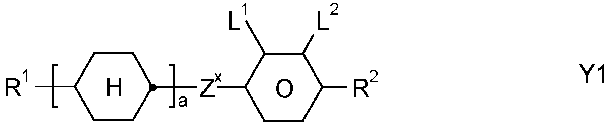 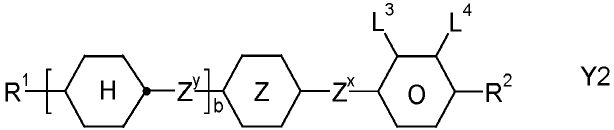 dans lesquelles R¹, R², Z^{x}, Z^{y}, L¹ et L² revêtent l'une des significations données selon la revendication 1,
a désigne 1 ou 2,
b désigne 0 ou 1, 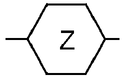 désigne 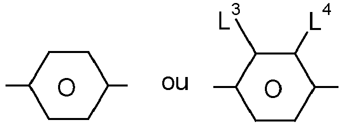
L³, L⁴ désignent F ou Cl, préférablement F.

4. Milieu cristallin liquide selon l'une ou plusieurs parmi les revendications 1 à 3, **caractérisé en ce qu'**il comprend un ou plusieurs composés de formule Y choisis parmi la formule Y3 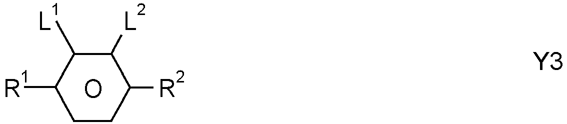 dans laquelle R¹, R², L¹ et L² revêtent l'une des significations données selon la revendication 1.

5. Milieu cristallin liquide selon l'une ou plusieurs parmi les revendications 1 à 4, **caractérisé en ce qu'**il comprend un ou plusieurs composés de formule Y1 choisis parmi la formule LY 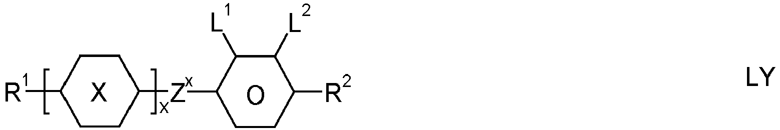 dans laquelle R¹, R², L¹, L², Y, y et Z^{x} revêtent les significations données selon la revendication 1, et où au moins l'un des cycles X est cyclohexénylène.

6. Milieu cristallin liquide selon l'une ou plusieurs parmi les revendications 1 à 5, **caractérisé en ce qu'**il comprend un ou plusieurs composés de formule Y choisis parmi la formule LY4 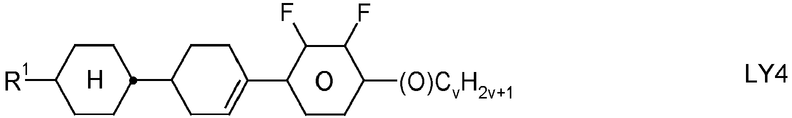 dans laquelle R¹ revêt la signification indiquée selon la revendication 1, (O) désigne un atome d'oxygène ou une liaison simple, et v désigne un nombre entier allant de 1 à 6.

7. Milieu cristallin liquide selon l'une ou plusieurs parmi les revendications 1 à 6, **caractérisé en ce qu'**il comprend en outre un ou plusieurs composés choisis dans le groupe constitué par les formules suivantes 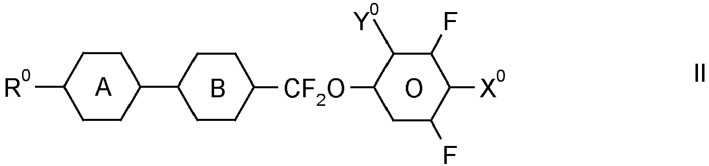 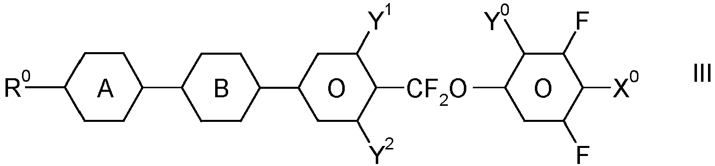 dans lesquelles les radicaux individuels, indépendamment les uns des autres et à chaque occurrence de manière identique ou différente, revêtent les significations suivantes 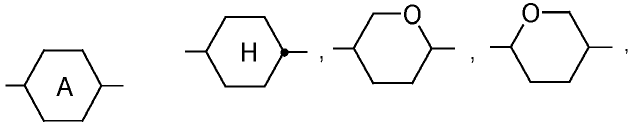 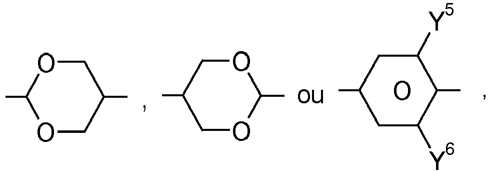 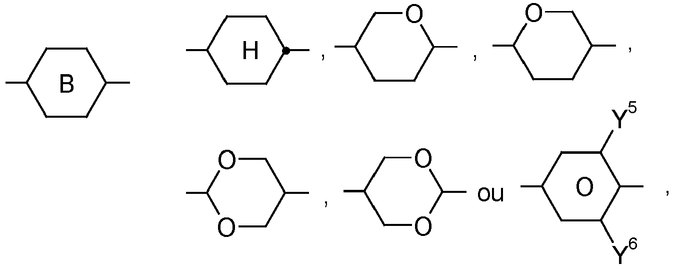
R⁰ l'une des significations données pour la formule I ou l'une des significations préférées telles que données ci-dessus et ci-après,
X⁰ F, Cl, CN, SFs, SCN, NCS, un radical alkyle halogéné, un radical alcényle halogéné, un radical alcoxy halogéné ou un radical alcényloxy halogéné ayant jusqu'à 6 atomes de C, et
Y¹⁻⁶ H ou F,
Y⁰ H ou CH₃.

8. Milieu cristallin liquide selon l'une ou plusieurs parmi les revendications 1 à 7, **caractérisé en ce qu'**il comprend en outre un ou plusieurs composés choisis dans le groupe constitué par les formules suivantes 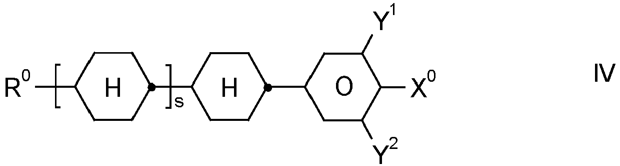 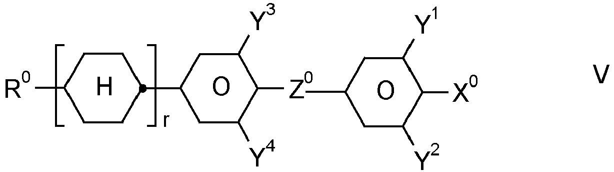 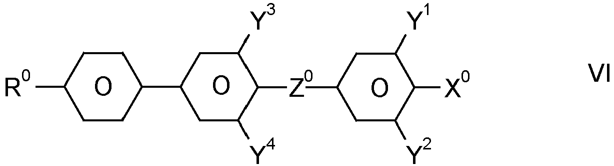 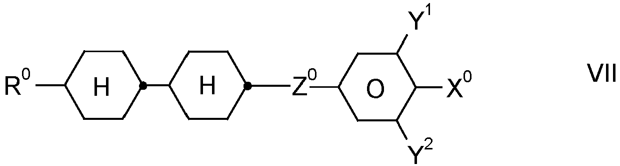 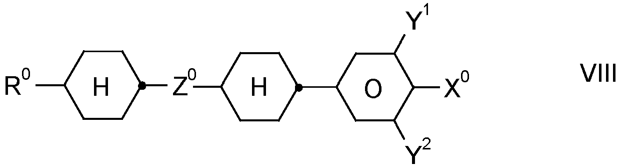 dans lesquelles R⁰, X⁰ et Y¹⁻⁴ revêtent les significations données selon les revendications 1 et 7,
Z⁰ désigne -C₂H₄-, -(CH₂)₄-, -CH=CH-, -CF=CF-, -C₂F₄-, -CH₂CF₂-,-CF₂CH₂-, -CH₂O-, -OCH₂-, -COO- ou -OCF₂-, dans les formules V et VI de même une liaison simple, dans les formules V et VIII de même -CF₂O-,
r désigne 0 ou 1, et
s désigne 0 ou 1.

9. Milieu cristallin liquide selon l'une ou plusieurs parmi les revendications 1 à 8, **caractérisé en ce qu'**il comprend un ou plusieurs composés choisis dans le groupe constitué par les formules suivantes 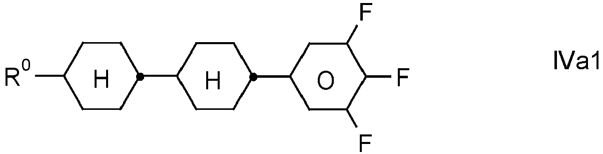 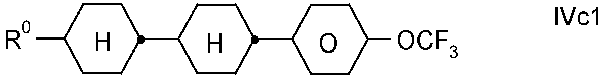 dans lesquelles R⁰ revêt les significations données selon la revendication 1.

10. Milieu cristallin liquide selon l'une ou plusieurs parmi les revendications 1 à 9, **caractérisé en ce qu'**il comprend un ou plusieurs composés choisis dans le groupe constitué par les formules suivantes 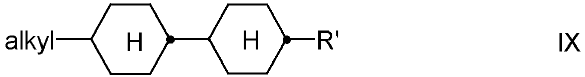 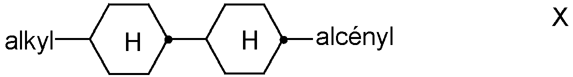 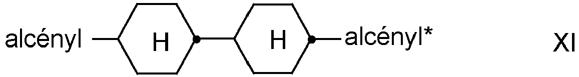 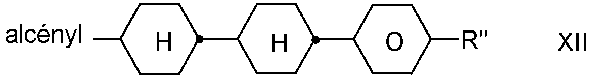 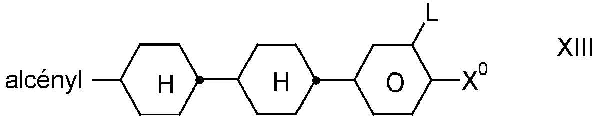 dans lesquelles X⁰ revêt l'une des significations indiquées selon la revendication 1, et
L désigne H ou F,
« alkyl » désigne C₁₋₆-alkyle,
R' désigne C₁₋₆-alkyle ou C₁₋₆-alcoxy,
R" désigne C₁₋₆-alkyle, C₁₋₆-alcoxy ou C₂₋₆-alcényle, et
« alcényl » et « alcényl* » chacun, indépendamment l'un de l'autre, désignent C₂₋₆-alcényle.

11. Milieu cristallin liquide selon l'une ou plusieurs parmi les revendications 1 à 10, **caractérisé en ce qu'**il comprend un ou plusieurs composés de formule XIV 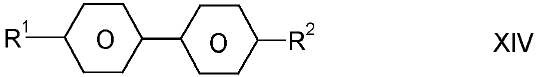 dans laquelle R¹ et R² chacun, indépendamment l'un de l'autre, désignent n-alkyle, alcoxy, oxaalkyle, fluoroalkyle ou alcényle, chacun ayant jusqu'à 6 atomes de C.

12. Milieu cristallin liquide selon l'une ou plusieurs parmi les revendications 1 à 11, **caractérisé en ce qu'**il comprend un ou plusieurs composés de formule XVI 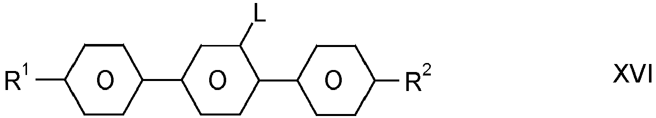 dans laquelle L, R¹ et R² revêtent les significations indiquées selon les revendications 1 et 10.

13. Milieu cristallin liquide selon l'une ou plusieurs parmi les revendications 1 à 12, **caractérisé en ce qu'**il comprend un ou plusieurs composés choisis dans le groupe constitué par les formules suivantes 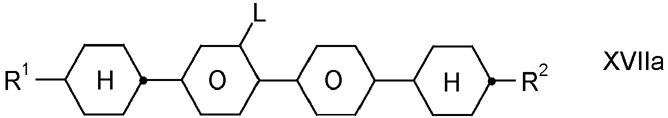 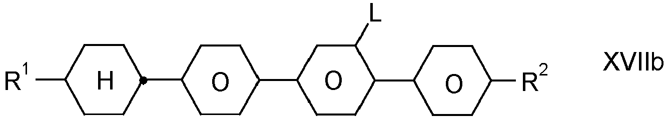 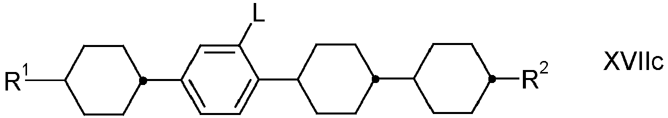 dans lesquelles L, R¹ et R² revêtent les significations indiquées selon la revendication 12.

14. Milieu cristallin liquide selon l'une ou plusieurs parmi les revendications 1 à 13, **caractérisé en ce qu'**il comprend un ou plusieurs composés choisis dans le groupe constitué par les formules suivantes 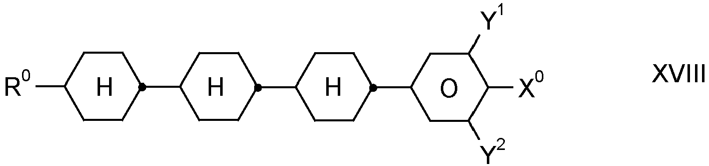 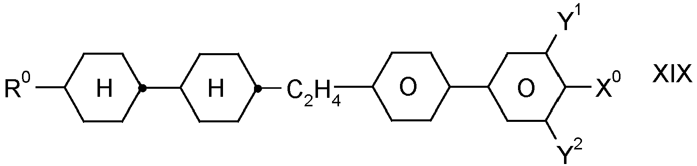 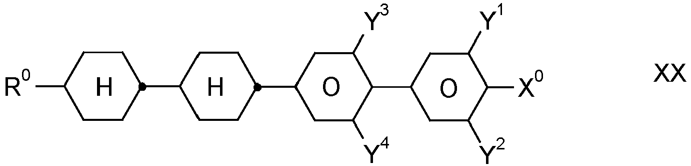 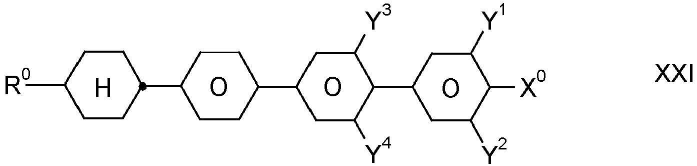 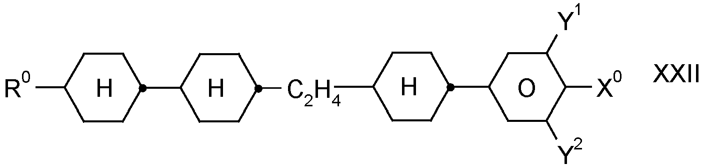 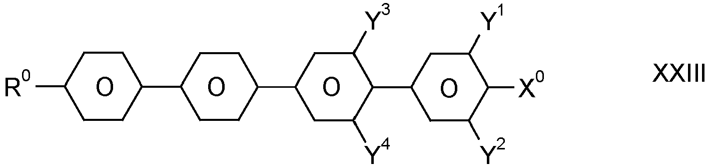 dans lesquelles R⁰ et X⁰ chacun, indépendamment l'un de l'autre, revêtent l'une des significations indiquées selon les revendications 1 et 7.

15. Milieu cristallin liquide selon l'une ou plusieurs parmi les revendications 1 à 14, **caractérisé en ce qu'**il comprend un ou plusieurs composés choisis dans le groupe constitué par les formules suivantes 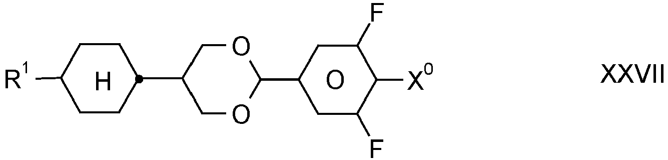 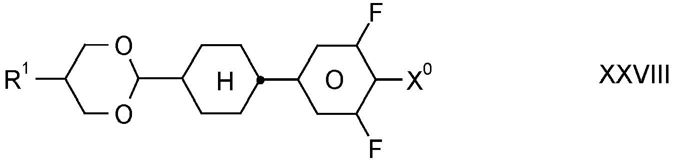 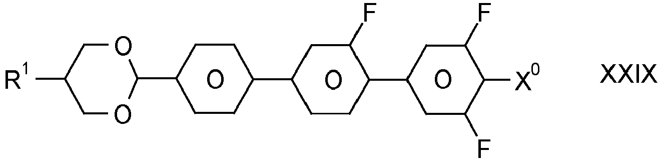 dans lesquelles R¹ et X⁰ revêtent les significations indiquées selon la revendication 1.

16. Milieu cristallin liquide selon l'une ou plusieurs parmi les revendications 1 à 15, **caractérisé en ce qu'**il comprend un ou plusieurs composés de formule XXX 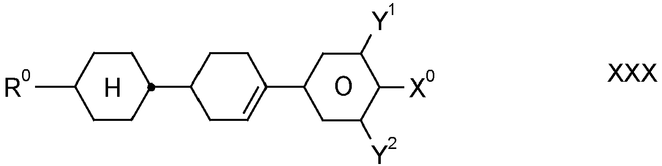 dans laquelle R⁰, X⁰ et Y¹⁻² chacun, indépendamment les uns des autres, revêtent l'une des significations données selon les revendications 1 et 7.

17. Milieu cristallin liquide selon l'une ou plusieurs parmi les revendications 1 à 16, **caractérisé en ce qu'**il comprend un ou plusieurs composés choisis dans le groupe constitué par les formules suivantes 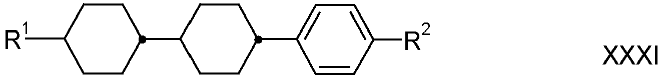 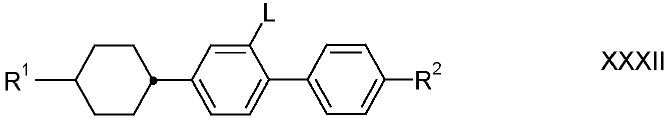 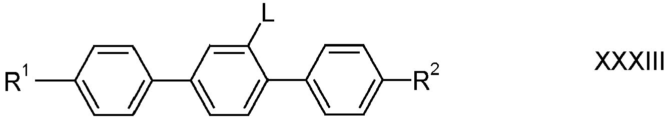 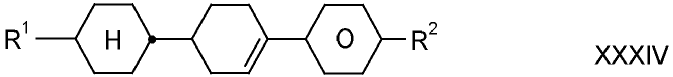 dans lesquelles L, R¹ et R² revêtent les significations indiquées selon la revendication 12.

18. Milieu cristallin liquide selon l'une ou plusieurs parmi les revendications 1 à 17, **caractérisé en ce qu'**il comprend un ou plusieurs composés de formule I, un ou plusieurs composés choisis dans le groupe constitué par les formules Y1, Y2 et Y3, un ou plusieurs composés de formule B, un ou plusieurs composés choisis dans le groupe constitué par les formules IX, X et XIV, un ou plusieurs composés choisis dans le groupe constitué par les formules II, III, IV, VI, XX, XXIII et XXIX, et un ou plusieurs composés choisis dans le groupe constitué par les formules XII, XVI, XVIIa, XVIIb, XVIIc, XXXI et XXXIV.

19. Procédé de préparation d'un milieu cristallin liquide selon l'une ou plusieurs parmi les revendications 1 à 18, **caractérisé en ce qu'**un ou plusieurs composés de formule I sont mélangés avec un ou plusieurs composés de formules Y1, Y2 ou Y3, un ou plusieurs composés de formule B, et un ou plusieurs composés choisis dans le groupe constitué par les formules II, III, IV, VI, IX, X, XIV, XII, XVI, XVIIa, XVIIb, XVIIc, XX, XXIII, XXIX, XXXI et XXXIV.

20. Utilisation d'un milieu cristallin liquide selon l'une ou plusieurs parmi les revendications 1 à 19, à des fins électro-optiques.

21. Utilisation selon la revendication 20, l'utilisation étant du domaine des verres à obturateur, des fenêtres LC, pour des applications 3D, dans des affichages TN, PS-TN, STN, TN-TFT, OCB, IPS, PS-IPS, FFS, HB-FFS, PS-HB-FFS, SA-HB-FFS, un affichage SA-HB-FFS à stabilisation polymère, VA positif et PS-VA positif.

22. Affichage à cristaux liquides électro-optique, contenant un milieu cristallin liquide selon l'une ou plusieurs parmi les revendications 1 à 19.

23. Affichage à cristaux liquides électro-optique selon la revendication 22, **caractérisé en ce qu'**il s'agit d'un affichage TN, PS-TN, STN, TN-TFT, OCB, IPS, PS-IPS, FFS, HB-FFS, PS-HB-FFS, SA-HB-FFS, un affichage SA-HB-FFS à stabilisation polymère, VA positif ou PS-VA positif.

24. Affichage à cristaux liquides électro-optique selon la revendication 23, **caractérisé en ce qu'**il s'agit d'un affichage FFS, HB-FFS, PS-HB-FFS, IPS ou PS-IPS.
